(19) **Europäisches Patentamt / European Patent Office / Office européen des brevets**

(11) **EP 4 773 708 A1**

(12) **EUROPEAN PATENT APPLICATION**
published in accordance with Art. 153(4) EPC

(43) Date of publication:
**08.07.2026  Bulletin 2026/28**

(21) Application number: **24859463.2**

(22) Date of filing: **14.08.2024**

(51) International Patent Classification (IPC):
**H04W 72/563** (2023.01)    **H04W 28/16** (2009.01)

(52) Cooperative Patent Classification (CPC):
**H04W 28/16; H04W 72/563**

(86) International application number:
**PCT/JP2024/028960**

(87) International publication number:
**WO 2025/047427 (06.03.2025 Gazette 2025/10)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **30.08.2023  JP 2023139904**

(71) Applicant: **Sony Group Corporation**
**Tokyo 108-0075 (JP)**

(72) Inventors:
- **GOTO, Jungo**
  **Tokyo 108-0075 (JP)**
- **YASUMORI, Ryo**
  **Tokyo 108-0075 (JP)**
- **SHINDO, Masato**
  **Tokyo 108-0075 (JP)**

- **TOYODA, Naoyuki**
  **Tokyo 108-0075 (JP)**
- **TSURUMI, Shunsuke**
  **Tokyo 108-0075 (JP)**
- **KOSAKA, Yoshihiro**
  **Tokyo 108-0075 (JP)**
- **SHIINO, Hiroyuki**
  **Tokyo 108-0075 (JP)**
- **SAKAKI, Kazunori**
  **Tokyo 108-0075 (JP)**
- **KIHARA, Yuya**
  **Tokyo 108-0075 (JP)**
- **SAKURAGI, Ryoichi**
  **Tokyo 108-0075 (JP)**

(74) Representative: **2SPL Patentanwälte PartG mbB**
**Landaubogen 3a**
**81373 München (DE)**

(54) **INFORMATION PROCESSING DEVICE, IMAGING DEVICE, INFORMATION PROCESSING METHOD, AND COMMUNICATION METHOD**

(57)    An information processing apparatus includes a first transmission section configured to transmit first control information for designating one or more imaging apparatuses among two or more imaging apparatuses as an imaging apparatus related to predetermined processing, and a second transmission section configured to transmit, to a network apparatus configured to perform processing related to allocation of a radio resource, second control information for preferentially allocating the radio resource to the imaging apparatus related to the designation or a radio communication terminal connected to the imaging apparatus related to the designation.

Fig.5

## Description

Technical Field

The present disclosure relates to an information processing apparatus, an imaging apparatus, an information processing method, and a communication method.

Background Art

There is an increasing demand for wireless transmission of captured data. For example, in recent years, there has been an increasing demand for transmission of a video captured by an imaging apparatus (hereinafter also referred to as a camera) using a cellular network such as 5G.

Citation List

Patent Literature

PTL 1: WO 2021/193189

Summary

Technical Problem

For an information processing apparatus (for example, an apparatus for broadcasting/distribution) to stably process a video captured by a camera, captured data needs to be stably wirelessly transmitted from the camera. However, stable wireless transmission of the captured data is difficult in a case where known technologies remain unimproved. For example, in a case where a plurality of cameras are located in one cell formed by a base station, stable wireless transmission may fail due to a shortage of radio resources.

Thus, the present disclosure proposes an information processing apparatus, an imaging apparatus, an information processing method, and a communication method that may realize stable wireless transmission of captured data.

Note that the above-described problem or object is merely one of a plurality of problems or objectives that can be solved or achieved by a plurality of embodiments disclosed in the present specification.

Solution to Problem

In order to solve the above-described problem, an information processing apparatus according to an aspect of the present disclosure includes a first transmission section configured to transmit first control information for designating one or more imaging apparatuses among two or more imaging apparatuses as an imaging apparatus related to predetermined processing, and a second transmission section configured to transmit, to a network apparatus configured to perform processing related to allocation of a radio resource, second control information for preferentially allocating the radio resource to the imaging apparatus related to the designation or a radio communication terminal connected to the imaging apparatus related to the designation.

Brief Description of Drawings

[Fig. 1] Fig. 1 is a diagram for describing problems of the present embodiment.
[Fig. 2] Fig. 2 is a diagram for describing the problems of the present embodiment.
[Fig. 3] Fig. 3 is a diagram for describing the problems of the present embodiment.
[Fig. 4] Fig. 4 is a diagram for describing a tally signal.
[Fig. 5] Fig. 5 is a diagram for describing an operation of an image capturing system according to the present embodiment.
[Fig. 6] Fig. 6 is a diagram illustrating a configuration of the image capturing system according to the present embodiment.
[Fig. 7] Fig. 7 is a diagram illustrating a configuration example of an information processing apparatus according to an embodiment of the present disclosure.

[Fig. 8] Fig. 8 is a diagram illustrating a configuration of a management apparatus according to the present embodiment.

[Fig. 9] Fig. 9 is a diagram illustrating a configuration of a base station according to the present embodiment.

[Fig. 10] Fig. 10 is a diagram illustrating a configuration of a terminal apparatus according to the present embodiment.

[Fig. 11] Fig. 11 is a diagram illustrating a configuration example of an imaging apparatus according to an embodiment of the present disclosure.

[Fig. 12] Fig. 12 is a diagram illustrating an example of a network architecture of 5G.

[Fig. 13] Fig. 13 is a diagram illustrating an example of a RAN architecture applied to an image capturing system 1.

[Fig. 14] Fig. 14 is a diagram illustrating another example of the RAN architecture applied to the image capturing system 1.

[Fig. 15] Fig. 15 is a diagram illustrating a configuration of an image capturing system 1 according to Configuration Example 1.

[Fig. 16] Fig. 16 is a diagram illustrating a configuration of the image capturing system 1 according to Configuration Example 2.

[Fig. 17] Fig. 17 is a diagram illustrating a configuration of the image capturing system 1 according to Configuration Example 3.

[Fig. 18] Fig. 18 is a diagram illustrating a configuration of the image capturing system 1 according to Configuration Example 4.

[Fig. 19] Fig. 19 is a diagram illustrating a configuration of the image capturing system 1 according to Configuration Example 5.

[Fig. 20] Fig. 20 is a diagram for describing an operation of the image capturing system 1 according to Embodiment 1.

[Fig. 21] Fig. 21 is a diagram illustrating an example of association information for associating first identification information with second identification information.

[Fig. 22] Fig. 22 is a diagram illustrating a state in which a network apparatus preferentially allocates a radio resource to one of two imaging apparatuses.

[Fig. 23] Fig. 23 is a diagram for describing radio resource allocation control.

[Fig. 24] Fig. 24 is a diagram for describing an operation of the image capturing system 1 according to Embodiment 2.

[Fig. 25] Fig. 25 is a diagram for describing an operation of the image capturing system 1 according to Embodiment 2.

[Fig. 26] Fig. 26 is a sequence diagram illustrating an example of camera connection processing.

[Fig. 27] Fig. 27 is a sequence diagram illustrating an example of camera switching processing.

[Fig. 28] Fig. 28 is a sequence diagram illustrating another example of the camera switching processing.

[Fig. 29] Fig. 29 is a sequence diagram illustrating yet another example of the camera switching processing.

Description of Embodiments

Embodiments of the present disclosure will be explained below in detail with reference to the drawings. Note that, in the following embodiments, the same reference numerals are assigned to identical components, and redundant descriptions will be omitted accordingly.

In the present specification and the drawings, a plurality of components having substantially the same functional configuration may be distinguished from one another by postfixing the same reference numeral with different numerals. For example, a plurality of configurations having substantially the same functional configuration are distinguished as terminal apparatuses $40_1$, $40_2$, and $40_3$ as necessary. However, in a case where a plurality of components having substantially the same functional configuration need not each be particularly distinguished from one another, only the same reference numeral is assigned to the components. For example, in a case where the terminal apparatuses $40_1$, $40_2$, and $40_3$ need not be particularly distinguished from one another, the terminal apparatuses are simply referred to as the terminal apparatus 40.

One or more embodiments (including examples and modifications) described below can each be implemented independently. On the other hand, at least a part of a plurality of embodiments described below may be implemented in combination with at least a part of another embodiment as appropriate. The embodiments may include novel features that are different from each other. Therefore, the plurality of embodiments can contribute to accomplishing or solving different objectives or problems and can produce different effects.

1. Overview

First, an overview of the present embodiment will be described.

1-1. Problem

There is an increasing demand for wireless transmission of captured data. For example, in recent years, for broadcasting/distribution of videos captured at various angles, there is an increasing demand for wireless transmission of videos captured by a plurality of imaging apparatuses (hereinafter, also referred to as cameras) using a mobile network (for example, a cellular network such as 5G).

The camera wirelessly transmits the captured data to a broadcasting/distribution facility using a built-in radio communication function or via a radio communication terminal directly or indirectly connected to the camera. The broadcast/distribution facility is an information processing apparatus for broadcasting/distribution such as a decoder, a video editing apparatus, or a switcher.

For the information processing apparatus to stably process the video captured by the camera, the captured data (for example, video data) needs to be stably wirelessly transmitted from the camera to the information processing apparatus. However, stable wireless transmission of the captured data is difficult in a case where known technologies remain unimproved.

For example, in a cellular network, transmission rate control (link adaptation) in a wireless section is adaptively applied according to the quality of radio communication of a camera (or a radio communication terminal connected to the camera). Thus, the error rate of the wireless section is kept constant. However, the amount of traffic related to transmission of captured data depends on the resolution or frame rate of the video. Accordingly, when a low transmission rate is configured in link adaptation, the use of radio resources per camera significantly increases. In a cell in which such a camera is present, a shortage of radio resources (congestion) occurs. In this case, the camera fails to stably wirelessly transmit the captured data.

In addition, cellular communication includes a public network provided for general users and a private network mainly used for Business to Business (B2B). In the private network, dedicated radio resources are provided at specific locations. Accordingly, in a case where the private network is used for wireless transmission of captured data, stable wireless transmission of captured data is often assumed to be realized.

However, the communication area of the private network is limited to a specific place. Accordingly, when a private network is used for wireless transmission of the captured data, the image capturing area is limited. In addition, even with sufficient radio resources, in a case where the camera (or a radio communication terminal connected to the camera) is away from the base station, the network apparatus (for example, the base station/core network) needs to lower the communication rate (for example, a modulation multi-value number or the coding rate of an error correction code) in order to secure a certain transmission speed. As a result, the usage amount of radio resources increases. Accordingly, even in a case where the private network is used for wireless transmission of the captured data, the radio resources may be in shortage.

On the other hand, the public network provides a wide communicable area for general users. Accordingly, in a case where the public network is used for wireless transmission of the captured data, a wide image capturing area is secured. However, the public network is assumed to require a network apparatus to fairly allocate radio resources to users. Accordingly, an environment with many users or with a large amount of traffic involves the occurrence of a shortage of radio resources. In this case, stable wireless transmission of the captured data is also not realized.

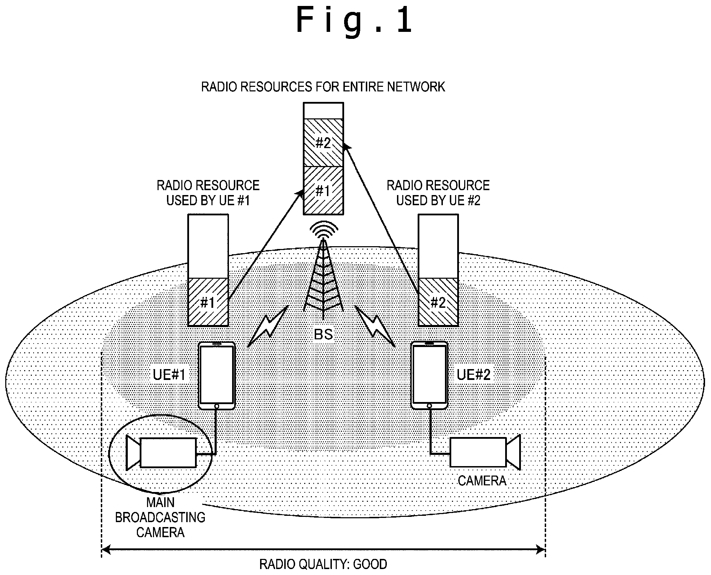

The above problems will be described in more detail with reference to the drawings. Fig. 1 to Fig. 3 are diagrams for describing the problems of the present embodiment.

In the examples of Fig. 1 to Fig. 3, a plurality of cameras are located in a cell of a cellular network. More specifically, two cameras are located in one cell formed by one base station (BS). One of the two cameras is a main broadcasting camera that is capturing a video to be broadcast. The two cameras are each connected to a radio communication terminal. Specifically, the main broadcasting camera is connected to UE #1, and the other camera is connected to UE #2. Each of the two cameras transmits captured data via a radio communication terminal (UE #1 or UE #2).

In the example of Fig. 1, both of the two cameras are located in an area with good radio quality in the cell. Accordingly, the radio resources used by each of the UE #1 and the UE #2 are kept equal to or less than a certain amount. Accordingly, in the example of Fig. 1, the radio resources used in the entire cellular network are equal to or less than the amount of prepared resources.

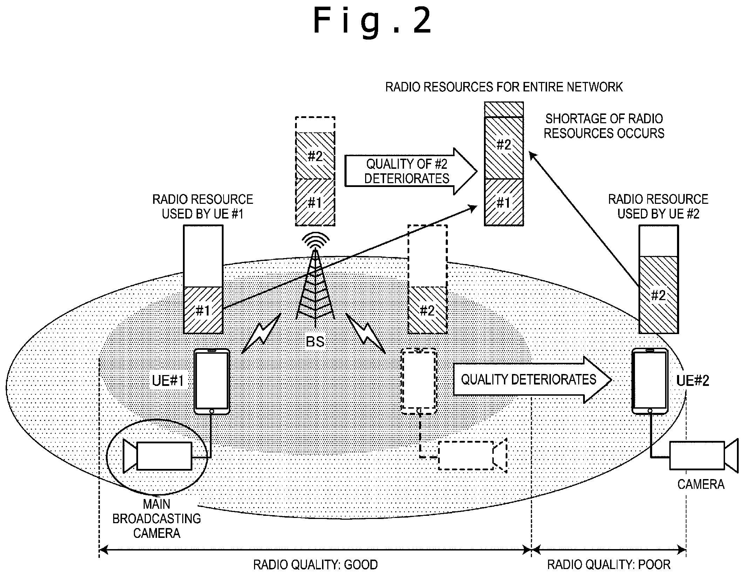

Here, as illustrated in Fig. 2, one of the two cameras (the camera connected to UE #2 in the example of Fig. 2) is assumed to have moved to an area with poor radio quality in the cell (for example, a cell edge). In this case, since the radio quality of the UE #2 deteriorates, the radio resources used by the UE #2 increase. In the example of Fig. 2, the radio resources are in shortage in the entire cellular network due to an increase in the radio resources used by the UE #2.

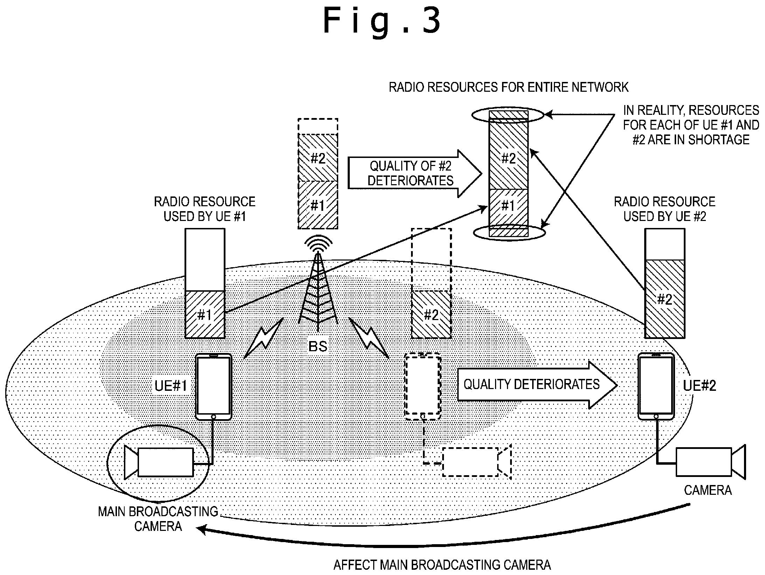

In the example of Fig. 2, the shortage of radio resources does not seem to affect the UE #1. However, in practice, in a case where the radio resources are in shortage in the entire cellular network, then as illustrated in Fig. 3, the radio resources are in shortage not only in the UE #2 but also in the UE #1. This affects the transmission of the captured data of the main broadcasting camera.

That is, when a camera with poor radio quality exists in a cell (or in a cellular network), wireless transmission of captured data of other cameras is also affected. In the case of a camera used for broadcasting/distribution in the cell, the video to be broadcast/distributed is disturbed.

1-2. Overview of Solving Means

Thus, in the present embodiment, the above-described problems are solved by the following means.

The image capturing system according to the present embodiment is a system for broadcasting/distributing a video. An image capturing system according to the present embodiment includes a plurality of cameras directly or indirectly connected to a cellular network, and an information processing apparatus that performs processing related to a video captured by the cameras.

The information processing apparatus is, for example, an apparatus that performs processing for broadcasting/distributing a video captured by a camera. For example, the information processing apparatus is a switcher that switches videos of a plurality of cameras. The switcher is an apparatus used by a switcher operator (hereinafter, simply referred to as an operator) to switch cameras related to predetermined processing (for example, cameras that capture videos to be broadcast/distributed). Hereinafter, an overview of the solution will be described assuming that the information processing apparatus is a switcher, but the information processing apparatus of the present embodiment is not limited to the switcher.

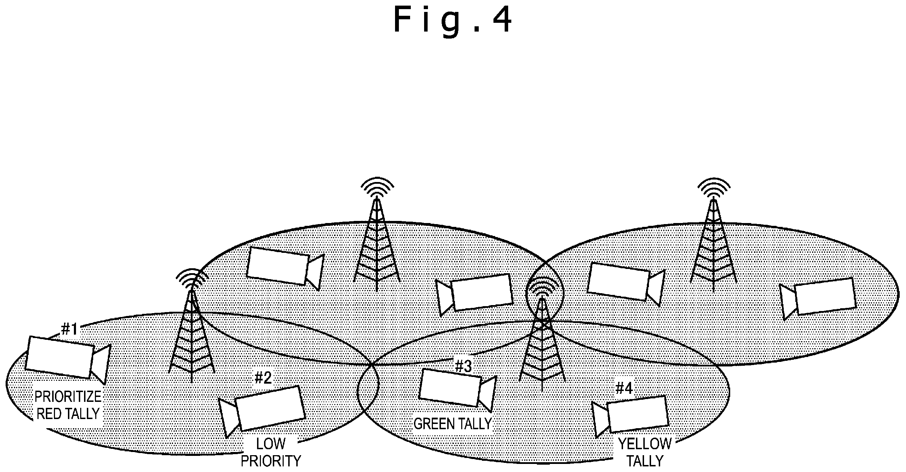

Fig. 4 is a diagram for describing a tally signal. The switcher transmits a tally signal to the camera in accordance with an operation of the operator. The tally signal is a control signal transmitted from the switcher to the camera. For example, the tally signal is a control signal including information for designating one or more cameras among two or more cameras as cameras related to predetermined processing (first control information). Alternatively, the tally signal is a control signal to which a role as the first control information is assigned. The switcher designates, by the tally signal, for example, one or more cameras among two or more cameras as cameras related to predetermined processing (for example, cameras that capture videos to be broadcast/distributed).

A camera for broadcasting/distribution may include an indicator lamp referred to as a tally lamp. The tally lamp is, for example, an indicator lamp for notifying a person to be subjected to image capturing or the like that the camera is being used for predetermined processing (for example, photographing for broadcasting/distribution). The tally lamp may also be referred to as a tally light, an on-air lamp, or a cue light. The tally signal transmitted from the switcher to the camera includes, for example, information for designating lighting/non-lighting (turning off) of the tally lamp and/or information regarding the color of the tally lamp. The camera controls the tally lamp (for example, at least one of turning on, turning off, and changing the color) based on the received tally signal.

In the example of Fig. 4, three cameras (cameras #1, #3, and #4 illustrated in Fig. 4) among two or more cameras connected to the cellular network have the tally lamps illuminated in red, yellow, or green. The other cameras are in a state where the tally lamps are not illuminated. The camera whose tally lamp is illuminated in red (camera #1) is, for example, a camera that captures a video for broadcasting. The camera whose tally lamp is illuminated in yellow (camera #4) is, for example, a camera that captures a video for Internet distribution. The camera whose tally lamp is illuminated in green (camera #3) is, for example, a camera that is capturing another video (for example, a video for editing). The example of lighting of the tally lamp is merely an example. The association between the lighting/non-lighting/color of the tally lamp and the role of the camera can be arbitrarily determined by the user or the developer of the system/apparatus.

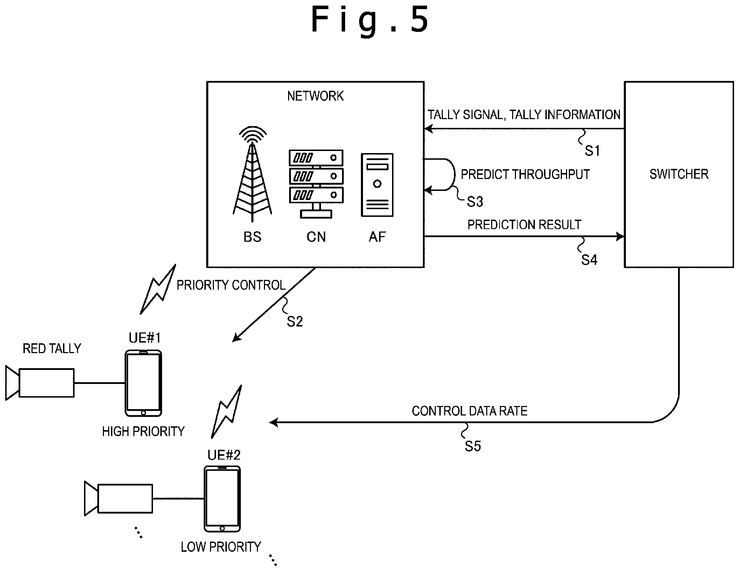

Fig. 5 is a diagram for describing an operation of the image capturing system according to the present embodiment. The image capturing system of the present embodiment includes a network apparatus that provides a function for realizing a cellular network, in addition to a switcher and a camera. The network apparatus may be a base station (BS), an apparatus constituting a Core Network (CN), or an entity referred to as an Application Function (AF). The application function may be a network function included in the core network or may be a function outside the core network.

In the example of Fig. 5, the camera is indirectly connected to the cellular network via the radio communication terminal (UE #1/UE #2). However, in a case where the camera includes a radio communication function, the camera may directly connect to the cellular network using the radio communication function. Hereinafter, an overview of the operation of the image capturing system of the present embodiment will be described with reference to Fig. 5.

First, the switcher transmits a tally signal and tally information to the network apparatus (step S1). The tally signal is, for example, a control signal including information (first control information) for designating one or more cameras among two or more cameras as cameras related to predetermined processing. Alternatively, the tally signal is a control signal to which a role as the first control information is assigned. The tally information is information (second control information) for preferentially allocating a radio resource to a camera related to designation (or a radio communication terminal connected to a camera related to designation). The second control information may be transmitted to the network apparatus as a tally signal together with the first control information, or may be transmitted to the network apparatus separately from the tally signal.

Here, the camera connected to the UE #1 and the camera connected to the UE #2 are assumed to be located in the same cell. Then, the switcher is assumed to transmit a tally signal indicating that the tally lamp is to be illuminated in red to the camera connected to the UE #1. In this case, the transmission priority of a video captured by the camera connected to the UE #1 is higher than the transmission priority of a video captured by the camera connected to the UE #2. Thus, the switcher transmits, as the tally information (second control information), control information including a request for preferentially allocating a radio resource to the UE #1 to the network apparatus.

Upon receiving the tally information (second control information), the network apparatus performs control (for example, QoS control) for preferentially allocating a radio resource to the UE #1. For example, the tally information (second control information) is assumed to have been transmitted from the switcher to the application function. At this time, the application function performs, on the core network/base station, configuration for preferentially allocating a radio resource to the UE #1. The core network is assumed to be, for example, a 5G Core network (5GC). At this time, the application function may configure a 5G QoS Identifier (5QI) of a higher level than that of the UE #2 to the UE #1 via a Network Exposure Function (NEF).

The core network/base station performs priority control to preferentially allocate a radio resource to the UE #1 based on the configuration (step S2). For example, the core network/base station allocates a radio resource to the UE #1 in preference to the UE #2 based on the configuration. The UE #1 transmits the captured data to the information processing apparatus by using the allocated radio resource. Accordingly, the UE #1 can stably wirelessly transmit the captured data related to broadcasting/distribution. As a result, disturbance of the broadcast/distributed video is suppressed.

Note that the network apparatus may predict the throughput of the UE #1 and/or the UE #2 (step S3). This prediction may be made by the application function. For example, at least one of the UE, the base station, and the core network periodically transmits, to the application function, information used for predicting the throughput. The application function uses this periodically transmitted information to make throughput prediction. The prediction performed by the network apparatus is not limited to the throughput prediction. In addition to or instead of the throughput prediction, the network apparatus may predict the communication status of the UE #1 and/or the UE #2.

The network apparatus may transmit the throughput prediction result to the switcher (step S4). Then, the switcher may control the data rate of the video captured by the camera based on the prediction result for the throughput (step S5). For example, in a case where video transmission at predetermined quality using the radio resource allocated to the UE #2 is determined to be difficult, the switcher requests the camera connected to the UE #2 to lower the resolution and/or the frame rate of the video. The switcher may transmit the request via the cellular network.

Upon receiving the request, the camera lowers the data rate (for example, the resolution and/or the frame rate) of the video based on the request. Accordingly, the UE #2 having the low priority can also stably wirelessly transmit the captured data.

The overview of the present embodiment has been described above, and the image capturing system 1 according to the present embodiment will be described in detail below.

2. Configuration of Image Capturing System

First, a configuration of an image capturing system 1 will be described.

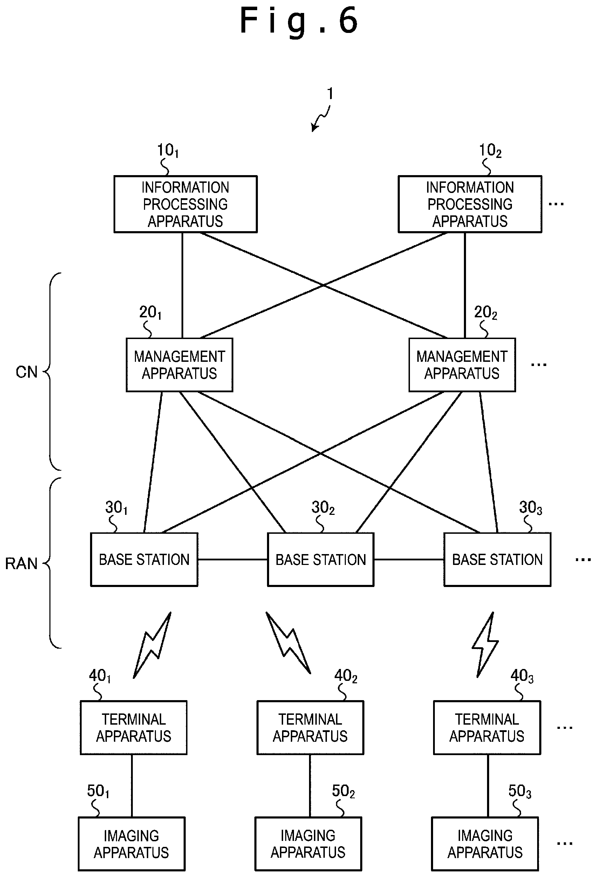

Fig. 6 is a diagram illustrating a configuration of the image capturing system 1 according to the present embodiment. The image capturing system 1 includes an information processing apparatus 10, a terminal apparatus 40, and an imaging apparatus 50. In addition to these apparatuses, the image capturing system 1 may include a management apparatus 20 and a base station 30. The image capturing system 1 provides a user with a wireless network (mobile network) capable of mobile communication by cooperative operation of radio communication apparatuses (for example, the management apparatuses 20 and the base station 30) constituting the image capturing system 1. Note that the image capturing system 1 can be rephrased as a communication system 1.

The wireless network of the present embodiment may be a cellular network including, for example, a radio access network RAN and a core network CN. The mobile network may include a terminal apparatus 40. In the present embodiment, the radio communication apparatus (radio communication terminal) is an apparatus including a radio communication function. In the example of Fig. 6, the base station 30 and the terminal apparatus 40 correspond to the radio communication apparatuses (radio communication terminals). In the following description, an apparatus constituting a wireless network may be referred to as a network apparatus. For example, the network apparatus may be an apparatus constituting a radio access network (for example, a RAN in 5G and/or a RAN in 4G), or may be an apparatus constituting a core network (a core network in 5G and/or a core network in 4G). In the example of Fig. 6, for example, the management apparatus 20 and/or the base station 30 are the network apparatuses.

The image capturing system 1 may include a plurality of information processing apparatuses 10, a plurality of management apparatuses 20, a plurality of base stations 30, a plurality of terminal apparatuses 40, and a plurality of imaging apparatuses 50. In the example of Fig. 6, the image capturing system 1 includes an information processing apparatus $10_1$ and an information processing apparatus $10_2$ as the information processing apparatus 10, and includes a management apparatus $20_1$ and a management apparatus $20_2$ as the management apparatus 20. The image capturing system 1 includes a base station $30_1$, a base station $30_2$, and a base station $30_3$ as the base station 30, and includes a

terminal apparatus $40_1$, a terminal apparatus $40_2$, and a terminal apparatus $40_3$ as the terminal apparatus 40. The image capturing system 1 includes an imaging apparatus $50_1$, an imaging apparatus $50_2$, and an imaging apparatus $50_3$ as the imaging apparatus 50.

In the example of Fig. 6, the imaging apparatus 50 is connected to the wireless network via the terminal apparatus 40, but may be directly connected to the wireless network in a case where the imaging apparatus 50 includes a radio communication function. In the example of Fig. 6, the imaging apparatus 50 is connected to the information processing apparatus 10 via the wireless network, but may be connected to the information processing apparatus 10 in a wired manner in a case where the imaging apparatus 50 includes a wired communication function.

The terminal apparatus 40 may be configured to connect to a network by using a Radio Access Technology (RAT) such as Long Term Evolution (LTE), New Radio (NR), 6G, Wi-Fi, or Bluetooth (trade name). At this time, the terminal apparatus 40 may be configured to be able to use different radio access technologies (radio communication schemes). For example, the terminal apparatus 40 may be configured to be able to use NR and Wi-Fi. The terminal apparatus 40 may be configured to be able to use different cellular communication technologies (for example, LTE, NR, or 6G). Note that, in the following description, the terminal apparatus 40 may be referred to as a User Equipment (UE) 40.

LTE and NR are each a type of cellular communication technology. This technology enables mobile communication of terminal apparatuses by allocating, in a cellular manner, a plurality of areas covered by base stations. 6G is also a type of cellular communication technology. This technology may enable mobile communication of terminal apparatuses by allocating, in a cellular manner, a plurality of areas covered by base stations.

Note that in the following description, "LTE" includes LTE-Advanced (LTE-A), LTE-Advanced Pro (LTE-A Pro), and Evolved Universal Terrestrial Radio Access (EUTRA). NR includes New Radio Access Technology (NRAT) and Further EUTRA (FEUTRA). Note that a single base station 30 may manage a plurality of cells. In the following description, a cell corresponding to LTE is referred to as an LTE cell, and a cell corresponding to NR is referred to as an NR cell.

NR is a radio access technology of the next generation (fifth generation) of LTE (fourth generation communication including LTE-Advanced and LTE-Advanced Pro). NR is a radio access technology that can support various use cases including Enhanced Mobile Broadband (eMBB), Massive Machine Type Communications (mMTC), and Ultra-Reliable and Low Latency Communications (URLLC). Rel-15 of 3GPP (trade name) has formulated NR as a technical framework corresponding to usage scenarios, requirements, deployment scenarios, and the like in these use cases. Furthermore, Beyond 5G and 6G require simultaneously realization of a plurality of goals of high-speed and large-capacity, low delay/high reliability, and a plurality of simultaneous connections.

6G is a cellular communication technology belonging to a generation next to NR and 5GS (5G system) corresponding to fifth generation mobile communications. 6G includes a radio access technology and a network technology between a base station and a core network and a data network. In addition, 6G includes technologies for Extreme connectivity for each of eMBB, mMTC, and URLLC, which have been considered as main use cases or requirements in NR. 6G also includes new technologies in new aspects. For example, 6G includes a technology related to AI (for example, cognitive network, AI native Air Interface), a technology related to sensing (including Rader sensing and network as a sensor), and a technology related to terahertz communication.

Note that the wireless network may correspond to at least one of Long Term Evolution (LTE), New Radio (NR), and Radio Access Technology (RAT) such as 6G. LTE, NR, and 6G are each a type of cellular communication technology and enable mobile communication of terminal apparatuses by allocating, in a cellular manner, a plurality of areas covered by base stations. Note that the radio access scheme used by the image capturing system 1 is not limited to LTE, NR, and 6G and may be another radio access scheme such as Wideband Code Division Multiple Access (W-CDMA) or Code Division Multiple Access 2000 (cdma 2000).

In addition, the base station 30 may be a ground station or a non-ground station. The non-ground station may be a satellite station or an aircraft station. In a case where the non-ground station is a satellite station, the wireless network may be a mobile satellite communication system of a Bent-pipe (Transparent) type.

Note that in the present embodiment, the ground station and a ground base station refer to a base station and a relay station installed on the ground. Here, the "ground" is not only land, but also ground in a broad sense including underground, on-the-water, and underwater. Note that in the following description, the term "ground station" may be replaced with a "gateway".

Note that the base station in LTE is sometimes referred to as an Evolved Node B (eNodeB) or an eNB. The base station in NR may be referred to as gNodeB or gNB. In addition, the base station in 6G may be referred to as 6G NodeB (6GNB). In addition, in LTE, NR, and 6G, a terminal apparatus (also referred to as a mobile station or a terminal) is sometimes referred to as a User Equipment (UE). Note that the terminal apparatus is a type of communication apparatus and is also referred to as a mobile station or a terminal.

The terminal apparatus 40 may be connectable to the network using a radio access technology (radio communication scheme) other than LTE, NR, 6G, Wi-Fi, and BlueTooth. For example, the terminal apparatus 40 may be connectable to the network using Low Power Wide Area (LPWA) communication. In addition, the terminal apparatus 40 may be connectable to the network using proprietary standard radio communication.

Here, the LPWA communication is radio communication that enables low-power wide-range communication. For example, the LPWA radio refers to Internet of Things (IoT) radio communication using a specified low power radio (for example, 920 MHz band) or an Industry-Science-Medical (ISM) band. Note that the LPWA communication used by the terminal apparatus 40 may be in conformity with the LPWA standard. The LPWA standard may be, for example, at least one of ELTRES, ZETA, SIGFOX, LoRaWAN, LTE-M, and NB-IoT. It is to be understood that the LPWA standard is not limited to these, and may be another LPWA standard.

Note that the radio communication apparatuses illustrated in Fig. 6 may be considered as apparatuses in a logical sense. That is, some of the radio communication apparatuses may be realized by Virtual Machines (VM), Containers such as Dockers, or the like, and those apparatuses may be implemented on physically the same hardware.

In the present embodiment, the concept of the radio communication apparatus includes not only a portable mobile apparatus (terminal apparatus) such as a mobile terminal but also an apparatus installed in a structure or a mobile body. The structure or the mobile body itself may be regarded as the radio communication apparatus. The concept of the radio communication apparatus also includes not only the terminal apparatus 40 but also the base station 30. The radio communication apparatus is a type of a processing apparatus or an information processing apparatus. The radio communication apparatus can be rephrased as a transmission apparatus or a reception apparatus.

Hereinafter, the configuration of each radio communication apparatus constituting the image capturing system 1 will be specifically described. Note that the configuration of each radio communication apparatus described below is merely an example. The configuration of each radio communication apparatus may be different from the configuration described below.

2-1. Configuration of Information Processing Apparatus

First, a configuration of the information processing apparatus 10 will be described.

The information processing apparatus 10 is, for example, an apparatus that performs processing for broadcasting/distributing a video captured by the imaging apparatus 50. The broadcasting is, for example, transmission of a video using terrestrial waves and/or non-terrestrial waves. For example, the broadcast is a television broadcast (terrestrial broadcast and/or satellite broadcast). The distribution is, for example, transmission of a video using a communication network. For example, the distribution is Internet distribution.

The information processing apparatus 10 may be a switcher that switches videos of the plurality of imaging apparatuses 50. The switcher is, for example, an apparatus that switches an imaging apparatus that captures a video to be broadcast or distributed, based on an instruction of an operator. The switcher may be referred to as a broadcast controller, a Software Defined Network (SDN) controller, a Network orchestrator, or the like.

Note that the information processing apparatus 10 is not limited to the switcher. For example, the information processing apparatus 10 may be a decoder that decodes captured data encoded by the imaging apparatus 50. The information processing apparatus 10 may be a conversion apparatus that converts decoded captured data into various types of signals (for example, a signal for broadcasting/distribution or a signal for display).

The information processing apparatus 10 may be an application server or a Web server. The information processing apparatus 10 may be a PC server, a mid-range server, or a mainframe server. The information processing apparatus 10 may be an information processing apparatus that performs data processing (edge processing) near a user or a terminal. For example, the information processing apparatus 10 may be an information processing apparatus (computer) that is provided in a base station or is built in the base station. The information processing apparatus 10 may include a function as a core network. For example, the information processing apparatus 10 may be an apparatus that functions as the management apparatus 20. It is to be understood that the information processing apparatus 10 may be an information processing apparatus that performs cloud computing. The information processing apparatus 10 of the present embodiment can function as an application function.

The information processing apparatus 10 is connected to the management apparatus 20 and/or another information processing apparatus 10 via a network. Here, the network is a public network such as the Internet. Note that the network is not limited to the Internet, and may be, for example, a Local Area Network (LAN), a Wide Area Network (WAN), a cellular network, a fixed telephone network, or a local Internet Protocol (IP) network. The network may include a wired network or include a wireless network.

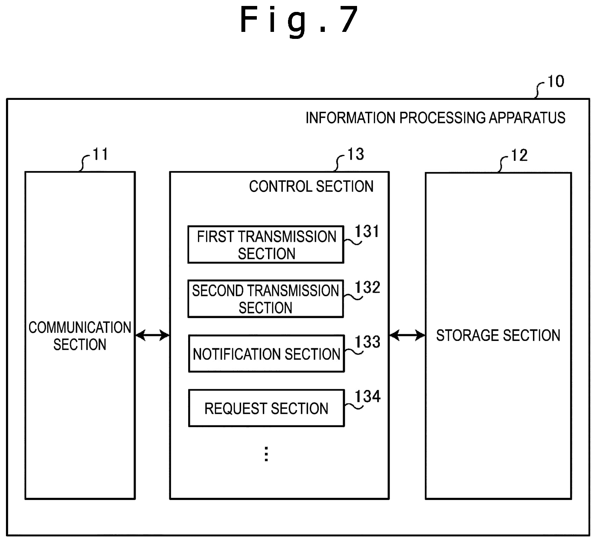

Fig. 7 is a diagram illustrating a configuration example of the information processing apparatus 10 according to an embodiment of the present disclosure. The information processing apparatus 10 includes a communication section 11, a storage section 12, and a control section 13. The configuration illustrated in Fig. 7 is a functional configuration, and may be different from a hardware configuration. The functions of the information processing apparatus 10 may be distributively implemented in a plurality of physically separate configurations. For example, the information processing apparatus 10 may include a plurality of information processing apparatuses.

The communication section 11 is a communication interface for communicating with other devices. For example, the communication section 11 is, for example, a network interface. For example, the communication section 11 may be a Local Area Network (LAN) interface such as a Network Interface Card (NIC). Note that the communication section 11 may be a wired interface or a wireless interface. The communication section 11 communicates with the management apparatus 20, the base station 30, the terminal apparatus 40, and the other information processing apparatus 10 under the control of the control section 13.

The storage section 12 is a storage apparatus capable of data reading and data writing, such as a Dynamic Random Access Memory (DRAM), a Static Random Access Memory (SRAM), a flash memory, or a hard disk.

The control section 13 is a controller that controls each section of the information processing apparatus 10. The control section 13 may be implemented by a processor such as a Central Processing Unit (CPU) or a Micro Processing Unit (MPU). For example, the control section 13 may be implemented by a processor executing various types of programs stored in a storage apparatus inside the management apparatus 20 by using a Random Access Memory (RAM) or the like as a work area. The control section 13 may be implemented by an integrated circuit such as an Application Specific Integrated Circuit (ASIC) or a Field Programmable Gate Array (FPGA). The control section 13 may also be implemented by a Graphics Processing Unit (GPU). Any of the CPU, the MPU, the ASIC, the FPGA, and the GPU can be regarded as a controller. Note that the control section 13 may include a plurality of physically separate objects. For example, the control section 13 may include a plurality of semiconductor chips.

The control section 13 includes at least one of the blocks of a first transmission section 131, a second transmission section 132, a notification section 133, and a request section 134. Each of the blocks (the first transmission section 131 to the request section 134) constituting the control section 13 is a functional block indicating a function of the control section 13. The functional blocks may be software blocks or hardware blocks. For example, each of the above-described functional blocks may be one software module implemented by software (including a microprogram) or may be one circuit block on a semiconductor chip (die). It is to be understood that each functional block may be one processor or one integrated circuit. The control section 13 may include functional units different from the above-described functional blocks. The method of configuring the functional blocks is arbitrary.

2-2. Configuration of Management Apparatus

Now, a configuration of the management apparatus 20 will be described.

The management apparatus 20 is an information processing apparatus (computer) that manages a wireless network. For example, the management apparatus 20 is an information processing apparatus that manages communication of the base station 30.

The management apparatus 20 may be, for example, an apparatus constituting the core network CN. For example, the management apparatus 20 may be an apparatus including functions as a Mobility Management Entity (MME). The management apparatus 20 may also be an apparatus including functions as an Access and Mobility Management Function (AMF) and/or a Session Management Function (SMF). The MME, the AMF, and the SMF are Control Plane Network Function nodes in the core network CN. The management apparatus 20 may be an apparatus including functions as a control plane network function (6G CPNF) in 6G. The 6G CPNF may include one or more logical nodes.

It is to be understood that the functions of the management apparatus 20 are not limited to the MME, the AMF, the SMF, and the 6G CPNF. The management apparatus 20 may be an apparatus including functions as a Network Slice Selection Function (NSSF), an Authentication Server Function (AUSF), a Policy Control Function (PCF), and Unified Data Management (UDM). The management apparatus 20 may also be an apparatus including functions as a Home Subscriber Server (HSS).

Note that the management apparatus 20 may include functions of a gateway. For example, the management apparatus 20 may include functions as a Serving Gateway (S-GW) or a Packet Data Network Gateway (P-GW). The management apparatus 20 may also include functions of a User Plane Function (UPF). At this time, the management apparatus 20 may include a plurality of UPFs. The management apparatus 20 may be an apparatus including functions as a user plane network function (6G UPNF) in 6G.

The core network CN includes a plurality of Network Functions, and each network function may be integrated into one physical apparatus or may be distributed to a plurality of physical apparatuses. In other words, the management apparatus 20 may be distributively allocated in a plurality of apparatuses. Further, this distributed allocation may be controlled to be executed dynamically. The base station 30 and the management apparatus 20 constitute one network and provide a radio communication service to the terminal apparatus 40. The management apparatus 20 is connected to the Internet, and the terminal apparatus 40 can use, through the base station 30, various services provided via the Internet.

Note that the management apparatus 20 need not necessarily be an apparatus constituting a core network CN. For example, the core network CN is assumed to be a core network of Wideband Code Division Multiple Access (W-CDMA) or Code Division Multiple Access 2000 (cdma 2000). At this time, the management apparatus 20 may be an apparatus that functions as a Radio Network Controller (RNC).

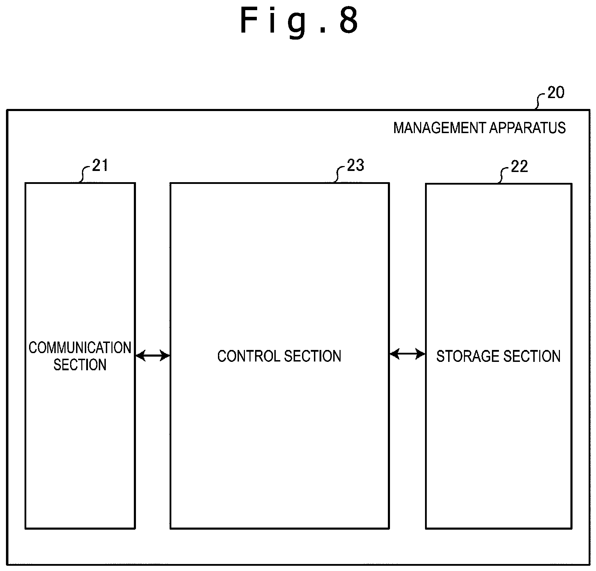

Fig. 8 is a diagram illustrating a configuration of the management apparatus 20 according to the present embodiment. The management apparatus 20 includes a communication section 21, a storage section 22, and a control section 23. The configuration illustrated in Fig. 8 is a functional configuration, and may be different from a hardware configuration. In addition, the functions of the management apparatus 20 may be statically or dynamically distributively implemented in a plurality of physically separate configurations. For example, the management apparatus 20 may include a plurality of server apparatuses.

The communication section 21 is a communication interface for communicating with the radio communication apparatus (for example, the base station 30). The communication section 21 may be a network interface or an equipment connection interface. The communication section 21 may be a Local Area Network (LAN) interface such as a Network Interface Card (NIC), or may be a Universal Serial Bus (USB) interface including a USB host controller, a USB port, and the like. The communication section 21 may be a wired interface or a wireless interface. The communication section 21 is controlled by the control section 23.

The storage section 22 is a storage apparatus capable of data reading and data writing, such as a DRAM, an SRAM, a flash memory, or a hard disk. The storage section 22 stores, for example, the connection state of the terminal apparatus 40. The storage section 22 stores a state of Radio Resource Control (RRC) and EPS Connection Management (ECM) of the terminal apparatus 40, or a state of 5G System Connection Management (CM) of the terminal apparatus 40. The storage section 22 may function as a home memory that stores position information of the terminal apparatus 40.

The control section 23 is a controller that controls each section of the management apparatus 20. The control section 23 may be implemented by, for example, a processor such as a CPU or an MPU. For example, the control section 23 may be implemented by the processor executing various types of programs stored in the storage apparatus inside the management apparatus 20 using a RAM or the like as a work area. The control section 23 may be implemented by an integrated circuit such as an ASIC or an FPGA. The control section 23 may be implemented by a GPU. Any of the CPU, the MPU, the ASIC, the FPGA, and the GPU can be regarded as a controller. The control section 23 may include a plurality of physically separate objects. For example, the control section 23 may include a plurality of semiconductor chips.

2-3. Configuration of Base Station

Now, the configuration of the base station 30 will be described.

The base station 30 is a radio communication apparatus that performs radio communication with another radio communication apparatus (for example, the terminal apparatus 40, the imaging apparatus 50, or another base station 30). The base station 30 may wirelessly communicate with the terminal apparatus 40 via a relay station, or may wirelessly communicate directly with the terminal apparatus 40.

The base station 30 is an apparatus corresponding to a radio base station (Base Station, Node B, eNB, gNB, 6GNB, or the like) or a radio Access Point. The base station 30 may be a wireless relay station. The base station 30 may be an optical extension apparatus referred to as a Remote Radio Head (RRH). The base station 30 may be a receiving station such as a Field Pickup Unit (FPU). The base station 30 may be an Integrated Access and Backhaul (IAB) donor node or an IAB relay node that provides a radio access line and a radio backhaul line by time division multiplexing, frequency division multiplexing, or space division multiplexing.

The radio access technology used by the base station 30 may be a cellular communication technology. The radio access technology used by the base station 30 may be a wireless LAN technology. The radio access technology used by the base station 30 may be a Low Power Wide Area (LPWA) communication technology. However, the radio access technology used by the base station 30 is not limited to the above-described technologies, and may be any of other radio access technologies. The radio communication used by the base station 30 may be radio communication using millimeter waves or radio communication using terahertz waves. The radio communication used by the base station 30 may be radio communication using radio waves or radio communication (optical radio communication) using infrared rays or visible light. In addition, the base station 30 may be capable of Non-Orthogonal Multiple Access (NOMA) communication with the terminal apparatus 40. Here, the NOMA communication is communication (transmission, reception, or both) using non-orthogonal resources. Note that the base station 30 may be capable of NOMA communication with another base station 30.

Note that the base station 30 may be capable of inter-communicating with the core network via a base station-core network interface (for example, NG Interface, S1 Interface, or the like). The interface may be wired or wireless. In addition, the base station may be able to inter-communicate with another base station via an inter-base station interface (e.g., Xn Interface, X2 Interface, F1 Interface, etc.). The interface may be wired or wireless.

The concept of the base station (also referred to as a base station apparatus) includes not only a donor base station but also a relay base station (also referred to as a relay station). The relay base station may be any one of an RF Repeater, a Smart Repeater, and an Intelligent Surface. The concept of the base station includes not only a structure including the function of the base station but also an apparatus installed in the structure.

The structure is, for example, a building such as a high-rise building, a house, a steel tower, a station facility, an airport facility, a port facility, an office building, a school building, a hospital, a factory, a commercial facility, or a stadium.

The concept of the structure includes not only a building but also non-building structures such as a tunnel, a bridge, a dam, a fence, and an iron pole, and facilities such as a crane, a gate, and a windmill. The concept of the structure includes not only a structure on land (on the ground in a narrow sense) or in the ground but also an on-the-water structure such as a pier or a megafloat and an underwater structure such as a marine observation facility. The base station can be rephrased as an information processing apparatus.

The base station 30 may be a donor station or a relay station. The base station 30 may also be a fixed station or a mobile station. The mobile station is a radio communication apparatus (for example, a base station) configured to be movable. At this time, the base station 30 may be an apparatus installed in the mobile body or may be the mobile body itself. For example, a relay station having mobility can be regarded as a base station 30 as a mobile station. In addition, the base station 30 as a mobile station also corresponds to an apparatus that originally has mobility and includes functions of a base station (at least some of the functions of the base station), such as a vehicle, an Unmanned Aerial Vehicle (UAV) represented by a drone, or a smartphone.

Here, the mobile body may be a mobile terminal such as a smartphone or a mobile phone. The mobile body may be a mobile body that moves on land (on the ground in a narrow sense) (for example, a vehicle such as an automobile, a bicycle, a bus, a truck, a motorcycle, a train, or a linear motor car), or may be a mobile body that moves underground (for example, in a tunnel) (for example, a subway). The mobile body may also be a mobile body that moves on the water (for example, a ship such as a passenger ship, a cargo ship, or a hovercraft) or may be a mobile body that moves underwater (for example, a submersible vessel such as a submersible, a submarine, or an unmanned underwater vehicle). The mobile body may also be a mobile body (for example, an aircraft such as an airplane, an airship, or a drone) that moves in the atmosphere.

The base station 30 may be a ground base station (ground station) installed on the ground. The base station 30 may be a base station deployed in a structure on the ground, or may be a base station installed in a mobile body that moves on the ground. The base station 30 may be an antenna installed in a structure such as a building and a signal processing apparatus connected to the antenna. The base station 30 may be a structure or a mobile body itself. The term "on the ground" means not only on land (on the ground in a narrow sense) but also on the ground in a broad sense including underground, on the water, and underwater. The base station 30 is not limited to the ground base station. In a case where the image capturing system 1 is a satellite communication system, the base station 30 may be an aircraft station. From the perspective of a satellite station, an aircraft station located on the earth is a ground station.

The base station 30 is not limited to the ground station. The base station 30 may be a non-ground base station apparatus (non-ground station) capable of floating in the air or in space. The base station 30 may be an aircraft station or a satellite station.

The satellite station is a satellite station capable of floating in outer space. The satellite station may be an apparatus mounted on a space mobile body such as an artificial satellite, or may be the space mobile body itself. The space mobile body is a mobile body that moves in the outer space. The space mobile body may be at least one of an artificial satellite, a spacecraft, a space station, and a probe. It is to be understood that the space mobile body may be an artificial celestial body other than those listed above. Note that the satellite serving as the satellite station may be any of a Low Earth Orbiting (LEO) satellite, a Medium Earth Orbiting (MEO) satellite, a Geostationary Earth Orbiting (GEO) satellite, and a Highly Elliptical Orbiting (HEO) satellite. The satellite station may be an apparatus mounted on a low earth orbit satellite, a medium earth orbit satellite, a geostationary satellite, or a highly elliptical orbit satellite.

The aircraft station is a radio communication apparatus that can float in the atmosphere, such as an aircraft. The aircraft station may be an apparatus mounted on an aircraft or the like, or may be the aircraft itself. Note that the concept of aircrafts includes not only heavier-than-air aircrafts such as airplanes or gliders, but also lighter-than-air aircrafts such as balloons or airships. The concept of aircrafts includes not only heavier-than-air aircrafts or lighter-than-air aircrafts but also rotorcrafts such as helicopters or autogyros. Note that the aircraft station or the aircraft on which the aircraft station is mounted may be an Unmanned Aerial Vehicle (UAV) such as a drone.

The concept of unmanned aerial vehicles includes Unmanned Aircraft Systems (UAS) and tethered unmanned aircraft systems (tethered UAS). The concept of unmanned aerial vehicles includes Lighter than Air (LTA) UASs and Heavier than Air (HTA) UASs. The concept of unmanned aerial vehicles includes High Altitude UAS Platforms (HAPs).

The size of the coverage of the base station 30 may range from relatively large like a macro cell to relatively small like a pico cell. The size of the coverage of the base station 30 may be very small like a femtocell. The base station 30 may have a beamforming function. The base station 30 may form a cell or a service area formed for each beam. In addition to or instead of this, the base station 30 may have, besides beamforming that allows a beam to have directivity, a function of delivering a desired wave to a predetermined point in a pinpoint manner by further considering distance information from an antenna of the base station 30. This function may be referred to as Beam focusing or Point forming.

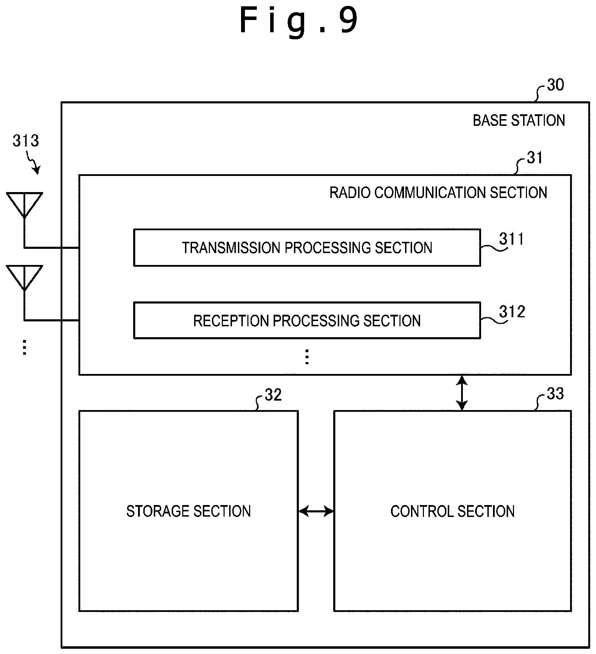

Fig. 9 is a diagram illustrating a configuration of the base station 30 according to the present embodiment. The base station 30 includes a radio communication section 31, a storage section 32, and the control section 33. However, the configuration illustrated in Fig. 9 is a functional configuration and may be different from a hardware configuration. In addition, the functions of the base station 30 may be distributively implemented in a plurality of physically separate

EP 4 773 708 A1

configurations.

The radio communication section 31 is a signal processing section for performing radio communication with other radio communication apparatuses (for example, the terminal apparatus 40, the imaging apparatus 50, and another base station 30). The radio communication section 31 is controlled by the control section 33. The radio communication section 31 supports one or more radio access schemes. The radio communication section 31 may support at least one of NR, LTE, or 6G. The radio communication section 31 may support W-CDMA, cdma 2000, and the like in addition to NR, LTE, and 6G. The radio communication section 31 may support an automatic retransmission technology such as Hybrid Automatic Repeat reQuest (HARQ).

The radio communication section 31 includes a transmission processing section 311, a reception processing section 312, and an antenna 313. The radio communication section 31 may include a plurality of transmission processing sections 311, a plurality of reception processing sections 312, and a plurality of antennas 313. Note that, in a case where the radio communication section 31 supports a plurality of radio access schemes, each section of the radio communication section 31 may be individually configured for each radio access scheme. For example, the transmission processing section 311 and the reception processing section 312 may be individually configured for each of LTE, NR, and 6G. The antenna 313 may include a plurality of antenna elements, for example, a plurality of patch antennas. The radio communication section 31 may include a beamforming function. For example, the radio communication section 31 may include a polarization beamforming function using a vertically polarized wave (V polarized wave) and a horizontally polarized wave (H polarized wave) (or a polarization beamforming function using a Dual polarized wave in the polarization directions of 45 degrees and -45 degrees from the vertical direction).

The transmission processing section 311 performs transmission processing of downlink control information and downlink data. For example, the transmission processing section 311 encodes the downlink control information and the downlink data received from the control section 33 by using an encoding scheme such as block encoding, convolutional encoding, or turbo encoding. Here, the encoding may be based on a Polar Code or a Low Density Parity Check Code (LDPC code). Then, the transmission processing section 311 modulates the encoded bits by a predetermined modulation scheme such as BPSK, QPSK, 16QAM, 64QAM, 256QAM, and a higher-order multilevel modulation scheme. At this time, signal points on the constellation do not necessarily have to be equidistant. The constellation may be a Non Uniform Constellation (NUC). Then, the transmission processing section 311 multiplexes the modulation symbol of each channel and the downlink reference signal, and allocates the multiplexed modulation symbol and downlink reference signal in a predetermined resource element. Then, the transmission processing section 311 performs various types of signal processing on the multiplexed signal. For example, the transmission processing section 311 performs processing such as conversion into a frequency domain by discrete Fourier transform (fast Fourier transform may be used as a fast algorithm), addition of a guard interval (cyclic prefix), generation of a baseband digital signal, conversion into an analog signal, quadrature modulation, up-conversion, removal of an extra frequency component, and amplification of power. The signal generated by the transmission processing section 311 is transmitted from the antenna 313.

The reception processing section 312 performs processing of an uplink signal received via the antenna 313. For example, the reception processing section 312 performs, on the uplink signal, down-conversion, removal of an unnecessary frequency component, control of an amplification level, quadrature demodulation, conversion into a digital signal, removal of a guard interval (cyclic prefix), extraction of a frequency domain signal by discrete Fourier transform, and the like. Then, the reception processing section 312 separates, from the signal on which the above-described processing has been performed, an uplink channel such as a Physical Uplink Shared Channel (PUSCH) or a Physical Uplink Control Channel (PUCCH) and an uplink reference signal. The reception processing section 312 demodulates the reception signal by using a modulation scheme such as Binary Phase Shift Keying (BPSK) or Quadrature Phase Shift Keying (QPSK) for a modulation symbol of the uplink channel. The modulating method used for demodulation may be 16 Quadrature Amplitude Modulation (QAM), 64QAM, or 256QAM. At this time, signal points on the constellation do not necessarily have to be equidistant. The constellation may be a non uniform constellation (NUC). Then, the reception processing section 312 performs decoding processing on the demodulated coded bits of the uplink channel. The decoded uplink data and uplink control information are output to the control section 33.

The antenna 313 is an antenna apparatus that converts a current into a radio wave and converts a radio wave into a current. The antenna 313 may include one antenna element, for example, one patch antenna. The antenna 313 may include a plurality of antenna elements, for example, a plurality of patch antennas. In a case where the antenna 313 includes a plurality of antenna elements, the radio communication section 31 may include a beamforming function. For example, the radio communication section 31 may be configured to generate a directional beam by controlling the directivity of a radio signal using a plurality of antenna elements. The antenna 313 may be a dual polarized antenna. In a case where the antenna 313 is a dual polarized antenna, the radio communication section 31 may use a vertically polarized wave (V polarized wave) and a horizontally polarized wave (H polarized wave) (or the Dual polarized wave in the polarization directions of 45 degrees and -45 degrees from the vertical direction) when transmitting a radio signal. The radio communication section 31 may control the directivity of the radio signal to be transmitted using the vertically polarized wave and the horizontally polarized wave (or the Dual polarized wave in the polarization directions of 45 degrees and -45 degrees from the vertical direction). The radio communication section 31 may transmit and receive a spatially multiplexed signal via a plurality of layers including a plurality of antenna elements.

The storage section 32 is a storage apparatus capable of data reading and data writing, such as a DRAM, an SRAM, a flash memory, or a hard disk.

The control section 33 is a controller that controls each section of the base station 30. The control section 33 may be implemented by a processor such as a CPU or an MPU. For example, the control section 33 may be implemented by the processor executing various types of programs stored in the storage apparatus inside the base station 30 using the RAM or the like as a work area. Note that the control section 33 may be implemented by an integrated circuit such as an ASIC or an FPGA. The control section 33 may also be implemented by a GPU. Any of the CPU, the MPU, the ASIC, the FPGA, and the GPU can be regarded as a controller. Note that the control section 33 may include a plurality of physically separate objects. For example, the control section 33 may include a plurality of semiconductor chips.

Note that, in several embodiments, the base station 30 may include a set of a plurality of physical or logical apparatuses. By way of example, the base station 30 in the present embodiment may be classified into a plurality of apparatuses such as a Baseband Unit (BBU) and a Radio Unit (RU). The base station 30 may be interpreted as a set of the plurality of apparatuses. In addition, the base station may be one or both of the BBU and the RU. The BBU and the RU may be connected by a predetermined interface such as an enhanced Common Public Radio Interface (eCPRI).

The RU may be rephrased as a Remote Radio Unit (RRU) or a Radio DoT (RD). The RU may correspond to a gNB Distributed Unit (gNB-DU) described below. The BBU may correspond to a gNB Central Unit (gNB-CU) described below. The RU may be an apparatus formed integrally with an antenna. An antenna of the base station 30, for example, the antenna formed integrally with the RU may employ an Advanced Antenna System and support MIMO, for example, FD-MIMO or beamforming. The antenna of the base station 30 may include, for example, 64 transmission antenna ports and 64 reception antenna ports.

The antenna mounted on the RU may be an antenna panel including one or more antenna elements, and the RU may be equipped with one or more antenna panels. The RU may be equipped with two types of antenna panels, i.e., a horizontally-polarized antenna panel and a vertically-polarized antenna panel. The RU may be equipped with two types of antenna panels, that is, a right-hand circularly polarized antenna panel and a left-hand circularly polarized antenna panel, or an antenna panel having a polarization direction of 45 degrees and an antenna panel having a polarization direction of -45 degrees from the vertical direction. A plurality of antennas having a plurality of polarization directions may be mounted on one antenna panel. The RU may form and control an independent beam for each antenna panel.

A plurality of base stations 30 may be connected to one another. One or more base stations 30 may be included in a Radio Access Network (RAN). At this time, the base station 30 may be simply referred to as a RAN, a RAN node, an Access Network (AN), an AN node, or the like. The RAN in LTE may be referred to as an Enhanced Universal Terrestrial RAN (EUTRAN). The RAN in NR may be referred to as NGRAN. In addition, the RAN in 6G may be referred to as 6GRAN. The RAN in W-CDMA (UMTS) may be referred to as UTRAN.

The base station 30 in LTE may be referred to as an Evolved Node B (eNodeB) or an eNB. At this time, the EUTRAN includes one or more eNodeBs (eNBs). The base station 30 in NR may be referred to as gNodeB or gNB. At this time, the NGRAN includes one or more gNBs. The base station in 6G may be referred to as 6GNodeB, 6gNodeB, 6GNB, or 6gNB. At this time, the 6GRAN includes one or more 6GNBs. The EUTRAN may include a gNB (en-gNB) connected to a core network (EPC) in an LTE communication system (EPS). Similarly, the NGRAN may include an ng-eNB connected to a core network 5GC in a 5G communication system (5GS).

Note that in a case where the base station 30 is an eNB, a gNB, a 6GNB, or the like, the base station 30 may be referred to as 3GPP Access. In a case where the base station 30 is a radio Access Point, the base station 30 may be referred to as Non-3GPP Access. The base station 30 may be an optical extension apparatus referred to as a Remote Radio Head (RRH). In a case where the base station 30 is a gNB, the base station 30 may be a combination of the gNB-CU and the gNB-DU described above, or may be either the gNB-CU or the gNB-DU.

Here, for communication with a UE, the gNB-CU hosts a plurality of higher layers (for example, Radio Resource Control (RRC), a Service Data Adaptation Protocol (SDAP), and a Packet Data Convergence Protocol (PDCP)) in the Access Stratum. On the other hand, the gNB-DU hosts a plurality of lower layers (for example, Radio Link Control (RLC), Medium Access Control (MAC), and a Physical layer (PHY)) in the Access Stratum. That is, the gNB-CU may generate some of messages/pieces of information, described below, as RRC signaling (quasi-static notification), and the gNB-DU may generate the rest of the messages/pieces of information as MAC CEs or DCI (dynamic notification). In the RRC configurations (quasi-static notification), the gNB-DU may generate some of the configurations, for example, IE: cellGroupConfig, and the gNB-CU may generate the remaining configurations. These configurations may be transmitted and received over an F1 interface described below.

The base station 30 may be configured to be able to communicate with another base station. In a case where a plurality of base stations 30 are a combination of eNBs or a combination of an eNB and an en-gNB, the base stations 30 may be connected via an X2 interface. For example, in a case where the plurality of base stations 30 are a combination of gNBs or a combination of an gn-eNB and a gNB, the base stations 30 may be connected via an Xn interface. In a case where the plurality of base stations 30 are a combination of a gNB-CU and a gNB-DU, the base stations 30 may be connected via the F1 interface described above. The messages/pieces of information described below (e.g., RRC signaling, MAC Control Elements (CEs), Downlink Control Information (DCI), or the like) may be transmitted between the plurality of base stations 30, e.g., via the X2 interface, Xn interface, or F1 interface.

A cell provided by the base station 30 may be referred to as a Serving Cell. The concept of the serving cell includes a Primary Cell (PCell) and a Secondary Cell (SCell). In a case where dual connectivity is provided to the terminal apparatus 40, a PCell and zero or one or more SCells provided by a Master Node (MN) may be referred to as a Master Cell Group. Dual connectivity may be at least one of EUTRA-EUTRA Dual Connectivity, EUTRA-NR Dual Connectivity (ENDC), EUTRA-NR Dual Connectivity with 5GC, NR-EUTRA Dual Connectivity (NEDC), NR-NR Dual Connectivity, NR-6G Dual Connectivity, and 6G-NR Dual Connectivity. It is to be understood that dual connectivity is not limited to these.

The serving cell may include Primary Secondary Cell or a Primary SCG Cell (PSCell). In a case where dual connectivity is provided to the terminal apparatus 40, a PSCell provided by a Secondary Node (SN) and zero or one or more SCells may be referred to as a Secondary Cell Group (SCG). Unless a special configuration (for example, PUCCH on SCell) is provided, the physical uplink control channel (PUCCH) is transmitted by the PCell and the PSCell, but is not transmitted by the SCell. A Radio Link Failure is also detected by the PCell and the PSCell, but is not detected (may not need to be detected) by the SCell. As described above, the PCell and the PSCell have a special role in the serving cell, and thus are also referred to as Special Cells (SpCells).

One cell may be associated with one downlink component carrier and one uplink component carrier. A system bandwidth corresponding to one cell may be divided into a plurality of Bandwidth Parts (BWPs). At this time, one or more BWPs may be configured for the terminal apparatus 40, and one BWP may be used for the terminal apparatus 40 as an Active BWP. Radio resources, for example, a frequency band, numerology (subcarrier spacing), or a slot format (Slot configuration) that can be used by the terminal apparatus 40 may be different for each cell, each component carrier, or each BWP.

2-4. Configuration of Terminal Apparatus

Next, a configuration of the terminal apparatus 40 will be described.

The terminal apparatus 40 is a radio communication terminal (for example, a user equipment (UE)) that performs radio communication with another radio communication apparatus (for example, the base station 30 or another terminal apparatus 40). In a case where the imaging apparatus 50 includes a radio communication function, the terminal apparatus 40 may be configured to be capable of wirelessly communicating with the imaging apparatus 50.

Any type of information processing apparatus (computer) can be adopted as the terminal apparatus 40. For example, the terminal apparatus 40 may be a mobile terminal such as a mobile phone, a smart device (a smartphone or a tablet), a Personal Digital Assistant (PDA), or a notebook PC. The terminal apparatus 40 may also be a communication module that is connected to an information processing apparatus (for example, an imaging apparatus that does not include a radio communication function) and provides the information processing apparatus with a radio communication function. In addition, the terminal apparatus 40 may also be an imaging apparatus (for example, a camcorder) including a radio communication function.

The terminal apparatus 40 may be a motorcycle, a mobile relay car, or the like on which communication equipment such as a Field Pickup Unit (FPU) is mounted. The terminal apparatus 40 may also be a Machine to Machine (M2M) device or an Internet of Things (IoT) device. The terminal apparatus 40 may also be a wearable device such as a smart watch.

Note that the terminal apparatus 40 may be an Extended Reality (XR) device such as an Augmented Reality (AR) device, a Virtual Reality (VR) device, or a Mixed Reality (MR) device. At this time, the XR device may be a glasses-type device such as AR glasses or MR glasses, or may be a head-mounted device such as a VR head-mounted display. In a case where the terminal apparatus 40 is an XR device, the terminal apparatus 40 may be a stand-alone device including only a user-worn portion (for example, a glasses portion). The terminal apparatus 40 may also be a terminal linked device including a user-worn portion (for example, a glasses portion) and a terminal portion (for example, a smart device) linked to the user-worn portion.

Note that the terminal apparatus 40 may be capable of NOMA communication with the base station 30. The terminal apparatus 40 may also be able to use an automatic retransmission technology such as HARQ when communicating with the base station 30. The terminal apparatus 40 may be capable of sidelink communication with another terminal apparatus 40. The terminal apparatus 40 may also be able to use an automatic retransmission technology such as HARQ when performing sidelink communication. The terminal apparatus 40 may be capable of NOMA communication when performing sidelink communication with another terminal apparatus 40. The terminal apparatus 40 may be capable of LPWA communication with another radio communication apparatus such as the base station 30. The radio communication used by the terminal apparatus 40 may be radio communication using millimeter waves. Note that the radio communication (including sidelink communication) used by the terminal apparatus 40 may be radio communication using radio waves, or may be radio communication (that is, optical radio communication) using infrared rays or visible light.

The terminal apparatus 40 may be a movable radio communication apparatus, that is, mobile device. At this time, the terminal apparatus 40 may be a radio communication apparatus installed in a mobile body, or may be the mobile body itself. For example, the terminal apparatus 40 may be a vehicle that moves on a road, such as an automobile, a bus, a truck, or a motorcycle, a vehicle of a train that travels on a track, or a radio communication apparatus mounted on the vehicle. The mobile body may be a mobile terminal or a mobile body that moves on land (on the ground in a narrow sense), in the ground, on the water, or underwater. The mobile body may also be a mobile body that moves in the atmosphere, such as an aircraft, an airship, a balloon, or a helicopter, or may be a mobile body that moves in outer space, such as an artificial satellite. The mobile body may be an Unmanned Aerial Vehicle (UAV) such as a drone. In addition, the terminal apparatus 40 may be a radio communication apparatus mounted on the mobile body.

The terminal apparatus 40 can simultaneously connect to a plurality of base stations 30 or a plurality of cells for communication. For example, in a case where one base station 30 supports a communication area via a plurality of cells (for example, pCells or sCells), the base station 30 and the terminal apparatus 40 may communicate with each other by aggregating the plurality of cells by a Carrier Aggregation (CA) technology, a Dual Connectivity (DC) technology, a Multi-Connectivity (MC) technology, or the like. Alternatively, the terminal apparatus 40 and a plurality of base stations 30 may communicate with each other via cells of different base stations 30 by a Coordinated Multi-Point Transmission and Reception (CoMP) technology.

The terminal apparatus 40 may be a relay terminal that relays communication to a remote terminal.

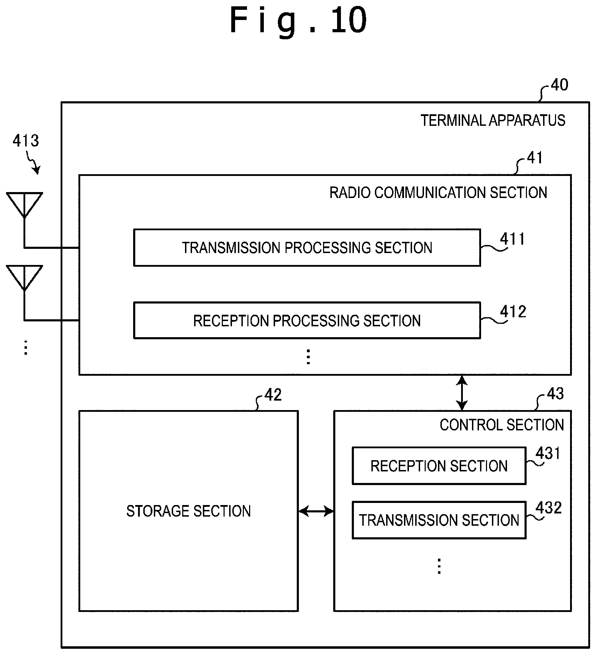

Fig. 10 is a diagram illustrating a configuration of the terminal apparatus 40 according to the present embodiment. The terminal apparatus 40 includes a radio communication section 41, a storage section 42, and a control section 43. Note that the configuration illustrated in Fig. 10 is a functional configuration and may be different from a hardware configuration. The functions of the terminal apparatus 40 may also be distributively implemented in a plurality of physically separate configurations.

The radio communication section 41 is a signal processing section for performing radio communication with another radio communication apparatus (for example, the base station 30, or another terminal apparatus 40). The radio communication section 41 is controlled by the control section 43. The radio communication section 41 supports one or more radio access schemes. For example, the radio communication section 41 may support at least one of NR, LTE, or 6G. The radio communication section 41 may support W-CDMA and/or cdma 2000 in addition to NR, LTE, and 6G. The radio communication section 41 may also support an automatic retransmission technology such as Hybrid Automatic Repeat reQuest (HARQ).

The radio communication section 41 includes a transmission processing section 411, a reception processing section 412, and an antenna 413. The radio communication section 41 may include a plurality of transmission processing sections 411, a plurality of reception processing sections 412, and a plurality of antennas 413. In a case where the radio communication section 41 supports a plurality of radio access schemes, each section of the radio communication section 41 may be individually configured for each radio access scheme. For example, the transmission processing section 411 and the reception processing section 412 may be individually configured for each of LTE, NR, and 6G. The antenna 413 may include a plurality of antenna elements (for example, a plurality of patch antennas). The radio communication section 41 may include a beamforming function. For example, the radio communication section 41 may include a polarization beamforming function using a vertically polarized wave (V polarized wave) and a horizontally polarized wave (H polarized wave) (or a polarization beamforming function using the Dual polarized wave in the polarization directions of 45 degrees and -45 degrees from the vertical direction). The antenna 413 may not need to be a part of the terminal apparatus 40 or the radio communication section 41. For example, the antenna 413 may not be included in the radio communication section 41, and may be installed as an external antenna or the like.

The storage section 42 is a storage apparatus capable of reading and writing data, such as a DRAM, an SRAM, a flash memory, or a hard disk.

The control section 43 is a controller that controls each section of the terminal apparatus 40. The control section 43 may be implemented by, for example, a processor such as a CPU or an MPU. For example, the control section 43 may be implemented by the processor executing various types of programs stored in the storage apparatus inside the terminal apparatus 40 using a RAM or the like as a work area. The control section 43 may be implemented by an integrated circuit such as an ASIC or an FPGA. The control section 43 may also be implemented by a GPU. Any of the CPU, the MPU, the ASIC, the FPGA, and the GPU can be regarded as a controller. Note that the control section 43 may include a plurality of physically separate objects. For example, the control section 43 may include a plurality of semiconductor chips.

The control section 43 includes at least one of the blocks of a reception section 431 and a transmission section 432. Each of the blocks (the reception section 431 and the transmission section 432) constituting the control section 43 is a functional block indicating a function of the control section 43. The functional blocks may be software blocks or hardware blocks. For example, each of the above-described functional blocks may be one software module implemented by software (including a microprogram) or may be one circuit block on a semiconductor chip (die). It is to be understood that each functional block may be one processor or one integrated circuit. The control section 43 may include functional units different from the above-described functional blocks. The method of configuring the functional blocks is arbitrary. The operation of each functional block of the control section 43 may be the same as the operation of each functional block of the imaging apparatus 50 described below.

2-5. Configuration of Imaging Apparatus

Next, a configuration of the imaging apparatus 50 will be described.

The imaging apparatus 50 is an information processing apparatus (computer) including an imaging function. For example, the imaging apparatus 50 may be a camera for business use or a general-purpose camera. The imaging apparatus 50 may be an integrated imaging apparatus in which a camera and an encoder are integrated, or may be a separate imaging apparatus in which a camera and an encoder are separated. In a case where the imaging apparatus 50 is a separate type imaging apparatus, only a camera portion may be regarded as the imaging apparatus 50, or a set of a camera and an encoder may be regarded as the imaging apparatus 50.

The imaging apparatus 50 may include a radio communication function. In this case, the imaging apparatus 50 can be regarded as a type of the terminal apparatus 40. The imaging apparatus 50 including the radio communication function can be referred to as a wireless camera. In a case where the imaging apparatus 50 includes a radio communication function, the imaging apparatus 50 may directly connect to a wireless network using the radio communication function. Note that the imaging apparatus 50 can also be indirectly connected to the wireless network via another apparatus (for example, the terminal apparatus 40) including a radio communication function. In this case, the imaging apparatus 50 does not necessarily have to include a radio communication function. In addition, in a case where a part of the function of the camera (for example, an encoder) is an apparatus separate from the imaging apparatus 50, the imaging apparatus 50 may be indirectly connected to the terminal apparatus 40 via the separate apparatus. In this case, the imaging apparatus 50 may be indirectly connected to the wireless network via the separate apparatus and the terminal apparatus 40.

The imaging apparatus 50 is installed in, for example, an image capturing venue (for example, a sports facility or an event venue), and transmits captured data (for example, a sports video or an event video) to the information processing apparatus 10 via a wireless network.

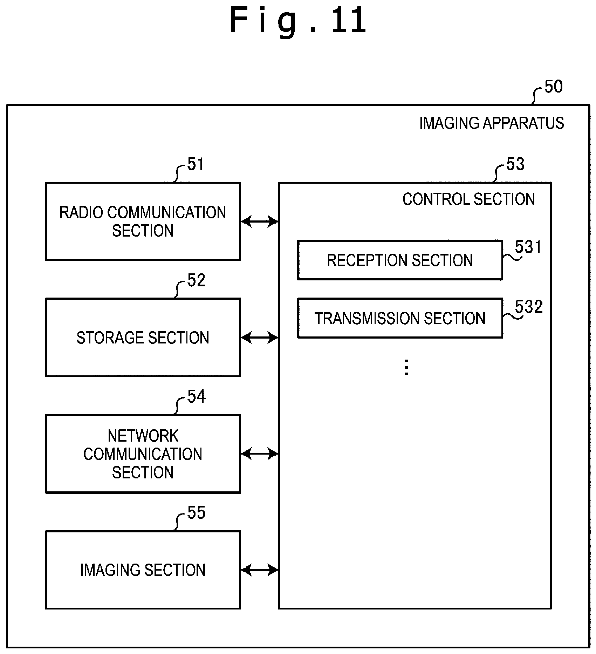

Fig. 11 is a diagram illustrating a configuration example of the imaging apparatus 50 according to an embodiment of the present disclosure. The imaging apparatus 50 includes a radio communication section 51, a storage section 52, a control section 53, a network communication section 54, and an imaging section 55. Note that the configuration illustrated in Fig. 11 is a functional configuration and may be different from a hardware configuration. In addition, the functions of the imaging apparatus 50 may also be distributively implemented in a plurality of physically separate configurations.

The radio communication section 51 is a signal processing section for performing radio communication with other radio communication apparatuses (for example, the base station 30, the terminal apparatus 40, and another imaging apparatus 50). The radio communication section 51 operates according to the control of the control section 53. The configuration of the radio communication section 51 may be similar to that of the radio communication section 31 of the base station 30.

The storage section 52 is a storage apparatus capable of reading and writing data, such as a DRAM, an SRAM, a flash memory, or a hard disk. The storage section 42 stores captured data (for example, video data) captured by the imaging section 55. Note that the captured data may include not only video data but also audio data and/or metadata. The captured data is not limited to video data. The captured data may include still image data. Note that the captured data may be in a file format. In this case, the storage section 52 may store a plurality of files having different resolutions. For example, the file recorded in the storage section 52 may be at least one of a standard resolution file (for example, a file for real-time broadcasting/real-time distribution) in which images of a standard resolution are recorded and a high resolution file (for example, an editing file for replay or highlight creation) in which images having a resolution higher than the standard resolution are recorded.

In addition, the file recorded in the storage section 52 may be configured to allow the type of the captured data to be identified. For example, the file recorded in the storage section 42 may be given identification information for identifying the type of the captured data (for example, on-air, next, and the like). At this time, the file recorded in the storage section 52 may be at least one of a file in which an on-air video is recorded, a file in which a next video is recorded, and a file in which another live video that is neither on-air nor next is recorded. Here, the on-air video is a video currently being broadcast/distributed (for example, being distributed live), and the next video is a video to be on the air next. The imaging apparatus 50 may acquire information for identifying the type of the captured data from, for example, the information processing apparatus 10 (for example, the switcher). The information for identifying the type of the captured data is, for example, the first control information included in the tally signal.

The control section 53 is a controller that controls each section of the imaging apparatus 50. The control section 53 may be implemented by a processor such as a CPU or an MPU. For example, the control section 53 may be implemented by the processor executing various types of programs stored in the storage apparatus inside the imaging apparatus 50 using a RAM or the like as a work area. The control section 53 may be implemented by an integrated circuit such as an ASIC or an FPGA. The control section 53 may also be implemented by a GPU. Any of the CPU, the MPU, the ASIC, the FPGA, and the GPU can be regarded as a controller. Note that the control section 53 may include a plurality of physically separate objects. For example, the control section 53 may include a plurality of semiconductor chips.

The control section 53 includes at least one of the blocks of a reception section 531 and a transmission section 532. Each of the blocks (the reception section 531 and the transmission section 532) constituting the control section 53 is a functional block indicating a function of the control section 53. The functional blocks may be software blocks or hardware blocks. For example, each of the above-described functional blocks may be one software module implemented by software (including a microprogram) or may be one circuit block on a semiconductor chip (die). It is to be understood that each functional block may be one processor or one integrated circuit. The control section 53 may include functional units different from the above-described functional blocks. The method of configuring the functional blocks is arbitrary. The operation of each functional block of the control section 53 may be the same as the operation of each functional block of the imaging apparatus 50 described below.

The network communication section 54 is a communication interface for communicating with other apparatuses. For example, the network communication section 54 is a LAN interface such as an NIC. The network communication section 54 may be a wired interface or a wireless interface. The network communication section 54 communicates with other apparatuses according to the control of the control section 53.

The imaging section 55 is a conversion section that converts an optical image into an electrical signal. The imaging section 55 includes, for example, an image sensor, a signal processing circuit that processes an analog pixel signal output from the image sensor, and the like. The imaging section 55 converts light entering from the lens into digital data (image data). Note that the image captured by the imaging section 55 is not limited to a video, and may be a still image.

2-6 Network Architecture

A network architecture defined by 3GPP (trade name) may be applied to the core network CN of the image capturing system 1. Hereinafter, as an example of the architecture of the core network CN, a network architecture of a fifth generation mobile communications system (5G) will be described.

The network architecture applied to the image capturing system 1 is not limited to the network architecture of the 5G. For example, the network architecture applied to the image capturing system 1 may be a network architecture of the fourth generation mobile communications system (4G) or a network architecture of the sixth generation mobile communications system (6G). It is to be understood that the network architecture applied to the image capturing system 1 may be a network architecture other than those described above.

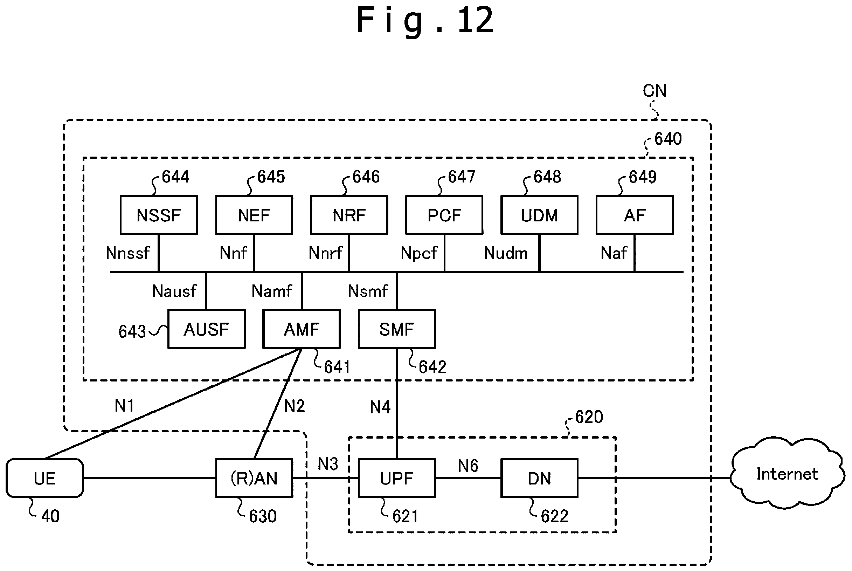

Fig. 12 is a diagram illustrating an example of a network architecture of 5G. The 5G core network CN is also referred to as a 5G Core (5GC)/Next Generation Core (NGC). Hereinafter, the core network CN in 5G is also referred to as 5GC/NGC. The core network CN is connected to a User Equipment (UE) 40 via a (R)AN430. The UE 40 is, for example, the terminal apparatus 40. In a case where the imaging apparatus 50 includes a radio communication function, the UE 40 may be the imaging apparatus 50.

The (R)AN 630 includes a function of enabling connection to a Radio Access Network (RAN) and connection to an Access Network (AN) other than the RAN. The (R)AN 630 includes base stations referred to as gNBs or ng-eNBs.

The core network CN mainly performs connection permission and session management when the UE 40 connects to the network. The core network CN includes a user plane function group 620 and a control plane function group 640.

The user plane function group 620 includes a User Plane Function (UPF) 621 and a Data Network (DN) 622. The UPF 621 includes a function of user plane processing. The UPF 621 includes a routing/forwarding function for data handled in the user plane. A DN 622 may have the capability of providing connectivity to an operator's own services, such as a Mobile Network Operator (MNO), providing Internet connectivity, or providing connectivity to third party services. In this way, the user plane function group 620 plays a role of a Gateway that serves as a boundary between the core network CN and the Internet.

The control plane function group 640 includes an Access Management Function (AMF) 641, a Session Management Function (SMF) 642, an Authentication Server Function (AUSF) 643, a Network Slice Selection Function (NSSF) 644, a Network Exposure Function (NEF) 645, a Network Repository Function (NRF) 646, a Policy Control Function (PCF) 647, a Unified Data Management (UDM) 648, and an Application Function (AF) 649.

The AMF 641 includes functions such as registration processing, connection management, and mobility management for the UE 40. The SMF 642 includes functions such as session management, IP allocation and management for the UE 40, and the like. The AUSF 643 includes an authenticating function. The NSSF 644 includes a function related to selection of a network slice. The NEF 645 has the function of providing network function capabilities and events to a third party, the AF 649 and an edge computing function.

The NRF 646 includes functions of discovering network functions and holding profiles of the network functions.

The PCF 647 includes a function of policy control. The UDM 648 includes the functions of generating 3GPP AKA credential and processing the user ID. The AF 649 includes functions of providing services by interacting with the core network.

For example, the control plane function group 640 acquires information from the UDM 648 in which subscriber information of the UE 40 is stored, and determines whether the UE 40 is allowed to connect to the network. The control plane function group 640 uses, for the determination, contract information of the UE 40 and a key for encryption that are included in the information acquired from the UDM 648. In addition, the control plane function group 640 performs generation of a key for encryption, and the like.

In other words, the control plane function group 640 determines whether to allow connection to the network depending on whether information of the UE 40 associated with a subscriber number referred to as an International Mobile Subscriber Identity (IMSI) is stored in the UDM 648, for example. Note that the IMSI is stored in, for example, a Subscriber Identity Module (SIM) card in the UE 40.

Here, Namf is a Service-based interface provided by the AMF 641, and Nsmf is a service-based interface provided by the SMF 642. In addition, Nnef is a service-based interface provided by the NEF 645, and Npcf is a service-based interface provided by the PCF 647. Nudm is a service-based interface provided by the UDM 648, and Naf is a service-based interface provided by the AF 649. Nnrf is a service-based interface provided by the NRF 646, and Nnssf is a service-based interface provided by the NSSF 644. Nausf is a service-based interface provided by the AUSF 643. Each of these Network Functions (NFs) exchanges information with other NFs via each service-based interface.

In addition, N1 illustrated in Fig. 12 is a reference point between the UE 40 and the AMF 641, and N2 is a reference point between the RAN/AN 630 and the AMF 641. N4 is a reference point between the SMF 642 and the UPF 621, and information is exchanged between these Network Functions (NFs).

The core network CN is provided with an interface for transmitting information and controlling functions via an Application Programming Interface (API) referred to as a service-based interface is prepared.

The API designates a resource and enables, for the resource, GET (acquisition of a resource), POST (creation of a resource, addition of data), PUT (creation of a resource, update of a resource), DELETE (deletion of a resource), and the like. Such functions are generally used in the technical field related to the Web, for example.

For example, the AMF 641, the SMF 642, and the UDM 648 illustrated in Fig. 12 exchange information with each other using the API when establishing a communication session. In the known art, such an API is not assumed to be used by an application (for example, AF 649). However, when using such an API, the AF 649 can use information of the 5G cellular network, and the function of the application can be further advanced.

2-7. RAN Architecture

An O-RAN (Open Radio Access Network) architecture defined by the O-RAN Alliance may be applied to a Radio Access Network (RAN) of the image capturing system 1. Hereinafter, the O-RAN architecture will be described as an example of the architecture of the RAN of the image capturing system 1.

The RAN architecture applied to the image capturing system 1 is not limited to the O-RAN architecture. For example, the RAN architecture applied to the image capturing system 1 may be a RAN architecture defined by the xRAN Forum or a RAN architecture defined by the C-RAN Alliance. It is to be understood that the RAN architecture applied to the image capturing system 1 may be a RAN architecture other than those described above.

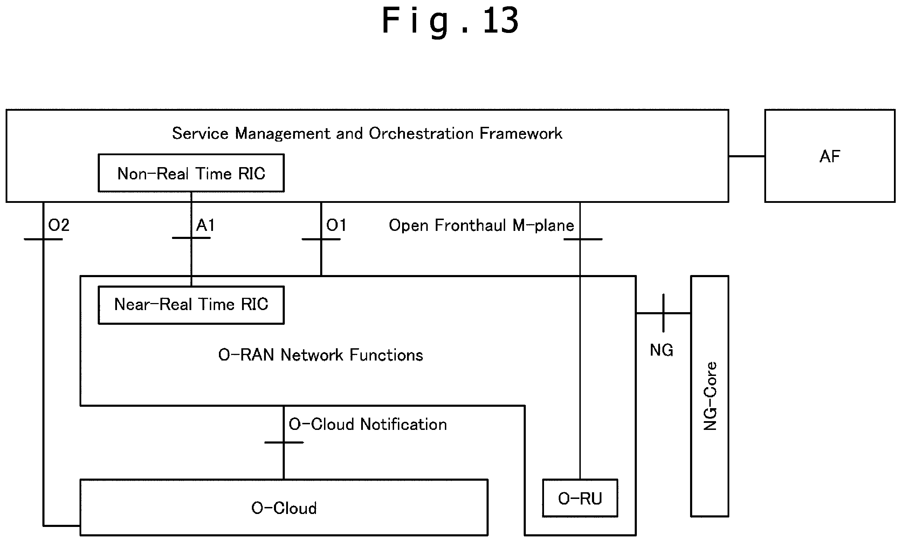

Fig. 13 is a diagram illustrating an example of a RAN architecture applied to the image capturing system 1. Specifically, Fig. 13 is a diagram illustrating an O-RAN architecture defined by the O-RAN Alliance.

In the O-RAN, a RAN Intelligent Controller (RIC) is defined as a control section responsible for making the RAN function intelligent. The RIC includes two types of RIC having different control cycles, namely, Non-Real Time RIC (hereinafter also referred to as Non-RT RIC) and Near-Real Time RIC (hereinafter also referred to as Near-RT RIC).

The Non-RT RIC is an RIC responsible for policy generation, notification, control, and the like related to control of the RAN. The Non-RT RIC operates at a longer cycle than the control cycle of the Near-RT RIC. The Non-RT RIC is arranged inside a Service Management and Orchestration (SMO) that performs maintenance and orchestration of the RAN.

The Near-RT RIC is an RIC that performs processing related to a network function of the O-RAN (for example, at least one of an O-RAN Central Unit Control Plane (O-CU-CP), an O-RAN Central Unit User Plane (O-CU-UP), an O-RAN Distributed Unit Control Plane (O-DU), and an O-RAN Radio Unit (O-RU)). The Near-RT RIC collects information from the network functions of the O-RAN. Then, the Near-RT RIC controls the network function of the O-RAN according to the policy notified from the Non-RT RIC via an A1 interface. The network function of the O-RAN is connected to an NG-Core via an NG interface. The NG-Core is, for example, the 5GC (5G Core).

The SMO may control not only a Network Function (NF) such as the O-CU and the O-DU but also Cloud. For example, an interface (O2 interface) with an external network may be provided in the SMO. The SMO may then control the O-Cloud via the O2 interface. The O-Cloud is a virtualization infrastructure that provides virtual resources to NF Deployment that defines virtual resources for a vRAN application. The SMO may be connected to an O-RAN Radio Unit (O-RU) and perform management such as maintenance or monitoring of the O-RU. The SMO can also operate in cooperation with other domains. For example, the SMO may operate in cooperation with the Application Function (AF).

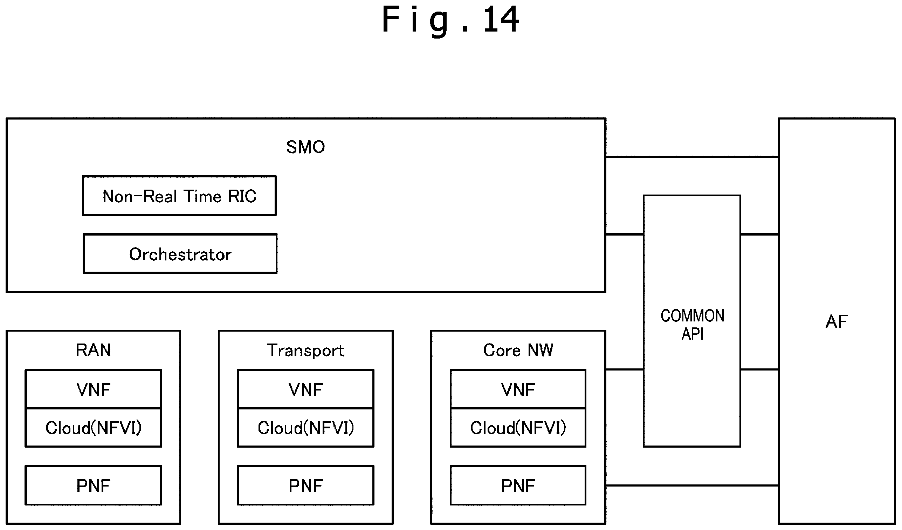

Note that the RAN architecture applied to the image capturing system 1 is not limited to the architecture illustrated in Fig. 13. For example, the RAN architecture applied to the image capturing system 1 may be the RAN architecture illustrated in Fig. 14. Fig. 14 is a diagram illustrating another example of the RAN architecture applied to the image capturing system 1.

In the SMO, a network function may be present that manages a domain (for example, a core network and/or Transport) other than the RAN. In the figure, VNF stands for a Virtual Network Function, and PNF stands for a Physical Network Function. In addition, an NFV Infrastructure (NFVI) is an infrastructure (for example, physical resources and virtualization functions) for executing Network Functions Virtualization (VNF).

As illustrated in Fig. 14, the Application Function (AF) may be connected to the SMO and the core network through a common API.

## 3. Specific Configuration Example of Image Capturing System

The configuration of the image capturing system 1 has been described above, and a specific configuration example of the image capturing system 1 will be described before operation of the image capturing system 1 is described. Note that the configuration of the image capturing system 1 is not limited to the configuration described below.

### 3-1. Configuration Example 1

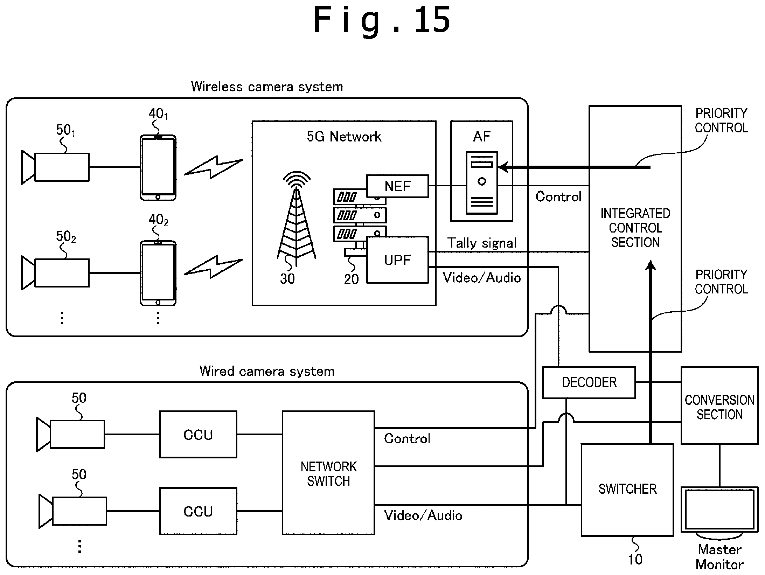

Fig. 15 is a diagram illustrating a configuration of the image capturing system 1 according to Configuration Example 1. The image capturing system 1 according to Configuration Example 1 includes a wireless camera system, a wired camera system, an integrated control section, the information processing apparatus 10 (switcher), a decoder, a conversion section, and a display (master monitor).

The wireless camera system includes the imaging apparatus 50, the terminal apparatus 40, a 5G network, and the Application Function (AF). The 5G network includes the base station 30 and the management apparatus 20. In the wireless camera system, the imaging apparatus 50 is wirelessly connected to the information processing apparatus 10 via a 5G network. In the example of Fig. 15, the imaging apparatus 50 is connected to the 5G network via the terminal apparatus 40. However, in a case where the imaging apparatus 50 includes a radio communication function, the imaging apparatus 50 may be directly connected to the 5G network. In addition, in a case where a part of the function of the camera (for example, an encoder) is an apparatus separate from the imaging apparatus 50, the imaging apparatus 50 may be connected to the 5G network via the separate apparatus in addition to the terminal apparatus 40.

The 5G network is not limited to a 5G network constructed as a Stand Alone (SA), and may be, for example, a 5G network constructed as a Non-Stand Alone (NSA) .

The wired camera system includes the imaging apparatus 50, a Camera Control Unit (CCU), a network switch, and the AF. In the wired camera system, the imaging apparatus 50 is connected to the information processing apparatus 10 in a wired manner via the Camera Control Unit (CCU) and the network switch.

A video captured by the imaging apparatus 50 is input to the conversion section via the decoder. A video signal obtained by decoding by the decoder is converted by the conversion section, and the resultant signal is output to the display (the master monitor in the example of Fig. 15).

The information processing apparatus 10 (the switcher in the example of Fig. 15) controls one or more imaging apparatuses 50 connected in a wired manner and one or more imaging apparatuses 50 connected in a wireless manner via the integrated control section. For example, the information processing apparatus 10 transmits a tally signal to the one or more imaging apparatuses 50 connected in a wired or wireless manner. The tally signal may be transmitted via the UPF included in the core network of the 5G network. The information processing apparatus 10 transmits information (tally information) for priority control of radio resources to the AF via the integrated control section. The AF performs priority control of radio resources via the NEF included in the core network of the 5G network. For example, the AF configures a 5G QoS Identifier (5QI).

### 3-2. Configuration Example 2

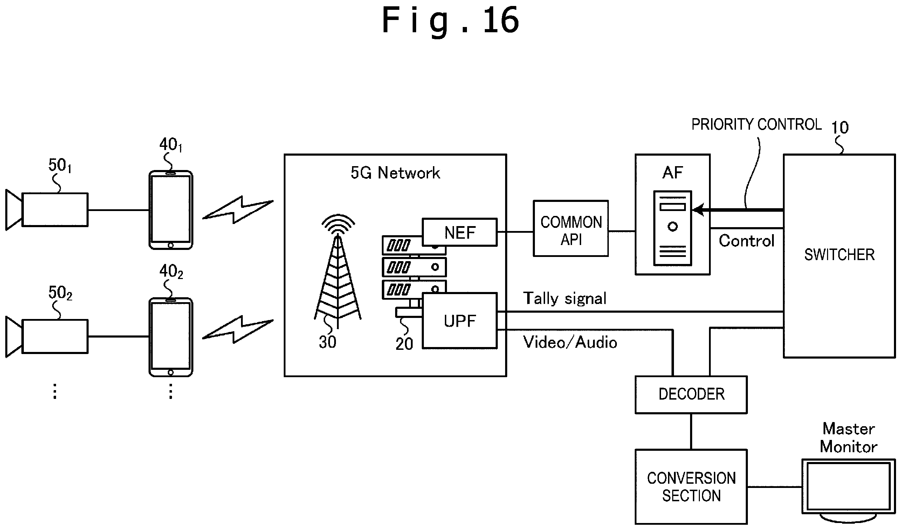

Fig. 16 is a diagram illustrating a configuration of the image capturing system 1 according to Configuration Example 2. The image capturing system 1 according to Configuration Example 2 includes the imaging apparatus 50, the terminal apparatus 40, the 5G network, the Application Function (AF), the information processing apparatus 10 (switcher), the decoder, the conversion section, and the display (master monitor). The 5G network includes the base station 30 and the management apparatus 20. Note that, in Configuration Example 2, the image capturing system 1 does not include the wired camera system or the integrated control section. However, the image capturing system 1 of Configuration Example 2 may also include the wired camera system and the integrated control section, similarly to the image capturing system 1 of Configuration Example 1.

In the example of Fig. 16, the AF and the 5G network are connected via a common Application Programming Interface (API). The common API is an interface that enables a function to be used without a difference caused by implementation dependency. The common API may be implemented in the core network. The common API may be constructed on a server (for example, a Multi-access Edge Computing (MEC) server) that can be connected to the core network or on a cloud platform. The shared API can be rephrased as shared API software, a service API, service API software, a format conversion section, or the like.

3-3. Configuration Example 3

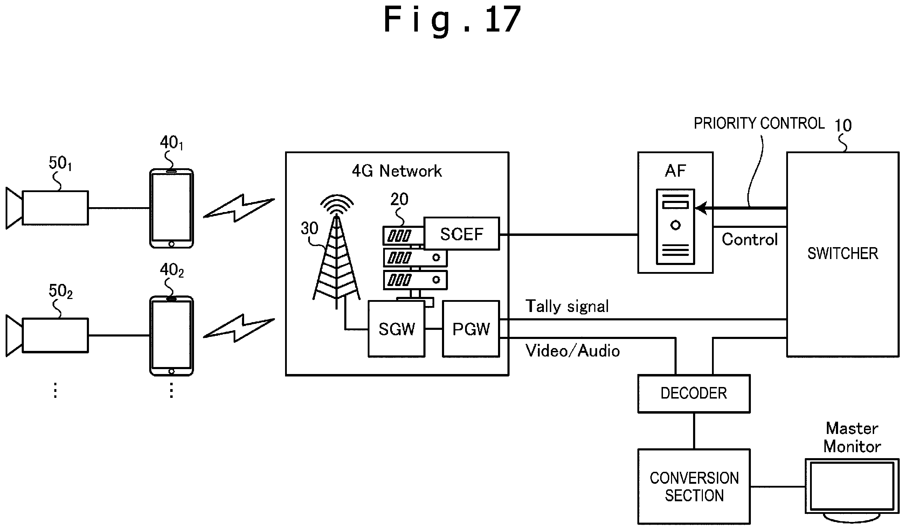

Fig. 17 is a diagram illustrating a configuration of the image capturing system 1 according to Configuration Example 3. The image capturing system 1 according to Configuration Example 3 includes the imaging apparatus 50, the terminal apparatus 40, a 4G network, the AF, the information processing apparatus 10 (switcher), the decoder, the conversion section, and the display (master monitor). Note that, in Configuration Example 3, the image capturing system 1 does not include the wired camera system or the integrated control section. However, the image capturing system 1 of Configuration Example 3 may also include the wired camera system and the integrated control section, similarly to the image capturing system 1 of Configuration Example 1.

The 4G network may be a pure 4G network or a 5G network constructed as a Non-Stand Alone (NSA) network. In the 4G network, the core network is not the UPF but is a network terminated at a Packet data network Gateway (PGW)/Serving Gateway (SGW). In addition, in the 4G network, the NEF is a Service Capability Exposure Function (SCEF). Further, the control target of the AF is not the 5QI but a QoS Class Identifier (QCI).

3-4. Configuration Example 4

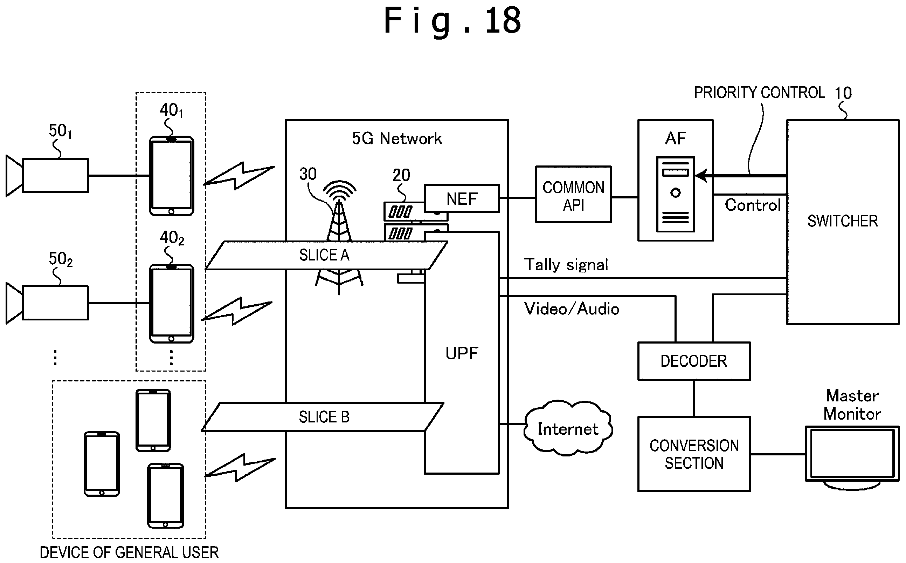

Fig. 18 is a diagram illustrating a configuration of the image capturing system 1 according to Configuration Example 4. The image capturing system 1 according to Configuration Example 4 includes the imaging apparatus 50, the terminal apparatus 40, the 5G network, the Application Function (AF), the information processing apparatus 10 (switcher), the decoder, the conversion section, and the display (master monitor). Note that, in Configuration Example 4, the image capturing system 1 does not include the wired camera system or the integrated control section. However, the image capturing system 1 of Configuration Example 4 may also include the wired camera system and the integrated control section, similarly to the image capturing system 1 of Configuration Example 1.

In Configuration Example 4, a plurality of slices (in the example of Fig. 18, a slice A and a slice B) are constructed between a device such as the terminal apparatus 40 and the UPF (or a N6 that corresponds to a termination of a Data Network (DN)). The slice A is a slice for the image capturing system 1 (for example, for a video transmission system). The slice B is a slice for general users (for example, users other than the user of the image capturing system 1). The imaging apparatus 50 (or the terminal apparatus 40) transmits captured data using the slice A. A device of general users (for example, users other than that of the image capturing system 1) is connected, by using the slice B, to a network (for example, the Internet or a public network) corresponding to each purpose. In Configuration Example 4, the control target of the information processing apparatus 10 (or AF) is the slice A.

Note that the slice to be controlled is not limited to the slice for the video transmission system. For example, the slice to be controlled may be the slice for video. In addition, slices having different characteristics may be prepared for each traffic type required by the image capturing system 1.

3-5. Configuration Example 5

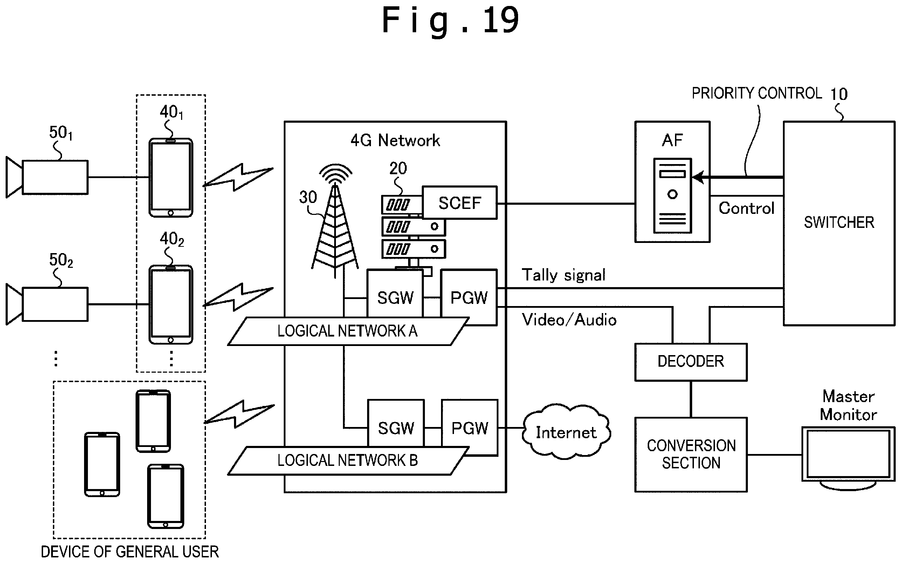

Fig. 19 is a diagram illustrating a configuration of the image capturing system 1 according to Configuration Example 5. The image capturing system 1 according to Configuration Example 5 includes the imaging apparatus 50, the terminal apparatus 40, the 4G network, the Application Function (AF), the information processing apparatus 10 (switcher), the decoder, the conversion section, and the display (master monitor). Note that, in Configuration Example 5, the image capturing system 1 does not include the wired camera system or the integrated control section. However, the image capturing system 1 of Configuration Example 5 may also include the wired camera system and the integrated control section, similarly to the image capturing system 1 of Configuration Example 1.

In a case where the cellular network is a 4G network, a plurality of logical networks may be constructed using Dedicated Core Networks (DECOREs). In Configuration Example 5, a plurality of logical networks (a logical network A and a logical network B in the example of Fig. 18) are constructed between a device such as the terminal apparatus 40 and the PGW. The logical network A is a logical network for the image capturing system 1 (for example, for a video transmission system). The logical network B is a logical network for general users (for example, users other than the user of the image capturing system 1). The imaging apparatus 50 (or the terminal apparatus 40) transmits the captured data using the logical network A. Devices of general users (for example, users other than that of the image capturing system 1) use the logical network B to connect to networks (for example, the Internet or a public network) according to the purposes of the users. In Configuration Example 5, the control target of the information processing apparatus 10 (or AF) is the logical network A.

4. Operation of Image Capturing System

Based on the above, the operation of the image capturing system 1 will be described. In the following description, the information processing apparatus 10 is assumed to be a switcher, but the information processing apparatus 10 is not limited to the switcher.

4-1. Embodiment 1

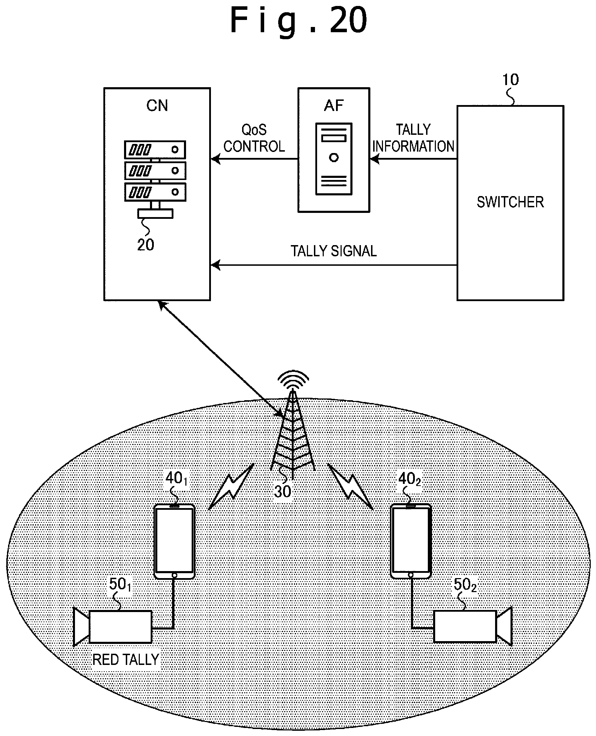

First, operation of the image capturing system 1 according to Embodiment 1 will be described. Fig. 20 is a diagram for describing the operation of the image capturing system 1 according to Embodiment 1. In Embodiment 1, description will be given of the operation of the image capturing system 1 in a case where the same cell contains the imaging apparatus $50_1$ designated by a tally signal as a camera related to predetermined processing (or the terminal apparatus $40_1$ connected to the imaging apparatus $50_1$) and the imaging apparatus $50_2$ not designated by the tally signal as the camera related to predetermined processing (or the terminal apparatus $40_2$ connected to the imaging apparatus $50_2$). Note that processing according to Embodiment 1 is applicable not only to a single-cell environment but also to a multi-cell environment. In this case, the processing according to Embodiment 1 described below is applicable to each cell.

Note that the imaging apparatus 50 may be directly connected to a wireless network or may be indirectly connected to the wireless network via, for example, the terminal apparatus 40. In the following description, the terminal apparatus 40 that is directly or indirectly connected to the imaging apparatus 50 and transmits captured data to another apparatus via the wireless network may also be referred to as the imaging apparatus 50. The "imaging apparatus 50" appearing in the following description can be replaced with the "terminal apparatus 40" or the "imaging apparatus 50 or terminal apparatus 40 connected to imaging apparatus 50". Similarly, the "imaging apparatus $50_X$" described below can be replaced with the "terminal apparatus $40_X$" or the "imaging apparatus $50_X$ or terminal apparatus $40_X$ connected to the imaging apparatus $50_X$". Here, X is an arbitrary integer (1, 2, 3, ...).

Transmission of Tally Signal

First, the first transmission section 131 of the information processing apparatus 10 transmits a tally signal to the imaging apparatus 50. The tally signal is a control signal transmitted from the information processing apparatus 10 to the imaging apparatus 50. For example, the tally signal is a control signal including information (first control information) for designating one or more imaging apparatuses 50 among the two or more imaging apparatuses 50 as cameras related to predetermined processing. Alternatively, the tally signal is a control signal to which a role as the first control information is assigned. The tally signal may be regarded as the first control information itself. In general, the tally signal is a signal including information regarding lighting/non-lighting of the tally lamp and/or information regarding the color of the tally lamp. A TSL UMD protocol is typically used for transmission of the tally signal. Note that the tally signal generally does not include the identification information of the camera, but the tally signal of the present embodiment may include the identification information of the imaging apparatus 50. The information processing apparatus 10 may transmit text information to the display and/or another broadcasting/distribution facility (server) so that the imaging apparatus 50 that has captured the video can be identified. By transmitting the tally signal, the information processing apparatus 10 designates, for example, one or more imaging apparatuses 50 among the two or more imaging apparatuses 50 as cameras (for example, cameras that capture videos to be broadcast/distributed) related to predetermined processing.

Transmission of Tally Information

The second transmission section 132 of the information processing apparatus 10 transmits tally information to the Application Function (AF). The tally information is information (second control information) for preferentially allocating a radio resource to the imaging apparatus 50 according to the designation. The second control information is control information associated with the tally signal (first control information). The content of the second control information may be the same as the content of the first control information. The information processing apparatus 10 may transmit the second control information to the network apparatus as a tally signal together with the first control information. The information processing apparatus 10 may also transmit the second control information to the network apparatus separately from the tally signal.

The network apparatus is an apparatus that performs processing related to allocation of radio resources. For example, the network apparatus is an apparatus constituting the wireless network. For example, the network apparatus may be an apparatus (for example, the management apparatus 20) constituting a core network, or may be an apparatus (for example, the base station 30) constituting a radio access network. The network apparatus may be an apparatus including a function as an AF (for example, the management apparatus 20 or another information processing apparatus 10).

The tally information (second control information) is associated with the tally signal (first control information). That is, the information processing apparatus 10 designates the imaging apparatus 50 designated by the first control information as the imaging apparatus 50 based on the priority control. As described above, in the first embodiment, the imaging apparatus $50_1$ is designated as a camera related to the predetermined processing, and the imaging apparatus $50_2$ is not designated as a camera related to the predetermined processing. In this case, the information processing apparatus 10 generates tally information (second control information) for preferentially allocating a radio resource to the imaging apparatus $50_1$. The tally information (second control information) may be control information for preferentially allocating a radio resource to the imaging apparatus $50_1$ in preference to the imaging apparatus $50_2$ in a case where the imaging apparatus $50_1$ and the imaging apparatus $50_2$ exist in the same cell. Then, the information processing apparatus 10 transmits the generated tally information (second control information) to the network apparatus (for example, the AF) .

Identification of Imaging Apparatus as Priority Control Target

In transmitting a tally signal/tally information, the information processing apparatus 10 needs to identify which apparatus on the network is the imaging apparatus 50 being the priority control target.

Thus, the information processing apparatus 10 may hold information for associating identification information (hereinafter referred to as first identification information) of the imaging apparatus 50 on the system with identification information (hereinafter referred to as second identification information) of the imaging apparatus 50 on the network. Here, the first identification information is, for example, an ID corresponding to a transmission destination of the tally signal. The second identification information is, for example, identification information of the imaging apparatus 50 on the cellular network. For example, the second identification information is identification information of the UE/SIM. The information processing apparatus 10 may specify the imaging apparatus 50 to be subjected to priority control based on the association information.

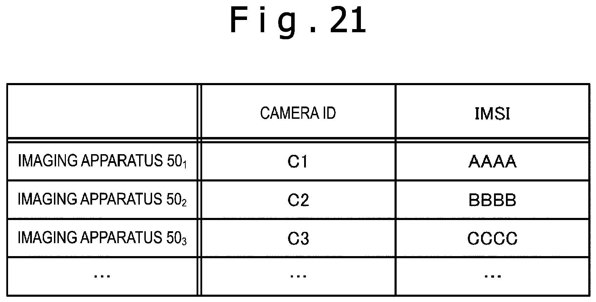

Fig. 21 is a diagram illustrating an example of association information that associates the first identification information with the second identification information. In the figure, the camera ID is the first identification information, and the IMSI is the second identification information. The International Mobile Subscription Identity (IMSI) is identification information contained in the Subscriber Identity Module (SIM) of the imaging apparatus 50 or the terminal apparatus 40.

Note that the first identification information is not necessarily a camera ID. The information processing apparatus 10 may use an ID corresponding to a connection environment, such as a session ID, for transmission of the tally signal. The second identification information is not limited to the IMSI. The second identification information may be an International Mobile Equipment Identifier (IMEI) held by the imaging apparatus 50 or the terminal apparatus 40, or may be a Media Access Control (MAC) address. The second identification information may be an IP address used for connection to the cellular network.

The information processing apparatus 10 may not need to hold the association information between the first identification information and the second identification information. For example, the information processing apparatus 10 may acquire, from the Application Function (AF), information regarding a cell to which each imaging apparatus 50 is connected. The information processing apparatus 10 may specify the imaging apparatus 50 to be subjected to priority control based on information acquired from the AF.

The identification of the imaging apparatus as the priority control target may be shared by the AF and the information processing apparatus 10. For example, the AF may hold association information between the first identification information and the second identification information. Then, the information processing apparatus 10 may transmit the first identification information (for example, the camera ID illustrated in Fig. 21) as tally information to the AF. The AF may specify the imaging apparatus 50 to be subjected to priority control based on the first identification information acquired from the information processing apparatus 10.

Priority Control

Next, priority control by the network apparatus will be described. In the following description, the network apparatus to which the tally information (second control information) is transmitted is the AF. Note that the network apparatus is not limited to the AF.

On the basis of tally information (second control information) provided from the switcher, the AF determines the priority of the imaging apparatus 50 on a per cell basis. In the example of Fig. 20, the imaging apparatus $50_1$ whose red lamp is on is located in the same cell where the imaging apparatus $50_2$ whose tally lamp is not on is located. The imaging

apparatus $50_1$ is the imaging apparatus 50 designated by a tally signal as a camera related to predetermined processing (for example, a camera that captures a video related to broadcasting/distribution), and the imaging apparatus $50_2$ is the imaging apparatus 50 that is not designated as a camera related to the predetermined processing.

In this case, the AF determines that the priority of the imaging apparatus $50_1$ is higher than the priority of the imaging apparatus $50_2$. Note that the information processing apparatus 10 (switcher) may perform this priority determination. In this case, the tally information (second control information) transmitted from the information processing apparatus 10 to the AF may be information requesting preferential allocation of a radio resource to the imaging apparatus $50_1$.

The AF performs priority control to allow the imaging apparatus 50 with a high priority to transmit the captured data in preference to the imaging apparatus 50 with a low priority. For example, in a case where the imaging apparatus $50_1$ whose tally lamp is on and the imaging apparatus $50_2$ whose tally lamp is not on exist in the same cell, the AF performs QoS control to allow the imaging apparatus $50_1$ to transmit the captured data in preference to the imaging apparatus $50_2$. Note that the information processing apparatus 10 may include the AF function and perform priority control (for example, QoS control). Note that the QoS control may be QoD (Quality of Demand) control.

The priority control executed by the AF may be either of Priority Control Example 1 or Priority Control Example 2 described below. It is to be understood that the priority control executed by the AF is not limited to Priority Control Example 1 and Priority Control Example 2 described below.

Priority Control Example 1

The AF configures a priority for the core network CN in AFsessionWithQoS via the NEF. For example, the AF designates a QoS reference ID associated with 5QI = 3 for the imaging apparatus 50 having a high priority (for example, the imaging apparatus $50_1$ with the tally lamp on). On the other hand, the AF designates a QoS reference ID associated with 5QI = 7 for the imaging apparatus 50 having a high priority (for example, the imaging apparatus $50_1$ with the tally lamp on. Note that the values of the 5QI described above are merely examples. The AF may specify other values as the 5QI. In the case of 4G and 5G Non Stand Alone (NSA), the AF may configure the priority in ASsessionWithQoS via a Service Capability Exposure Function (SCEF), or may perform priority control using another API or the like.

Note that the AF may configure the priority using a priority level, an Allocation and Retention Priority (ARP), or the like instead of the value of the 5QI. In a case that the core network is a core network in 4G, the AF may configure a value of the QCI.

In addition, the AF may determine whether to increase the priority of the imaging apparatus $50_1$ or to decrease the priority of the imaging apparatus $50_2$ according to the priority currently configured for the imaging apparatus 50. Then, the AF may perform priority control (for example, QoS control) based on the determination result.

Priority Control Example 2

In a case where the radio access network of the image capturing system 1 is constructed according to the above-described O-RAN architecture, the AF transmits information regarding the imaging apparatus 50 to be prioritized to the Non-RT RIC in the SMO, based on the tally information (second control information). This information may be the priority of the imaging apparatus 50 or may be identification information of the imaging apparatus 50 to be prioritized. The Non-RT RIC that has received the information from AF may execute at least one of the processing operations described in (A1) to (A5) below.

(A1) Processing Example 1

The Non-RT RIC may notify the O-DU of the priority information regarding the imaging apparatus 50 via an O1 interface. The O-DU may identify the imaging apparatus 50 on a per-cell basis and allocate a radio resource to the imaging apparatus 50 to be prioritized. In addition, the Non-RT RIC may notify the O-CU of the priority information. The O-CU may execute at least one of the control of suppressing the handover of the imaging apparatus 50 to be prioritized, the control of suppressing the handover of another imaging apparatus 50 to the corresponding cell, and the control of offloading another imaging apparatus 50 to another cell. In addition, the O-CU may utilize the information for call processing for the serving cell of the imaging apparatus 50, such as rejection of reception of a new call (a call of the non-priority imaging apparatus 50). This maximizes Tput of the imaging apparatus 50, and can suppress an effect on Jitter/Round-Trip Time (RTT).

(A2) Processing Example 2

The Non-RT RIC may notify the Near-RT RIC of the priority information regarding the imaging apparatus 50 via the A1 interface. Near-RT RIC may identify the imaging apparatus 50 on a per cell basis and allocate a radio resource to the imaging apparatus 50 to be prioritized. By implementing an algorithm (for example, ML Model) in xApp of the Near-RT RIC, data collection/control can be performed in close cooperation with the CU/DU. As a result, the resource control and the call processing for the RAN can be performed in a shorter cycle than in the case of performing the resource control and the call processing only by the Non-RT RIC. Also, the Non-RT RIC may configure the Near-RT RIC with the policy as needed. Accordingly, the information regarding the imaging apparatus 50 to be prioritized can be utilized for the radio resource control in the Near-RT RIC.

(A3) Processing Example 3

The SMO may include a network function of managing a domain (for example, the core network or Transport) other than the RAN. In this case, the Non-RT RIC may perform resource management for the core network and/or the Transport using information regarding the imaging apparatus 50 to be prioritized.

(A4) Processing Example 4

The SMO may include a network function that controls the O-Cloud. In this case, the Non-RT RIC may control resource allocation of the O-Cloud using the information regarding the imaging apparatus 50 to be prioritized. For example, the Non-RT RIC may specify a container on the O-Cloud that processes the CU/DU that accommodates the cell of the imaging apparatus 50, based on the information regarding the imaging apparatus 50 to be prioritized. Then, the Non-RT RIC may increase the resources (for example, the number of CPUs and/or the amount of memory) to be allocated to the container.

(A5) Processing Example 5

The Non-RT RIC may combine the processing described in (A3) and the processing described in (A4) to perform priority control for Cloud resources of other domains, for example, as in Management and Network Orchestration (MANO).

Example of Wireless Lease Distribution

The network apparatus may distribute radio resources to the imaging apparatuses 50 as follows. Here, the network apparatus may be an apparatus (for example, the base station 30) constituting the radio access network, an apparatus (for example, the management apparatus 20) constituting the core network, or an apparatus having the AF function. The apparatus that determines the amount of radio resources distributed is not limited to the network apparatus. The apparatus that determines the amount of radio resources distributed may be the information processing apparatus 10.
Hereinafter, description will be given of an example of distribution of radio resources to one or more imaging apparatuses 50 having a priority higher than a predetermined threshold and one or more imaging apparatuses 50 having a priority equal to or lower than the predetermined threshold.

Distribution Example 1

The total amount of radio resources is denoted by $RB_{total}$, the amount of radio resources used by the imaging apparatus 50 having a high priority is denoted by $RB_H(i)$, and the number of imaging apparatuses 50 having a low priority is denoted by $N_L$. Here, i satisfies $1 \le I \le N_H$. $N_H$ is the number of imaging apparatuses 50 having a high priority.
At this time, the network apparatus may define the amount of radio resources that can be used by one imaging apparatus 50 having a low priority as an amount calculated by the following Equation (1).

$$\{RB_{total} - \Sigma RB_H(i)\}/N_L \quad (1)$$

Distribution Example 2

The total amount of radio resources is denoted by $RB_{total}$, the minimum amount of radio resources allocated to each of the imaging apparatuses 50 having a high priority is denoted by $RB_{H\_min}(i)$, and the minimum amount of radio resources allocated to each of the imaging apparatuses 50 having a low priority is denoted by $RB_{L\_min}(j)$. Here, i satisfies $1 \le i \le N_H$, and j satisfies $1 \le j \le N_L$. $N_L$ is the number of imaging apparatuses 50 with a low priority.
In addition, the amount of radio resources used by all the imaging apparatuses 50 having a high priority is denoted by $\Sigma RB_{H\_min}(i)$. Here, $\Sigma$ is the sum in the case of $1 \le i \le N_H$. In addition, the amount of radio resources used by all the imaging apparatuses 50 having a low priority is denoted by $\Sigma RB_{L\_min}(j)$. Here, $\Sigma$ is the sum in a case where $1 \le j \le N_L$.
At this time, in a case where the result of subtracting the minimum amount of radio resources allocated from the total amount of radio resources allocated is larger than 0 (that is, in a case where Equation (2) described below is satisfied), the network apparatus allocates a radio resource to the imaging apparatus 50 having a relatively high priority.

$$RB_{total} - \Sigma RB_{H\_min}(i) - \Sigma RB_{L\_min}(j) > 0 \quad (2)$$

Transmission of Captured Data

The reception section 531 of the imaging apparatus 50 receives a tally signal (first control information) from the information processing apparatus 10. Then, the imaging apparatus 50 turns on the tally lamp based on the received tally signal. Here, of the imaging apparatus $50_1$ and the imaging apparatus $50_2$ located in the same cell, the imaging apparatus $50_1$ turns on the tally lamp. In this case, the network apparatus (for example, the management apparatus 20 and/or the base station 30) allocates a radio resource to the imaging apparatus $50_1$ in preference to the imaging apparatus $50_2$.

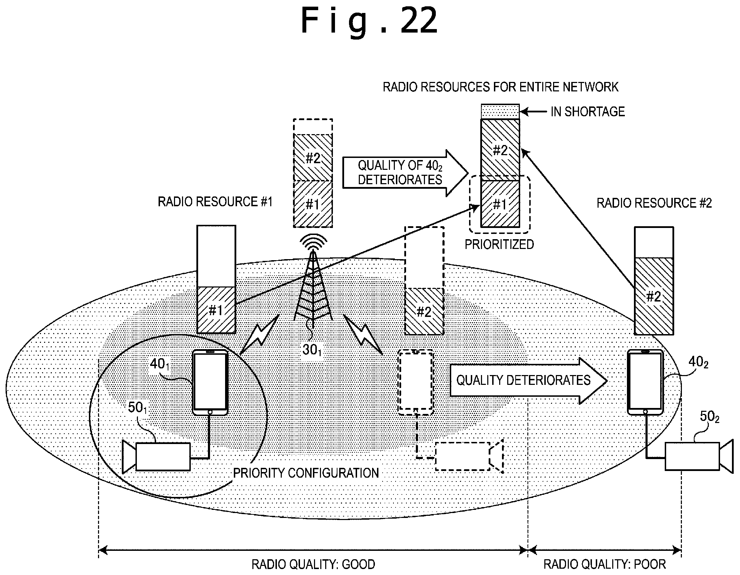

Fig. 22 is a diagram illustrating a state in which the network apparatus preferentially allocates a radio resource to one of the two imaging apparatuses 50. The transmission section 532 of the imaging apparatus $50_1$ transmits the captured data using the radio resource preferentially allocated to the imaging apparatus $50_1$. Accordingly, even in a case where the radio resources used in the entire network increase, the imaging apparatus $50_1$ can stably wirelessly transmit the captured data. As described above, the "imaging apparatus $50_1$" described herein can be replaced with the "terminal apparatus $40_1$" or the "imaging apparatus $50_1$ or the terminal apparatus $40_1$ connected to the imaging apparatus $50_1$". In addition, the "imaging apparatus $50_2$" described herein can be replaced with the "terminal apparatus $40_2$" or the "imaging apparatus $50_2$ or terminal apparatus $40_1$ connected to the imaging apparatus $50_1$".

Switching of Imaging Apparatus

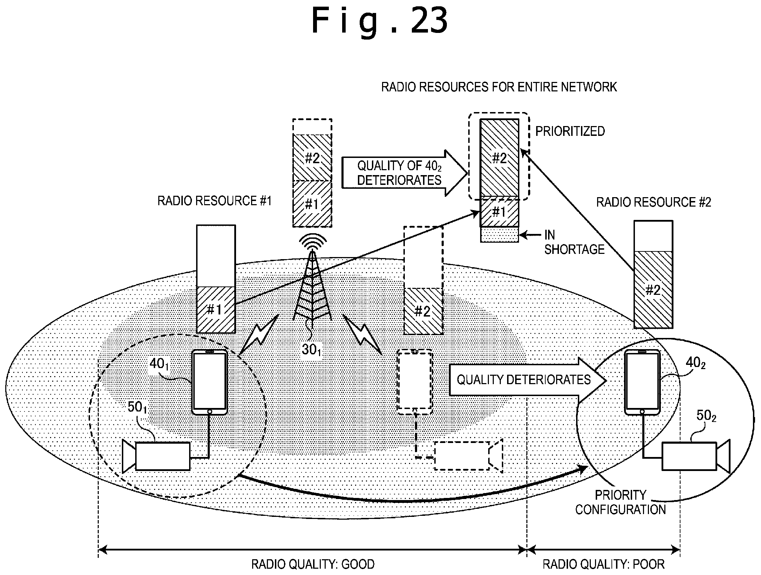

Fig. 23 is a diagram for describing radio resource allocation control. More specifically, Fig. 23 is a diagram for describing the allocation control for radio resources in a case where the camera related to the predetermined processing is switched to another imaging apparatus 50. In a case where the operator performs a camera switching operation, the information processing apparatus 10 transmits a tally signal (first control information) to the imaging apparatus 50 of the switching destination, and transmits, to the AF, tally information (second control information) associated with the tally signal (first control information).

In the example of Fig. 23, the camera related to the predetermined processing is switched from the imaging apparatus $50_1$ to the imaging apparatus $50_2$. In this case, the information processing apparatus 10 transmits, to the AF as tally information (second control information), control information for allocating a radio resource to the imaging apparatus $50_2$ in preference to the imaging apparatus $50_1$. As described above, the "imaging apparatus $50_1$" described herein can be replaced with the "terminal apparatus $40_1$" or the "imaging apparatus $50_1$ or the terminal apparatus $40_1$ connected to the imaging apparatus $50_1$". In addition, the "imaging apparatus $50_2$" described herein can be replaced with the "terminal apparatus $40_2$" or the "imaging apparatus $50_2$ or terminal apparatus $40_1$ connected to the imaging apparatus $50_1$".

In a case of detecting, from the tally information (second control information), that the imaging apparatus 50 to be prioritized has been changed, the AF changes the priority by the QoS control. For example, the camera related to the predetermined processing is assumed to have been switched from the imaging apparatus $50_1$ to the imaging apparatus $50_2$. In this case, the AF configures a higher priority (for example, the value of the 5QI) for the imaging apparatus $50_2$ than for the imaging apparatus $50_1$. In this case, the network apparatus (for example, the management apparatus 20 and/or the base station 30) allocates a radio resource to the imaging apparatus $50_2$ in preference to the imaging apparatus $50_1$.

The imaging apparatus $50_2$ transmits the captured data using the radio resource preferentially allocated to the imaging apparatus $50_2$ (or the terminal apparatus $40_2$). Accordingly, even in a case where the radio resources used in the entire network increase, the imaging apparatus $50_2$ can stably transmit the captured data.

The information processing apparatus 10 or the network apparatus may control a data rate (for example, at least one of a resolution and a frame rate) of a video in addition to radio resource control for the network based on the tally signal/tally information. For example, it is assumed that the data rate of the video of the camera (for example, the imaging apparatus 50 not designated as the main broadcasting camera) not designated as the camera related to the predetermined processing is set to be lower than that of the camera (for example, the imaging apparatus 50 designated as the main broadcasting camera) related to the predetermined processing. In this case, the information processing apparatus 10 or the network apparatus notifies the imaging apparatus 50 related to the predetermined processing of information regarding the data rate together with the tally signal/tally information or in addition to the tally signal/tally information. The imaging apparatus 50 changes the configuration of the data rate based on the information regarding the data rate. For example, the imaging apparatus 50 related to the predetermined processing changes the configuration of the data rate (for example, at least one of the resolution and the frame rate) to a level higher than the configuration for the imaging apparatus 50 that is not designated as the camera related to the predetermined processing. The information regarding the data rate may include specific configuration information of the data rate. The information processing apparatus 10 or the network apparatus performs control of data rate of video in addition to priority control for radio resources, thereby realizing stable wireless transmission of high-quality video.

Note that, here, an example has been described in which the information processing apparatus 10 or the network apparatus performs radio resource control for the network and control of the data rate of the video (for example, at least one of a resolution and a frame rate) based on the tally signal/tally information. However, the present embodiment is not limited to this example. The information processing apparatus 10 or the network apparatus may control only the data rate of the video (for example, at least one of the resolution and the frame rate) based on the tally signal/tally information. This also realizes stable wireless transmission of high-quality video.

4-2. Embodiment 2

Now, the operation of the image capturing system 1 according to the Embodiment 2 will be described.

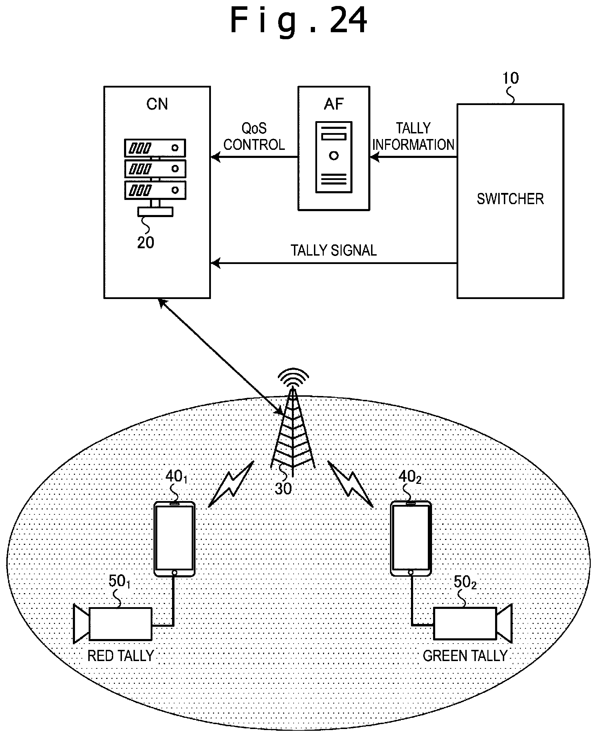

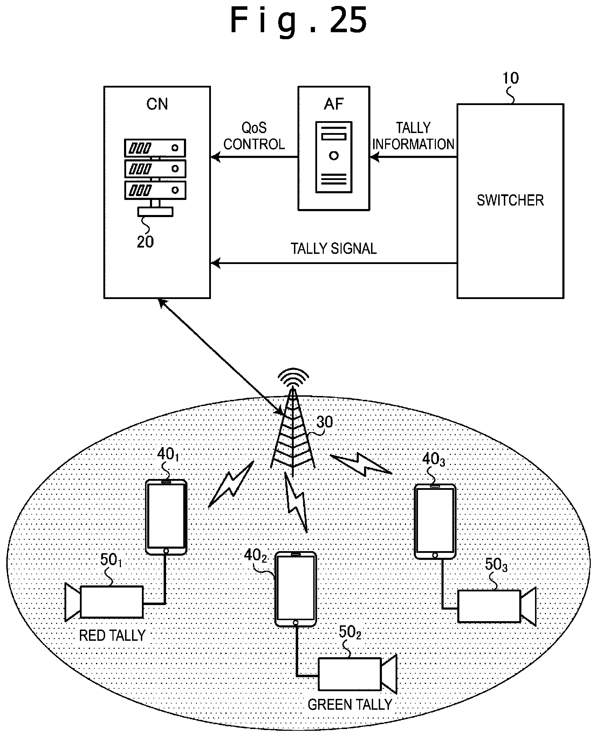

Figs. 24 and 25 are diagrams for describing the operation of the image capturing system 1 according to Embodiment 2. In Embodiment 2, description will be given of the operation of the image capturing system 1 in a case where the same cell contains a plurality of imaging apparatuses 50 (or terminal apparatuses 40 connected to the imaging apparatuses 50) having different priorities. Note that the processing according to Embodiment 2 is applicable not only to a single cell environment but also to a multi-cell environment. In this case, the processing according to Embodiment 2 described below is applicable to each cell.

As described above, the terminal apparatus 40 that is directly or indirectly connected to the imaging apparatus 50 and transmits the captured data to another apparatus via the wireless network may also be referred to as the imaging apparatus 50. The "imaging apparatus 50" described in Embodiment 2 can also be replaced with the "terminal apparatus 40" or the "imaging apparatus 50 or the terminal apparatus 40 connected to the imaging apparatus 50". Similarly, the "imaging apparatus $50_X$" described in the embodiment can be replaced with the "terminal apparatus $40_X$" or the "imaging apparatus $50_X$ or terminal apparatus $40_X$ connected to the imaging apparatus $50_X$". Here, X is an arbitrary integer (1, 2, 3, ...).

Transmission of Tally Signal

First, the first transmission section 131 of the information processing apparatus 10 transmits a tally signal to one or more imaging apparatuses 50. Depending on the format of the tally signal, a plurality of types of tally signals may be prepared. For example, depending on the format, there are cases where a plurality of types of tally signals may be prepared that indicate different lighting colors of the tally lamp. For example, the tally signals prepared may include a first tally signal for turning on the tally lamp in a first color (for example, red) and a second tally signal for turning on the tally lamp in a second color (for example, yellow). Note that the tally signal is not limited to these two types. For example, the tally signals may include a third tally signal for turning on the tally lamp in a third color (for example, green). It is to be understood that the tally signal may be four or more types. In addition, the plurality of types of tally signals may include a signal for designating non-lighting of the tally lamp.

The association between the type of the tally signal and the role of the imaging apparatus 50 can be arbitrarily determined by the user/developer. For example, the role of capturing a program-out video (for example, a high-quality and low-delay video) may be assigned to the imaging apparatus 50 to which the first tally signal (for example, a red tally signal) is transmitted. The role of capturing a video for Internet distribution (high quality and medium delay) may be assigned to the imaging apparatus 50 to which the second tally signal (for example, a yellow tally signal) is transmitted. Another role (for example, the role of capturing a video for at least one of processing operations including editing, recording, analysis, and 3D data generation) may be assigned to the imaging apparatus 50 to which the third tally signal (for example, a green tally signal) is transmitted.

It is to be understood that the association between the type of the tally signal and the role of the imaging apparatus 50 is not limited to this example. For example, the role of capturing an on-air video (live video) may be assigned to the imaging apparatus 50 to which the first tally signal (for example, the red tally signal) is transmitted, and another role (for example, the role of capturing a video for at least one of the processing operations including editing, recording, analysis, and 3D data generation) may be assigned to the imaging apparatus 50 to which the second tally signal (for example, the yellow tally signal) is transmitted. Note that the imaging apparatus 50 whose tally lamp is not on (for example, the imaging apparatus 50 to which the tally signal specifying non-lighting is transmitted or the imaging apparatus 50 to which no tally signal is transmitted) may not be assigned any role, or may be assigned another role (for example, the role of capturing a video for at least one of the processing operations including editing, recording, analysis, and 3D data generation).

The association between the type of the tally signal and the priority can be arbitrarily determined by the user/developer. For example, the highest priority (first priority) may be assigned to the imaging apparatus 50 to which the first tally signal (for example, red tally signal) is transmitted, the next highest priority (second priority) may be assigned to the imaging apparatus 50 to which the second tally signal (for example, yellow tally) is transmitted, and the next highest priority (third priority) may be assigned to the imaging apparatus 50 to which the third tally signal (for example, green tally) is transmitted.

It is to be understood that the association between the type of the tally signal and the priority is not limited to this example. For example, the highest priority (first priority) may be assigned to the imaging apparatus 50 to which the first tally signal (for example, red tally) is transmitted, the next highest priority (second priority) may be assigned to the imaging apparatus 50 to which the third tally signal (for example, green tally) is transmitted, and the next highest priority (third priority) may be assigned to the imaging apparatus 50 to which the third tally signal (for example, yellow tally) is transmitted. The lowest priority may be assigned to the imaging apparatus 50 whose tally lamp is not on.

In the example of Fig. 24, the information processing apparatus 10 transmits, as a tally signal (first control information), a control signal (red tally signal) for designating the imaging apparatus $50_1$ as the imaging apparatus 50 having the first priority and a control signal (green tally signal) for designating the imaging apparatus $50_2$ as the imaging apparatus 50 having the second priority. Accordingly, the tally lamp of the imaging apparatus $50_1$ is illuminated in red, and the tally lamp of the imaging apparatus $50_2$ is illuminated in green.

In the example of Fig. 25, the information processing apparatus 10 transmits, as a tally signal (first control information), a control signal (red tally signal) for designating the imaging apparatus $50_1$ as the imaging apparatus 50 having the first priority and a control signal (green tally signal) for designating the imaging apparatus $50_2$ as the imaging apparatus 50 having the second priority. The information processing apparatus 10 also transmits a control signal (a non-lighting tally signal) for designating the imaging apparatus $50_3$ as an imaging apparatus having the lowest priority. Alternatively, the information processing apparatus 10 transmits no tally signal to the imaging apparatus $50_3$. Accordingly, the tally lamp of the imaging apparatus $50_1$ is illuminated in red, the tally lamp of the imaging apparatus $50_2$ is illuminated in green, and the tally lamp of the imaging apparatus $50_3$ is turned off.

Transmission of Tally Information

The second transmission section 132 of the information processing apparatus 10 transmits tally information (second control information) to the Application Function (AF). The content of the second control information may be the same as the content of the first control information. The information processing apparatus 10 may transmit the second control information to the network apparatus as a tally signal together with the first control information. The information processing apparatus 10 may also transmit the second control information to the network apparatus separately from the tally signal.

The network apparatus is an apparatus that performs processing related to allocation of radio resources. For example, the network apparatus is an apparatus constituting the wireless network. For example, the network apparatus may be an apparatus (for example, the management apparatus 20) constituting a core network, or may be an apparatus (for example, the base station 30) constituting a radio access network. The network apparatus may be an apparatus (for example, the management apparatus 20 or another information processing apparatus 10) including functions as the AF.

The tally information (second control information) is associated with the tally signal (first control information). That is, the information processing apparatus 10 designates the imaging apparatus 50 specified by the first control information to have a predetermined priority, as the imaging apparatus 50 related to the priority control for radio resources.

In the example of Fig. 24, in the information processing apparatus 10, the imaging apparatus $50_1$ is designated as the imaging apparatus 50 having the first priority, and the imaging apparatus $50_2$ is designated as the imaging apparatus having the second priority. In this case, the information processing apparatus 10 generates tally information (second control information) for preferentially allocating a radio resource to the imaging apparatus $50_1$. The tally information (second control information) may be control information for preferentially allocating a radio resource to the imaging apparatus $50_1$ in preference to the imaging apparatus $50_2$ in a case where the imaging apparatus $50_1$ and the imaging apparatus $50_2$ exist in the same cell. Then, the information processing apparatus 10 transmits the generated tally information (second control information) to the network apparatus (for example, the AF).

In the example of Fig. 25, in the information processing apparatus 10, the imaging apparatus $50_1$ is designated as the imaging apparatus 50 having the first priority, and the imaging apparatus $50_2$ is designated as the imaging apparatus having the second priority. Further, the imaging apparatus $50_3$ is designated as the imaging apparatus having the lowest priority. In this case, the information processing apparatus 10 generates tally information (second control information) for preferentially allocating radio resources to the imaging apparatus $50_1$ and the imaging apparatus $50_2$. In a case where the imaging apparatus $50_1$, the imaging apparatus $50_2$, and the imaging apparatus $50_3$ exist in the same cell, the tally information (second control information) may be control information for preferentially allocating radio resources to the imaging apparatus $50_1$ and the imaging apparatus $50_2$ in preference to the imaging apparatus $50_3$. Further, the tally information (second control information) may be control information for preferentially allocating a radio resource to the imaging apparatus $50_1$ in preference to the imaging apparatus $50_2$. Then, the information processing apparatus 10 transmits the generated tally information (second control information) to the network apparatus (for example, the AF).

Priority Control

The network apparatus (for example, the AF) performs the priority control (for example, the QoS control) based on the tally information (second control information) provided from the switcher. The priority control executed by the network apparatus may be the same as that in Embodiment 1. For example, the priority control executed by the network apparatus may be either the control described above in Priority Control Example 1 or the control described above in Priority Control Example 2. The priority control executed by the network apparatus is not limited to the control described above in Priority Control Example 1 or the control described above in Priority Control Example 2.

Example of Wireless Lease Distribution

The network apparatus may distribute radio resources to the imaging apparatuses 50 as follows. Here, the network apparatus may be an apparatus (for example, the base station 30) constituting the radio access network, an apparatus (for example, the management apparatus 20) constituting the core network, or an apparatus having the AF function. The apparatus that determines the amount of radio resources distributed is not limited to the network apparatus. The apparatus that determines the amount of radio resources distributed may be the information processing apparatus 10.
Hereinafter, an example of distribution of radio leases will be described assuming that the priorities include a first priority (priority: high), a second priority (priority: medium), and a third priority (priority: low).
The network apparatus first allocates necessary radio resources to the imaging apparatus 50 having the first priority. Then, the network apparatus allocates the remaining radio resources to the imaging apparatus 50 having the second priority and the imaging apparatus 50 having the third priority. At this time, after radio resources are allocated to the imaging apparatus 50 having the second priority, the remaining radio resources may be allocated to the imaging apparatus 50 having the third priority.

Distribution Example 1

In this case, the network apparatus may distribute the radio resources to the imaging apparatus 50 having the second priority and the imaging apparatus 50 having the third priority by using the method described in Distribution Example 1 of Embodiment 1.

Distribution Example 2

The network apparatus may distribute radio resources to the imaging apparatus 50 having the second priority and the imaging apparatus 50 having the third priority by using the method described in Distribution Example 2 of Embodiment 1.
For example, $(RB_{M\_min}, RB_{L\_min})$ is assumed to represent the minimum amount of radio resources allocated to the imaging apparatus 50 having the second priority and the imaging apparatus 50 having the third priority. In addition, $RB_{remaining}$ is assumed to represent the remaining amount of radio resources obtained by subtracting, from the total amount of radio resources, the amount of radio resources used by the imaging apparatus 50 having the first priority. At this time, in a case where the result of subtraction of the minimum amount of radio resources allocated from the remaining amount of radio resources $RB_{remaining}$ is larger than 0 (that is, in a case where Equation (3) described below is satisfied), the network apparatus allocates a radio resource to the imaging apparatus 50 having a relatively high priority.

$$RB_{remaining} - \Sigma RB_{M\_min}(i) - \Sigma RB_{L\_min}(j) > 0 \quad (3)$$

Distribution Example 3

The network apparatus may fix a ratio of radio resources distributed between the second priority and the third priority. In this example, radio resources are reliably secured only for the imaging apparatus 50 having the first priority.

Transmission of Captured Data

Of the imaging apparatus $50_1$ and the imaging apparatus $50_2$ located in the same cell, the imaging apparatus $50_1$ is assumed to be designated as the imaging apparatus 50 having the first priority and the imaging apparatus $50_2$ is designated as the imaging apparatus 50 having the second priority. In this case, the network apparatus (for example, the management apparatus 20 and/or the base station 30) allocates a radio resource to the imaging apparatus $50_1$ in preference to the imaging apparatus $50_2$. The imaging apparatus $50_1$ transmits the captured data using the radio resource preferentially allocated to the imaging apparatus $50_1$. Accordingly, even in a case where the radio resources used in the entire network increase, the imaging apparatus $50_1$ can stably transmit the captured data.

Of the imaging apparatus $50_1$, the imaging apparatus $50_2$, and the imaging apparatus $50_3$ located in the same cell, the imaging apparatus $50_1$ is assumed to be designated as the imaging apparatus 50 having the first priority, the imaging apparatus $50_2$ is assumed to be designated as the imaging apparatus 50 having the second priority, and the imaging apparatus $50_3$ is assumed to be designated as the imaging apparatus 50 having the lowest priority. In this case, the network apparatus (for example, the management apparatus 20 and/or the base station 30) allocates radio resources to the imaging apparatus $50_1$ and the imaging apparatus $50_2$ in preference to the imaging apparatus $50_3$. The imaging apparatus $50_1$ and the imaging apparatus $50_2$ transmit the captured data using the radio resources preferentially allocated to the imaging apparatus $50_1$ and the imaging apparatus $50_2$. Accordingly, even in a case where the radio resources used in the entire network increase, the imaging apparatus $50_1$ and the imaging apparatus $50_2$ can stably transmit the captured data.

Switching of Imaging Apparatus

In a case where the operator performs an operation of switching the camera related to the predetermined processing, the information processing apparatus 10 transmits a tally signal (first control information) to the imaging apparatus 50 of the switching destination, and transmits tally information (second control information) associated with the tally signal (first control information) to the AF.

For example, the imaging apparatus 50 having the first priority is assumed to be changed from the imaging apparatus $50_1$ to the imaging apparatus $50_2$. In this case, the information processing apparatus 10 transmits, to the network apparatus (for example, the AF), tally information (second control information) for allocating a radio resource to the imaging apparatus $50_2$ in preference to the imaging apparatus $50_1$. In a case of detecting, from the tally information (second control information), that the priority has been changed, the network apparatus changes the priority by the QoS control.

4-3. Embodiment 3

Next, the operation of the image capturing system 1 according to Embodiment 3 will be described.

In Embodiment 3, description will be given of the operation of the image capturing system 1 in a case where wireless transmission of captured data after the priority control (for example, the priority control described in Embodiment 1 or Embodiment 2) is unstable or is predicted to be unstable.

As described above, the terminal apparatus 40 that is directly or indirectly connected to the imaging apparatus 50 and transmits the captured data to another apparatus via the wireless network may also be referred to as the imaging apparatus 50. The "imaging apparatus 50" described in Embodiment 2 can also be replaced with the "terminal apparatus 40" or the "imaging apparatus 50 or the terminal apparatus 40 connected to the imaging apparatus 50". Similarly, the "imaging apparatus $50_X$" described in the embodiment can be replaced with the "terminal apparatus $40_X$" or the "imaging apparatus $50_X$ or terminal apparatus $40_X$ connected to the imaging apparatus $50_X$". Here, X is an arbitrary integer (1, 2, 3, ...).

In the following description, the same cell is assumed to contain the imaging apparatus 50 having a high priority and the imaging apparatus 50 having a low priority. Note that the processing according to Embodiment 3 is applicable not only to the single cell environment but also to the multi-cell environment. In this case, the processing according to Embodiment 3 described below is applicable to each cell.

In the example of Embodiment 1, the imaging apparatus 50 having a high priority is the imaging apparatus 50 designated by a tally signal (first control information) as the camera related to the predetermined processing, and the imaging apparatus 50 having a low priority is the imaging apparatus 50 not designated as the camera related to the predetermined processing.

In the example of Embodiment 2, the imaging apparatus 50 having a high priority is an imaging apparatus 50 having a priority equal to or higher than a predetermined threshold, and the imaging apparatus 50 having a low priority is an imaging apparatus 50 having a priority lower than the predetermined threshold. For example, the imaging apparatus 50 having a high priority is the imaging apparatus 50 having the first priority, and the imaging apparatus 50 having a low priority includes the imaging apparatuses 50 having the other priorities (for example, the imaging apparatus 50 having the second priority or the imaging apparatuses 50 having the second and third priorities). The imaging apparatus 50 having a low priority may be the imaging apparatus 50 having the lowest priority, and the imaging apparatus 50 having a high priority may include the imaging apparatuses 50 having the other priorities (for example, the imaging apparatuses 50 having the first and second priorities or the imaging apparatuses 50 having the first to third priorities).

Example 1 of Embodiment 3

In Example 1, description will be given of the operation of the image capturing system 1 in a case where, after execution of the priority control, wireless transmission of captured data from the imaging apparatus 50 having a low priority is unstable or is predicted to be unstable.

The network apparatus (for example, the AF) calculates the throughput of the imaging apparatus 50 having a low priority. For example, the network apparatus calculates the value of throughput that can be achieved by the imaging apparatus 50 having a low priority in the current environment, based on information (for example, at least one of (B1) to (B3) below) acquired from at least one of the imaging apparatus 50 (or the terminal apparatus 40), the RAN (for example, the base stations 30), and the core network (for example, the management apparatus 20).

(B1) Information on Radio Quality

For example, the network apparatus may acquire, as the information on radio quality, at least one of Reference Signal Received Power (RSRP), Reference Signal Received Quality (RSRQ), Signal to Noise power Ratio (SNR), and Signal to Interference and Noise power Ratio (SINR).

(B2) Information on Traffic Amount

For example, the network apparatus may acquire at least one of throughput information on a per UE or cell basis and Buffer Status Report (BSR) information as information on a traffic amount. The Buffer Status Report (BSR) information is, for example, information on the amount of buffered traffic indicated by the BSR.

(B3) Information on Radio Resources

For example, the network apparatus may acquire, as the information on radio resources, at least one of information on the maximum throughput on a per cell basis based on RAN parameters, information on the amount of resource blocks in use, and information on the amount of surplus resource blocks.

Note that the calculated throughput may be a predicted value. For example, the network apparatus may use, as the value of the throughput, a predicted value obtained by machine learning. The throughput may be calculated by the information processing apparatus 10.

In a case where the imaging apparatus 50 having a low priority has difficulty in performing video transmission at predetermined quality using an allocated radio resource, the network apparatus (or the notification section 133 of the information processing apparatus 10) notifies the imaging apparatus 50 having a low priority of information regarding the data rate at which the predetermined quality can be achieved. For example, the network apparatus (or the information processing apparatus 10) determines, based on the value of the throughput, whether the imaging apparatus 50 having a low priority has difficulty in performing the video transmission at the predetermined quality. Then, in a case where performing the video transmission at the predetermined quality is difficult, the network apparatus (or the information processing apparatus 10) calculates, based on the calculated throughput value, the data rate (resolution and/or frame rate) at which the video transmission at the predetermined quality can be achieved. Then, the network apparatus (or the information processing apparatus 10) transmits the calculated information to the imaging apparatus 50 having a low priority as information regarding a data rate at which the predetermined quality can be achieved. The imaging apparatus 50 changes the configuration of the data rate based on the information regarding the data rate. For example, the imaging apparatus 50 lowers the data rate to a level at which the video transmission at the predetermined quality can be achieved.

The information regarding the data rate may be the value of the throughput calculated by the network apparatus (or the information processing apparatus 10). In this case, the imaging apparatus 50 having a low priority may calculate the data rate (resolution and/or frame rate) at which the predetermined quality can be achieved based on the value of the throughput. Then, the imaging apparatus 50 changes the configuration based on the calculated data rate.

Accordingly, the imaging apparatus 50 having a low priority can also stably wirelessly transmit the captured data.

Example 2 of Embodiment 3

In Example 2, description will be given of the operation of the image capturing system 1 in a case where the wireless transmission of the captured data from the imaging apparatus 50 having a high priority is unstable or is predicted to be unstable in spite of the priority control.

The network apparatus (for example, the AF) calculates the throughput of the imaging apparatus 50 having a high priority. For example, the network apparatus calculates the value of throughput that can be achieved by the imaging apparatus 50 having a high priority in the current environment, based on information acquired from at least one of the imaging apparatus 50 (or the terminal apparatus 40), the RAN (for example, the base station 30), and the core network (for example, the management apparatus 20). The calculated throughput may be a predicted value. The throughput may be calculated by the information processing apparatus 10. The method of calculating the throughput may be the same as the method of calculating the throughput of the imaging apparatus 50 having a low priority described in Example 1.

In a case where the imaging apparatus 50 having a high priority has difficulty in performing the video transmission at the predetermined quality by using the allocated radio resource, the network apparatus (or the information processing apparatus 10) notifies the imaging apparatus 50 having a high priority of information regarding the data rate at which the predetermined quality can be achieved. For example, the network apparatus (or the information processing apparatus 10) determines, based on the value of the throughput, whether the imaging apparatus 50 having a high priority has difficulty in performing the video transmission at the predetermined quality. Then, in a case where performing the video transmission at the predetermined quality is difficult, the network apparatus (or the information processing apparatus 10) calculates, based on the calculated throughput value, the data rate (resolution and/or frame rate) at which the video transmission at the predetermined quality can be achieved. Then, the network apparatus (or the information processing apparatus 10) transmits the calculated information to the imaging apparatus 50 having a high priority as information regarding the data rate at which the predetermined quality can be achieved. The imaging apparatus 50 changes the configuration of the data rate based on the information regarding the data rate.

The information regarding the data rate may be the value of the throughput calculated by the network apparatus (or the information processing apparatus 10). In this case, the imaging apparatus 50 having a high priority may calculate, based on the value of the throughput, the data rate (resolution and/or frame rate) at which the predetermined quality can be achieved. Then, the imaging apparatus 50 changes the configuration based on the calculated data rate.

Accordingly, the imaging apparatus 50 having a high priority can more stably wirelessly transmit the captured data.

Example 3 of Embodiment 3

In Example 3, description will be given of another operation example of the image capturing system 1 in a case where the wireless transmission of the captured data from the imaging apparatus 50 having a high priority is unstable or is predicted to be unstable in spite of the priority control.

The network apparatus (for example, the AF) calculates the throughput of the imaging apparatus 50 having a high priority. The throughput may be calculated by the information processing apparatus 10.

Then, in a case where the imaging apparatus 50 having a high priority has difficulty in performing the video transmission at the predetermined quality using the allocated radio resource, the network apparatus (or the information processing apparatus 10) requests the network apparatus (for example, the management apparatus 20 and/or the base station 30) that manages the wireless link of the imaging apparatus 50 to restrict access of the imaging apparatus 50 having a low priority. For example, the image capturing system 1 of the present embodiment is assumed to be constructed according to the O-RAN architecture. In this case, the AF may request the Non-RT RIC to restrict access of the imaging apparatus 50 having a low priority. Note that in a case where there are a plurality of imaging apparatuses 50 having a low priority, the network apparatus (or the information processing apparatus 10) may request restriction of access of all the imaging apparatuses 50 or may request restriction of access of some imaging apparatuses 50. Then, the network apparatus that has received the request disconnects the wireless link of the imaging apparatus 50 having a low priority.

Note that the network apparatus (or the information processing apparatus 10) may control the imaging apparatus 50 located in another cell. For example, in a case where the imaging apparatus 50 having a high priority has difficulty in performing the video transmission at the predetermined quality using the allocated radio resource, the network apparatus (or the request section 134 of the information processing apparatus 10) may request a reduction in data rate to be made by the imaging apparatus 50 located in a cell adjacent to a cell in which the imaging apparatus 50 having a high priority is located. Note that, in a case where there are a plurality of imaging apparatuses 50 located in the adjacent cell, the network apparatus (or the information processing apparatus 10) may request all the imaging apparatuses 50 to reduce the data rate, or may request some of the imaging apparatuses 50 to reduce the data rate. Upon receiving the request, the imaging apparatus 50 changes the configuration of the data rate.

Accordingly, the imaging apparatus 50 having a high priority can more stably wirelessly transmit the captured data.

5. Sequence Examples

The operation of the image capturing system 1 has been described above, and an example of sequence of processing executed by the image capturing system 1 will be described next.

As described above, the terminal apparatus 40 that is directly or indirectly connected to the imaging apparatus 50 and transmits the captured data to another apparatus via the wireless network may also be referred to as the imaging apparatus 50. The "imaging apparatus 50" described in the present sequence example can also be replaced with the "terminal apparatus 40" or the "imaging apparatus 50 or terminal apparatus 40 connected to the imaging apparatus 50".

In addition, in the following description, a priority equal to or higher than a predetermined threshold may be referred to as a high priority, and a priority lower than the predetermined threshold may be referred to as a low priority. For example, the high priority is the first priority, and the low priority includes the other priorities (for example, the second priority or the second and third priorities). The low priority of the imaging apparatus 50 may be the lowest priority, and the high priority of the imaging apparatus 50 may include the other priorities (for example, the first and second priorities, or the first to third priorities).

5-1. Camera Connection Processing

First, an example of sequence of camera connection processing will be described. The camera connection processing is processing for connecting the imaging apparatus 50 to a broadcasting/distribution facility (for example, the information processing apparatus 10) or a wireless network.

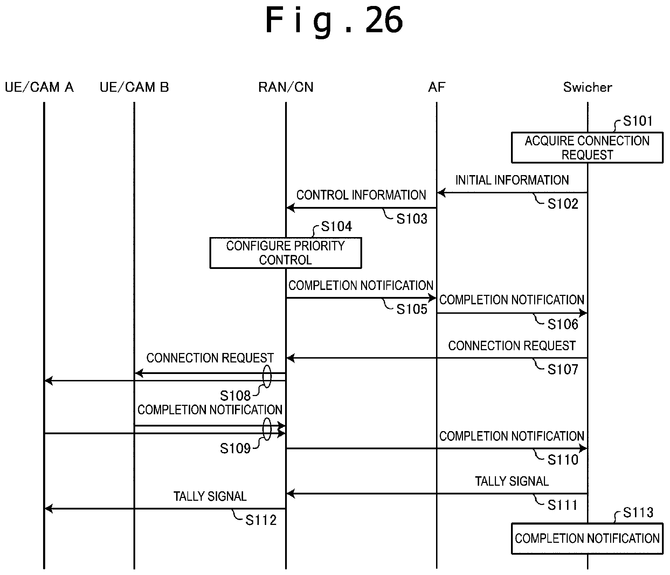

Fig. 26 is a sequence diagram illustrating an example of the camera connection processing. In the drawing, UE is the terminal apparatus 40, and CAM is the imaging apparatus 50. In the following description, two terminal apparatuses 40/imaging apparatuses 50 (UE/CAM A and UE/CAM B) are assumed to be located in the same cell. Hereinafter, the camera connection processing will be described with reference to Fig. 26.

First, the information processing apparatus 10 (the switcher illustrated in Fig. 26) acquires a camera connection request from the operator (step S101). Then, the information processing apparatus 10 transmits initial information to the AF (step S102). The initial information may be tally information. The initial information may include information (initial value) regarding the priority of each of the two imaging apparatuses 50 as the first control information. In the example of Fig. 26, the initial information includes control information for configuring the CAM A as the imaging apparatus 50 having a high priority (for example, the first priority). Note that a broadcast controller may exist between the switcher and the AF.

Then, the AF transmits control information based on the first control information to the RAN/core network (step S103). For example, in a case where the core network is a 5GC, the AF may transmit, via the NEF, priority configuration information related to the radio communication of each of the plurality of imaging apparatuses 50. Note that the AF may transmit the control information to the RAN/core network via the API Wrap.

Then, on the basis of the control information, the RAN/core network configures the priority control related to the radio communication of the imaging apparatus 50 (step S104). When the configuration is completed, the RAN/core network notifies the AF of the completion (step S105). Further, the AF transmits the completion notification to the information processing apparatus 10 (step S106).

Then, the information processing apparatus 10 transmits a connection request to the RAN/core network for connection of each of the plurality of imaging apparatuses 50 (step S107). Upon receiving the connection request, the RAN/core network transmits the connection request to each of the plurality of imaging apparatuses 50 (step S108). Each of the plurality of imaging apparatuses 50 connects to the broadcast/distribution facility or the wireless network. For example, each of the plurality of imaging apparatuses 50 establishes a session with the information processing apparatus 10. When the connection is completed, each of the plurality of imaging apparatuses 50 notifies the RAN/core network of the completion (step S109). Upon receiving the completion notification, the AF transmits the completion notification to the information processing apparatus 10 (step S110).

Then, the information processing apparatus 10 transmits a tally signal via the RAN/core network to the imaging apparatus 50 (CAM A in the example of Fig. 26) having a high priority (step S111, step S112). For example, the information processing apparatus 10 may transmit, to the CAM A, a tally signal for turning on the tally lamp in red. The imaging apparatus 50 turns on the tally lamp according to the tally signal.

The information processing apparatus 10 may transmit the initial information in step S102 after transmitting the tally signal in step S111. That is, the processing in step S102 to step S106 may be executed after the processing in step S107 to step S112. The information processing apparatus 10 may transmit the tally signal in step S111 and the initial information in step S102 at the same time.

When the connection of the imaging apparatus is completed, the information processing apparatus 10 notifies the operator of the completion of connection of the imaging apparatus 50 (step S113).

5-2. Camera Switching Processing

Next, an example of sequence of camera switching processing will be described. The camera switching processing is processing for switching a camera related to predetermined processing (for example, the imaging apparatus 50 that captures a video related to broadcasting/distribution) to the other imaging apparatus 50.

5-2-1. Sequence Example 1

First, a sequence example as a basic form will be described.

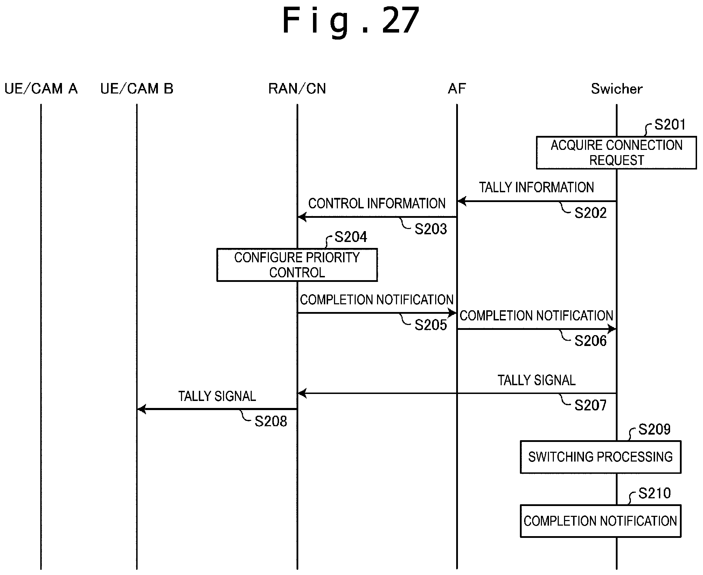

Fig. 27 is a sequence diagram illustrating an example of the camera switching processing. In the drawing, UE is the terminal apparatus 40, and CAM is the imaging apparatus 50. In the following description, two terminal apparatuses 40/imaging apparatuses 50 (UE/CAM A and UE/CAM B) are assumed to be located in the same cell. Then, the CAM A is assumed to be designated as a camera having a high priority at an initial phase of the camera switching processing. Hereinafter, the camera connection processing will be described with reference to Fig. 27.

First, the information processing apparatus 10 (the switcher illustrated in Fig. 27) acquires a camera switching request from the operator (step S201). Then, the information processing apparatus 10 transmits tally information to the AF (step S202). In the example of Fig. 27, the tally information includes control information for designating the CAM B as the imaging apparatus 50 having a high priority and the CAM A as the imaging apparatus 50 having a low priority. Note that the broadcast controller may exist between the switcher and the AF.

The AF then transmits the tally information to the RAN/core network. The AF may transmit, to the RAN/core network, control information based on the first control information (step S203). For example, in a case where the core network is a 5GC, the AF may transmit, via the NEF, configuration information of the priority related to the radio communication of each of the plurality of radio apparatuses located in the same cell. For example, the AF may transmit, via the NEF, control information indicating that the radio communication of the UE/CAM B is configured with the 5QI with a high priority. Note that the AF may transmit the control information to the RAN/core network via the API Wrap. In addition, in a case where the AF includes no information of the other imaging apparatuses 50 in the same cell, the AF may inquire of the 5GC/RAN.

Then, on the basis of the control information, the RAN/core network configures the priority control related to the radio communication of the imaging apparatus 50 (step S204). When the configuration is completed, the RAN/core network notifies the AF of the completion (step S205). Further, the AF transmits a completion notification to the information processing apparatus 10 (step S206).

Then, the information processing apparatus 10 transmits a tally signal via the RAN/core network to the imaging apparatus 50 (CAM B in the example of Fig. 27) having a high priority (step S207, step S208). For example, the information processing apparatus 10 may transmit, to the CAM B, a tally signal indicating that the tally lamp is to be illuminated in red. The information processing apparatus 10 may transmit, to the other imaging apparatus 50, a tally signal for turning off the tally lamp or a tally signal for changing the color of the tally lamp. The imaging apparatus 50 turns on/off the tally lamp according to the tally signal. Alternatively, the imaging apparatus 50 changes the color of the tally lamp according to the tally signal.

The information processing apparatus 10 may transmit the tally information in step S202 after transmitting the tally signal in step S207. That is, the processing in step S202 to step S206 may be executed after the processing in step S207 to step S208. The information processing apparatus 10 may transmit the tally signal in step S207 and the initial information in step S202 at the same time.

When the transmission of the tally signal is completed, the information processing apparatus 10 performs processing of switching the camera related to the predetermined processing (step S209). For example, the information processing apparatus 10 controls the broadcasting/distribution facility to switch the video to be on the air (distributed live) from the video captured by the CAM A to the video captured by the CAM B. When the switching is completed, the information processing apparatus 10 notifies the operator of the completion (step S210).

5-2-2. Sequence Example 2

Next, another example of the camera switching process will be described. In Sequence Example 2, a sequence example will be described in which the image capturing system 1 is constructed according to the O-RAN architecture.

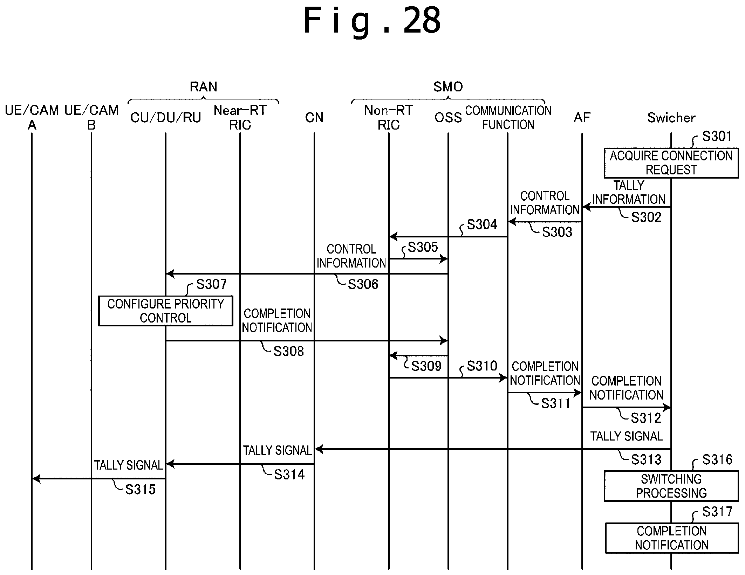

Fig. 28 is a sequence diagram illustrating another example of the camera switching processing. In the example of Fig. 28, the image capturing system 1 includes the Service Management and Orchestration (SMO). The SMO includes the Near-RT RIC, an Operation Support System (OSS), and a communication function. The Non-RT RIC may be referred to as a Non-Realtime RIC.

In the example of Fig. 28, a Central Unit (CU)/a Distributed Unit (DU)/a Radio Unit (RU) and the Near-RT RIC are arranged as the Radio Access Network (RAN). In the figure, the CU/DU/RU is the base station 30. The CU may be referred to as an O-RAN Central Unit (O-CU). The DU may be referred to as an O-RAN Distributed Unit (O-DU). The RU may be referred to as an O-RU (O-RAN Radio Unit). The Near-RT RIC may be referred to as a Near-Realtime RIC.

In the drawing, UE is the terminal apparatus 40, and CAM is the imaging apparatus 50. In the following description, two terminal apparatuses 40/imaging apparatuses 50 (UE/CAM A and UE/CAM B) are assumed to be located in the same cell. Then, the CAM B is assumed to be designated as a camera related to the predetermined processing at the initial phase of the camera switching processing. Hereinafter, the camera connection processing will be described with reference to Fig. 28.

First, the information processing apparatus 10 (the switcher illustrated in Fig. 28) acquires a camera switching request from the operator (step S301). Then, the information processing apparatus 10 transmits tally information to the AF (step S302). In the example of Fig. 28, the tally information includes control information for designating the CAM A as the imaging apparatus 50 having a high priority and the CAM B as the imaging apparatus 50 having a low priority. Note that the broadcast controller may exist between the switcher and the AF.

The AF then transmits the tally information to the communication function of the SMO. The AF may transmit control information based on the first control information to the communication function of the SMO (step S303). For example, in a case where the core network is a 5GC, the AF may transmit control information indicating that the radio communication of the UE/CAM A is configured with the 5QI having a high priority. The communication function of the SMO transmits the control information to the Non-RT RIC (step S304). In addition, the Non-RT RIC transmits the control information to the OSS (step S305). Further, the OSS transmits the control information to the base stations 30 (CU/DU/RU) (step S306). The OSS may directly transmit the control information to the CU/DU/RU, or may transmit the control information to the CU/DU/RU via the Near-RT RIC.

Then, on the basis of the control information, the base station 30 configures the priority control related to the radio communication of the imaging apparatus 50 (step S307). When the configuration is completed, the base station 30 notifies the OSS of the completion (step S308). The OSS transmits the completion notification to the Non-RT RIC (step S309). In addition, the Non-RT RIC transmits the completion notification to the communication function of the SMO (step S310). Further, the communication function of the SMO transmits the completion notification to the AF (step S311). Upon receiving the completion notification, the AF transmits the completion notification to the information processing apparatus 10 (step S312).

Then, the information processing apparatus 10 transmits a tally signal via the core network and the CU/DU/RU to the imaging apparatus 50 (CAM A in the example of Fig. 28) having a high priority (step S313, step S314, step S315). For example, the information processing apparatus 10 may transmit, to the CAM A, a tally signal indicating that the tally lamp is to be illuminated in red. The information processing apparatus 10 may transmit, to the other imaging apparatus 50, a tally signal for turning off the tally lamp or a tally signal for changing the color of the tally lamp. The imaging apparatus 50 turns on/off the tally lamp according to the tally signal. Alternatively, the imaging apparatus 50 changes the color of the tally lamp according to the tally signal.

Note that the information processing apparatus 10 may transmit the tally information in step S302 after transmitting the tally signal in step S313. That is, the processing in step S302 to step S312 may be executed after the processing in step S313 to step S315. In addition, the information processing apparatus 10 may transmit the tally signal in step S313 and the initial information in step S302 at the same time.

When the transmission of the tally signal is completed, the information processing apparatus 10 performs processing of switching the camera related to the predetermined processing (step S316). For example, the information processing apparatus 10 controls the broadcast/distribution facility to switch the video to be on the air (distributed live) from the video captured by the CAM B to the video captured by the CAM A. When the switching is completed, the information processing apparatus 10 notifies the operator of the completion (step S317).

5-2-3. Sequence Example 3

Next, another example of the camera switching processing will be described. In Sequence Example 3, another sequence example will be described in which the image capturing system 1 is constructed according to the O-RAN architecture.

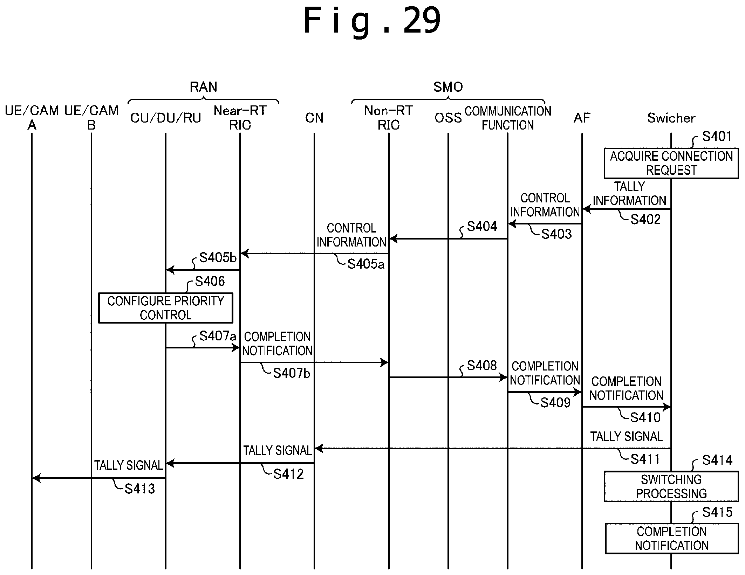

Fig. 29 is a sequence diagram illustrating another example of the camera switching processing. The configuration of the image capturing system 1 is the same as that in Sequence Example 2 in Fig. 28. In Sequence Example 3, as in Sequence Example 2, the CAM A is assumed to be designated as a camera related to a predetermined processing at the initial phase of the camera switching processing. Hereinafter, the camera connection processing will be described with reference to Fig. 29.

First, the information processing apparatus 10 (the switcher illustrated in Fig. 29) acquires a camera switching request from the operator (step S401). Then, the information processing apparatus 10 transmits tally information to the AF (step S402). In the example of Fig. 28, the tally information includes control information for designating the CAM A as the imaging apparatus 50 having a high priority and the CAM B as the imaging apparatus 50 having a low priority.

The AF then transmits the tally information to the communication function of the SMO. The AF may transmit, to the communication function of the SMO, control information based on the first control information (step S403). For example, in a case where the core network is a 5GC, the AF may transmit control information indicating that a 5QI with a high priority is configured for the radio communication of the UE/CAM B. The communication function of the SMO transmits the control information to the Non-RT RIC (step S404).

The Non-RT RIC transmits the control information to the base stations 30 (CU/DU/RU) via the Near-RT RIC (step S405a, step S405b). For example, the Non-RT RIC transmits priority configuration information to the Near-RT RIC over the A1 interface. The Near-RT RIC transmits the priority configuration information to the CU/DU/RU over the E2 interface. Note that the Non-RT RIC may not necessarily need to transmit the control information to the CU/DU/RU via the Near-RT RIC. For example, in a case where the imaging apparatus 50 is statically/quasi-statically configured with the priority, the Non-RT RIC may directly transmit the control information to the

CU/DU/RU.

Next, on the basis of the control information, the base station 30 configures the priority control related to the radio communication of the imaging apparatus 50 (step S406). When the configuration is completed, the base station 30 notifies the Non-RT RIC of the completion via the Near-RT RIC (step S407a, step S407b). The Non-RT RIC transmits the completion notification to the communication function of the SMO (step S408). The communication function of the SMO transmits the completion notification to the AF (step S409). Upon receiving the completion notification, the AF transmits the completion notification to the information processing apparatus 10 (step S410).

Now, the information processing apparatus 10 transmits a tally signal via the core network and the CU/DU/RU to the imaging apparatus 50 (CAM A in the example of Fig. 29) having a high priority (step S411, step S412, step S413). The imaging apparatus 50 turns on/off the tally lamp according to the tally signal. Alternatively, the imaging apparatus 50 changes the color of the tally lamp according to the tally signal.

Note that the information processing apparatus 10 may transmit the tally information in step S402 after transmitting the tally signal in step S411. That is, the processing in step S402 to step S410 may be executed after the processing in step S411 to step S413. The information processing apparatus 10 may transmit the tally signal in step S411 and the initial information in step S402 at the same time.

When the transmission of the tally signal is completed, the information processing apparatus 10 performs processing of switching the camera related to the predetermined processing (step S414). When the switching is completed, the information processing apparatus 10 notifies the operator of the completion (step S415).

6. Modifications

The above-described embodiment is merely an example, and various modifications and applications are possible.

For example, in the above-described embodiments, the first control information is the tally signal or the control information included in the tally signal. However, the first control information is not limited to this. For example, the first control information may be a control signal generated by a dedicated switch for priority control of control equipment such as the switcher, or control information included in the control signal. Besides, the first control information may be a control signal for switching a video to be prioritized or control information included in the control signal. The information processing apparatus 10 may include the second control information in the control signal.

In addition, in the above-described embodiment, the information processing apparatus 10 configures the priority (transmits the second control information) on a per cell basis. However, the configuration of the priority is not limited to the cell unit. For example, the information processing apparatus 10 may configure the priority (transmit the second control information) in units of logical networks such as slices. The logical network is not limited to a slice, and may be, for example, a 4G logical network (for example, a logical network configured using Dedicated Core networks (DECORE)). The information processing apparatus 10 may configure the priority (transmit the second control information) for each Radio Access Technology (RAT) such as 4G (LTE), 5G (NR), or wireless LAN (WiFi). The information processing apparatus 10 may configure the priority (transmit the second control information) for the entire wireless network (for example, a cellular network).

Note that the number of imaging apparatuses 50 having a high priority (for example, the imaging apparatus having the first priority) is not limited to one. There may be a plurality of imaging apparatuses 50 having a high priority. When the high priority is given to a predetermined number or more of imaging apparatuses 50, the information processing apparatus 10 or the network apparatus may automatically change the priority of the imaging apparatus 50 to a lower priority in order from the imaging apparatus 50 that has changed to a higher priority earliest.

In the above-described embodiment, the camera (imaging apparatus 50) related to the predetermined processing is, for example, a camera (imaging apparatus 50) that captures a video to be broadcast/distributed. However, the camera related to the predetermined processing is not limited to a camera that captures a video to be broadcast/distributed. For example, the camera related to the predetermined processing may be a camera that captures a next video or a camera that captures an editing video. The camera related to the predetermined processing may be a camera that captures a wiping video (for example, a sub video superimposed on a main video).

A dedicated computer system or a general-purpose computer system may be used to implement the control apparatus that controls the information processing apparatus 10, the management apparatus 20, the base station 30, the terminal apparatus 40, and the imaging apparatus 50 according to the present embodiment.

For example, the program for executing the above-described operation is stored in a computer-readable recording medium such as an optical disk, a semiconductor memory, a magnetic tape, or a flexible disk for distribution. Then, for example, the program is installed in a computer, and the above-described processing is executed, thus configuring the control apparatus. At this time, the control apparatus may be an apparatus outside the information processing apparatus 10, the management apparatus 20, the base station 30, the terminal apparatus 40, or the imaging apparatus 50 (for example, a personal computer). In addition, the control apparatus may be an apparatus inside the information processing apparatus 10, the management apparatus 20, the base station 30, or the terminal apparatus 40 (for example, the control section 13, the control section 23, the control section 33, the control section 43, or the control section 53).

The communication program may be stored in a disk apparatus included in a server apparatus on a network such as the Internet to enable downloading to a computer and the like. The above-described functions may be realized by cooperation between an Operating System (OS) and application software. In this case, the portion other than the OS may be stored in a medium for distribution, or the portion other than the OS may be stored in a server apparatus to enable downloading to a computer and the like.

Among the processing operations described in the above-described embodiments, all or some of the processing operations described as being automatically performed may be manually performed, or all or some of the processing operations described as being manually performed may be automatically performed by a known method. In addition, the processing procedures, specific names, and information including various data and parameters described in the above document and drawings can be arbitrarily changed unless otherwise specified. For example, the various types of information illustrated in the drawings are not limited to the illustrated information.

The components of the devices illustrated in the drawings are functionally conceptual and are not necessarily physically configured as illustrated in the drawings. That is, specific forms of distribution and integration of the apparatuses are not limited to those illustrated in the drawings, and all or some of the apparatuses may be configured to be functionally or physically distributed or integrated in any unit according to various loads, usage conditions, and the like.

The above-described embodiments can be combined as appropriate in a region where the contents of processing do not contradict each other. In addition, the order in steps illustrated in the sequence diagrams or flowcharts of the present embodiments can be changed as appropriate.

For example, the present embodiments can each be implemented as any configuration constituting an apparatus or a system, for example, a processor as System Large Scale Integration (LSI) or the like, a module each using a plurality of processors or the like, a unit using a plurality of modules or the like, a set including the unit to which other functions are added, or the like (that is, a configuration of a part of the apparatus).

The system LSI may be referred to as a System on Chip (SOC). In other words, each of the apparatuses described above or below (for example, the information processing apparatus 10, the management apparatus 20, the base station 30, the terminal apparatus 40, and the imaging apparatus 50) may be interpreted as a processor (for example, a CPU) as a system LSI (for example, an SoC) or a module using or constituting the processor. Additionally or alternatively, the present embodiments may be implemented by any configuration constituting an apparatus or a system, for example, a modem chip (baseband chip), a Radio Frequency (RF) unit, or a combination thereof. The RF unit includes at least one of an RF circuit and an RF Front-end. In other words, each of the apparatuses described above or below may be interpreted as a modem chip (baseband chip) or an RF unit, or a combination thereof. Additionally or alternatively, each of the apparatuses described above or below may be interpreted as a module using or constituting a modem chip or an RF unit.

The modem chip performs signal processing related to communication in an apparatus (including the apparatuses described above or below). The modem chip may include at least a function of a Modulator or a Demodulator. The RF unit may include at least one of the functions of an RF transceiver (RF Upconverter, RF Downconverter), a Power amplifier, and a Low noise amplifier. The RF transceiver converts a baseband signal into an RF frequency or vice versa. The power amplifier performs amplification for transmitting a signal from the antenna. The low-noise amplifier amplifies a weak signal received from the antenna. Additionally or alternatively, the RF unit (particularly, the RF Front-end) may include at least one of the power amplifier and the low-noise amplifier described above, an Envelope tracker, a filter, a duplexer, a multiplexer, an antenna switch, and an antenna tuner.

A combination of the modem chip and the RF unit may be referred to as a modem-RF system. At least a part of the modem chip, the RF unit, or a combination thereof may be included in a system LSI (for example, SoC). For example, the system LSI may realize at least a part of MAC layer processing/PHY layer processing performed by at least a part of the modem chip, the RF unit, or the combination thereof. The MAC layer processing or the PHY layer processing here may be at least a part of processing executed by the apparatuses in the embodiments described above or below (for example, the information processing apparatus 10, the management apparatus 20, the base station 30, the terminal apparatus 40, and the imaging apparatus 50).

Note that, in the present embodiments, the system means a set of a plurality of components (devices, modules (parts), and the like), and whether all the components are in the same housing does not matter. For example, the system refers to both a plurality of apparatuses housed in separate housings and connected via a network or the like, and one apparatus in which a plurality of modules are housed in one housing.

For example, the present embodiments can take a configuration of cloud computing in which a plurality of devices perform processing of one function in a shared and cooperated manner via a network.

7. Conclusion

As described above, according to the present embodiment, the information processing apparatus 10 transmits the first control information for designating one or more imaging apparatuses 50 among two or more imaging apparatuses 50 as the imaging apparatus related to the predetermined processing. Then, the information processing apparatus 10 transmits the second control information for preferentially allocating a radio resource to the imaging apparatus 50 related to the designation (or the terminal apparatus 40 connected to the imaging apparatus 50 related to the designation) to the network apparatus (for example, the management apparatus 20, the base station 30, or the AF) that performs processing related to the allocation of the radio resource. The network apparatus performs control for preferentially allocating the radio resource to the imaging apparatus 50 (or the terminal apparatus 40) related to the designation based on the second control information.

Accordingly, the imaging apparatus 50 related to the designation (or the terminal apparatus 40) can stably wirelessly transmit, to the broadcasting/distribution facility (for example, the information processing apparatus 10), captured data related to broadcasting/distribution. As a result, disturbance of a broadcast/distributed video is suppressed.

In addition, in a case where the imaging apparatus 50 that is not designated by the first control information has difficulty in performing a video transmission at predetermined quality using the allocated radio resource, the information processing apparatus 10 notifies the imaging apparatus 50 that is not designated by the first control information of information regarding the data rate at which the video transmission at the predetermined quality can be achieved. The imaging apparatus 50 not designated by the first control information changes the configuration of the data rate based on the information regarding the data rate. For example, the imaging apparatus 50 lowers the data rate to a level at which the video transmission at the predetermined quality can be achieved.

Accordingly, the imaging apparatus 50 that is not designated by the first control information can also stably wirelessly transmit the captured data.

Although the embodiments of the present disclosure have been described above, the technical scope of the present disclosure is not limited to the above-described embodiments, and various modifications can be made without departing from the gist of the present disclosure. Furthermore, the constituent elements of different embodiments and modifications may be appropriately combined.

The effects of the embodiments described in the present specification are merely examples and are not limited, and other effects may be produced.

The present technology may adopt configurations as described below.

(1) An information processing apparatus including:

a first transmission section configured to transmit first control information for designating one or more imaging apparatuses among two or more imaging apparatuses as an imaging apparatus related to predetermined processing; and
a second transmission section configured to transmit, to a network apparatus configured to perform processing related to allocation of a radio resource, second control information for preferentially allocating the radio resource to the imaging apparatus related to the designation or a radio communication terminal connected to the imaging apparatus related to the designation.

(2) The information processing apparatus according to (1), wherein
the second transmission section transmits, to the network apparatus, as the second control information, control information for allocating, in a case where a first imaging apparatus designated by the first control information and a second imaging apparatus not designated by the first control information exist in the same cell, the radio resource to the first imaging apparatus or a first radio communication terminal connected to the first imaging apparatus in preference to the second imaging apparatus or a second radio communication terminal connected to the second imaging apparatus.

(3) The information processing apparatus according to (2), further including:
a notification section configured to notify, in a case where the second imaging apparatus has difficulty in performing video transmission at predetermined quality using the radio resource allocated by the network apparatus, the second imaging apparatus of information regarding a data rate capable of achieving the predetermined quality.

(4) The information processing apparatus according to (2) or (3), further including:

a request section configured to request an imaging apparatus located in a cell adjacent to a cell in which the first imaging apparatus is located to decrease the data rate in a case where the first imaging apparatus has difficulty in performing the video transmission at the predetermined quality using the radio resource allocated by the network apparatus.

(5) The information processing apparatus according to (2), wherein

in a case where the imaging apparatus related to the designation is changed from the first imaging apparatus to the second imaging apparatus in accordance with the first control information, the second transmission section transmits, to the network apparatus, as the second control information, control information for allocating the radio resource to the second imaging apparatus or the second radio communication terminal in preference to the first imaging apparatus or the first radio communication terminal.

(6) The information processing apparatus according to (1), wherein

the first transmission section transmits, as the first control information, control information for designating a first imaging apparatus among the two or more imaging apparatuses as an imaging apparatus having a first priority and control information for designating a second imaging apparatus among the two or more imaging apparatuses as an imaging apparatus having a second priority, and

the second transmission section transmits to the network apparatus, as the second control information, control information for allocating the radio resource to the first imaging apparatus or a first radio communication terminal connected to the first imaging apparatus in preference to the second imaging apparatus or a second radio communication terminal connected to the second imaging apparatus in a case where the first imaging apparatus and the second imaging apparatus exist in the same cell.

(7) The information processing apparatus according to (6), further including:

a notification section configured to notify, in a case where the second imaging apparatus has difficulty in performing video transmission at predetermined quality using the radio resource allocated by the network apparatus, the second imaging apparatus of information regarding a data rate capable of achieving the predetermined quality.

(8) The information processing apparatus according to (6) or (7), further including:

a request section configured to request an imaging apparatus located in a cell adjacent to a cell in which the first imaging apparatus is located to decrease a data rate in a case where the first imaging apparatus has difficulty in performing the video transmission at the predetermined quality using the radio resource allocated by the network apparatus.

(9) The information processing apparatus according to (6), wherein

in a case where the imaging apparatus having the first priority is changed from the first imaging apparatus to the second imaging apparatus in accordance with the first control information, the second transmission section transmits, to the network apparatus, as the second control information, control information for allocating the radio resource to the second imaging apparatus or the second radio communication terminal in preference to the first imaging apparatus or the first radio communication terminal.

(10) The information processing apparatus according to (6), wherein

the second transmission section transmits, to the network apparatus, as the second control information, control information for allocating, in a case where the first imaging apparatus, the second imaging apparatus, and a third imaging apparatus not designated by the first control information exist in the same cell, the radio resource to the first imaging apparatus or the first radio communication terminal and the second imaging apparatus or the second radio communication terminal in preference to the third imaging apparatus or a third radio communication terminal connected to the third imaging apparatus.

(11) The information processing apparatus according to (10), further including:

a notification section configured to notify, in a case where the third imaging apparatus has difficulty in performing video transmission at predetermined quality using the radio resource allocated by the network apparatus, the third imaging apparatus of information regarding a data rate capable of achieving the predetermined quality.

(12) The information processing apparatus according to (10) or (11), further including:

a request section configured to request an imaging apparatus located in a cell adjacent to a cell in which the first imaging apparatus and the second imaging apparatus are located to lower the data rate in a case where the first imaging apparatus and the second imaging apparatus have difficulty in performing video transmission at predetermined quality using the radio resource allocated by the network apparatus.

(13) The information processing apparatus according to any one of (1) to (12), wherein

the imaging apparatus related to the predetermined processing is an imaging apparatus configured to capture a video to be broadcast or distributed.

(14) The information processing apparatus according to (13), wherein

the information processing apparatus is a switcher configured to switch, based on an instruction of an operator, an imaging apparatus configured to capture a video to be broadcast or distributed.

(15) The information processing apparatus according to any one of (1) to (14), wherein

the network apparatus is an apparatus constituting a 5G Radio Access Network (RAN) or an apparatus constituting a 5G core network.

(16) The information processing apparatus according to any one of (1) to (14), wherein

the network apparatus is an apparatus constituting a 4G Radio Access Network (RAN) or an apparatus constituting a 4G core network.

(17) The information processing apparatus according to any one of (1) to (16), wherein

the first control information is a tally signal, and
the second control information is control information associated with the tally signal.

(18) An imaging apparatus including:

a reception section configured to receive, from an information processing apparatus, first control information for designating one or more imaging apparatuses among two or more imaging apparatuses as an imaging apparatus related to predetermined processing; and
a transmission section configured to transmit, in a case of receiving the first control information, captured data by using a radio resource preferentially allocated by a network apparatus configured to perform processing related to allocation of the radio resource, to the imaging apparatus related to the designation or a radio communication terminal connected to the imaging apparatus related to the designation, based on second control information from the information processing apparatus.

(19) An information processing method including:

transmitting first control information for designating one or more imaging apparatuses among two or more imaging apparatuses as an imaging apparatus related to predetermined processing; and
transmitting, to a network apparatus configured to perform processing related to allocation of a radio resource, second control information for preferentially allocating the radio resource to the imaging apparatus related to the designation or a radio communication terminal connected to the imaging apparatus related to the designation.

(20) A communication method including:

receiving, from an information processing apparatus, first control information for designating one or more imaging apparatuses among two or more imaging apparatuses as an imaging apparatus related to predetermined processing; and
transmitting, in a case of receiving the first control information, captured data by using a radio resource preferentially allocated by a network apparatus configured to perform processing related to allocation of the radio resource, to the imaging apparatus related to the designation or a radio communication terminal connected to the imaging apparatus related to the designation, based on second control information from the information processing apparatus.

Reference Signs List

| | |
|---|---|
| 1 | Image capturing system |
| 10, $10_1$, $10_2$ | Information processing apparatus |
| 20, $20_1$, $20_2$ | Management apparatus |
| 30, $30_1$, $30_2$, $30_3$ | Base station |
| 40, $40_1$, $40_2$, $40_3$, $40_x$ | Terminal apparatus |
| 50, $50_1$, $50_2$, $50_3$, $50_x$ | Imaging apparatus |
| 11, 21 | Communication section |
| 31, 41, 51 | Radio communication section |
| 12, 22, 32, 42, 52 | Storage section |
| 13, 23, 33, 43, 53 | Control section |
| 54 | Network communication section |
| 55 | Imaging section |

| 311, 411 | Transmission processing section |
|---|---|
| 312, 412 | Reception processing section |
| 313, 413 | Antenna |
| 131 First | transmission section |
| 132 Second | transmission section |
| 133 | Notification section |
| 134 | Request section |
| 431, 531 | Reception section |
| 432, 532 | Transmission section |
| 630 | RAN/AN |
| 620 | User plane function group |
| 621 | UPF |
| 622 | DN |
| 640 | Control plane function group |
| 641 | AMF |
| 642 | SMF |
| 643 | AUSF |
| 644 | NSSF |
| 645 | NEF |
| 646 | NRF |
| 647 | PCF |
| 648 | UDM |
| 649 | AF |
| CN | Core network |

**Claims**

1. An information processing apparatus, comprising:

   a first transmission section configured to transmit first control information for designating one or more imaging apparatuses among two or more imaging apparatuses as an imaging apparatus related to predetermined processing; and
   a second transmission section configured to transmit, to a network apparatus configured to perform processing related to allocation of a radio resource, second control information for preferentially allocating the radio resource to the imaging apparatus related to the designation or a radio communication terminal connected to the imaging apparatus related to the designation.

2. The information processing apparatus according to claim 1, wherein
   the second transmission section transmits, to the network apparatus, as the second control information, control information for allocating, in a case where a first imaging apparatus designated by the first control information and a second imaging apparatus not designated by the first control information exist in the same cell, the radio resource to the first imaging apparatus or a first radio communication terminal connected to the first imaging apparatus in preference to the second imaging apparatus or a second radio communication terminal connected to the second imaging apparatus.

3. The information processing apparatus according to claim 2, further comprising:
   a notification section configured to notify, in a case where the second imaging apparatus has difficulty in performing video transmission at predetermined quality using the radio resource allocated by the network apparatus, the second imaging apparatus of information regarding a data rate capable of achieving the predetermined quality.

4. The information processing apparatus according to claim 2, further comprising:
   a request section configured to request an imaging apparatus located in a cell adjacent to a cell in which the first imaging apparatus is located to decrease a data rate in a case where the first imaging apparatus has difficulty in performing video transmission at predetermined quality using the radio resource allocated by the network apparatus.

5. The information processing apparatus according to claim 2, wherein
   in a case where the imaging apparatus related to the designation is changed from the first imaging apparatus to the second imaging apparatus in accordance with the first control information, the second transmission section transmits,

to the network apparatus, as the second control information, control information for allocating the radio resource to the second imaging apparatus or the second radio communication terminal in preference to the first imaging apparatus or the first radio communication terminal.

6. The information processing apparatus according to claim 1, wherein

the first transmission section transmits, as the first control information, control information for designating a first imaging apparatus among the two or more imaging apparatuses as an imaging apparatus having a first priority and control information for designating a second imaging apparatus among the two or more imaging apparatuses as an imaging apparatus having a second priority, and
the second transmission section transmits to the network apparatus, as the second control information, control information for allocating the radio resource to the first imaging apparatus or a first radio communication terminal connected to the first imaging apparatus in preference to the second imaging apparatus or a second radio communication terminal connected to the second imaging apparatus in a case where the first imaging apparatus and the second imaging apparatus exist in the same cell.

7. The information processing apparatus according to claim 6, further comprising:
a notification section configured to notify, in a case where the second imaging apparatus has difficulty in performing video transmission at predetermined quality using the radio resource allocated by the network apparatus, the second imaging apparatus of information regarding a data rate capable of achieving the predetermined quality.

8. The information processing apparatus according to claim 6, further comprising:
a request section configured to request an imaging apparatus located in a cell adjacent to a cell in which the first imaging apparatus is located to decrease a data rate in a case where the first imaging apparatus has difficulty in performing video transmission at predetermined quality using the radio resource allocated by the network apparatus.

9. The information processing apparatus according to claim 6, wherein
in a case where the imaging apparatus having the first priority is changed from the first imaging apparatus to the second imaging apparatus in accordance with the first control information, the second transmission section transmits, to the network apparatus, as the second control information, control information for allocating the radio resource to the second imaging apparatus or the second radio communication terminal in preference to the first imaging apparatus or the first radio communication terminal.

10. The information processing apparatus according to claim 6, wherein
the second transmission section transmits, to the network apparatus, as the second control information, control information for allocating, in a case where the first imaging apparatus, the second imaging apparatus, and a third imaging apparatus not designated by the first control information exist in the same cell, the radio resource to the first imaging apparatus or the first radio communication terminal and the second imaging apparatus or the second radio communication terminal in preference to the third imaging apparatus or a third radio communication terminal connected to the third imaging apparatus.

11. The information processing apparatus according to claim 10, further comprising:
a notification section configured to notify, in a case where the third imaging apparatus has difficulty in performing video transmission at predetermined quality using the radio resource allocated by the network apparatus, the third imaging apparatus of information regarding a data rate capable of achieving the predetermined quality.

12. The information processing apparatus according to claim 10, further comprising:
a request section configured to request an imaging apparatus located in a cell adjacent to a cell in which the first imaging apparatus and the second imaging apparatus are located to lower the data rate in a case where the first imaging apparatus and the second imaging apparatus have difficulty in performing video transmission at predetermined quality using the radio resource allocated by the network apparatus.

13. The information processing apparatus according to claim 1, wherein
the imaging apparatus related to the predetermined processing is an imaging apparatus configured to capture a video to be broadcast or distributed.

14. The information processing apparatus according to claim 13, wherein
the information processing apparatus is a switcher configured to switch, based on an instruction of an operator, an imaging apparatus configured to capture a video to be broadcast or distributed.

15. The information processing apparatus according to claim 1, wherein
the network apparatus is an apparatus constituting a 5G Radio Access Network (RAN) or an apparatus constituting a 5G core network.

16. The information processing apparatus according to claim 1, wherein
the network apparatus is an apparatus constituting a 4G Radio Access Network (RAN) or an apparatus constituting a 4G core network.

17. The information processing apparatus according to claim 1, wherein

the first control information is a tally signal, and
the second control information is control information associated with the tally signal.

18. An imaging apparatus comprising:

a reception section configured to receive, from an information processing apparatus, first control information for designating one or more imaging apparatuses among two or more imaging apparatuses as an imaging apparatus related to predetermined processing; and
a transmission section configured to transmit, in a case of receiving the first control information, captured data by using a radio resource preferentially allocated by a network apparatus configured to perform processing related to allocation of the radio resource, to the imaging apparatus related to the designation or a radio communication terminal connected to the imaging apparatus related to the designation, based on second control information from the information processing apparatus.

19. An information processing method comprising:

transmitting first control information for designating one or more imaging apparatuses among two or more imaging apparatuses as an imaging apparatus related to predetermined processing; and
transmitting, to a network apparatus configured to perform processing related to allocation of a radio resource, second control information for preferentially allocating the radio resource to the imaging apparatus related to the designation or a radio communication terminal connected to the imaging apparatus related to the designation.

20. A communication method comprising:

receiving, from an information processing apparatus, first control information for designating one or more imaging apparatuses among two or more imaging apparatuses as an imaging apparatus related to predetermined processing; and
transmitting, in a case of receiving the first control information, captured data by using a radio resource preferentially allocated by a network apparatus configured to perform processing related to allocation of the radio resource, to the imaging apparatus related to the designation or a radio communication terminal connected to the imaging apparatus related to the designation, based on second control information from the information processing apparatus.

# Fig.1

RADIO RESOURCES FOR ENTIRE NETWORK

RADIO RESOURCE USED BY UE #1

RADIO RESOURCE USED BY UE #2

#2

#1

#1

#2

BS

UE#1

UE#2

CAMERA

MAIN BROADCASTING CAMERA

RADIO QUALITY: GOOD

# Fig. 2

RADIO RESOURCES FOR ENTIRE NETWORK

SHORTAGE OF RADIO RESOURCES OCCURS

QUALITY OF #2 DETERIORATES

RADIO RESOURCE USED BY UE #1

RADIO RESOURCE USED BY UE #2

#2

#1

BS

UE#1

MAIN BROADCASTING CAMERA

QUALITY DETERIORATES

UE#2

CAMERA

RADIO QUALITY: GOOD

RADIO QUALITY: POOR

EP 4 773 708 A1

# Fig.3

RADIO RESOURCES FOR ENTIRE NETWORK

IN REALITY, RESOURCES FOR EACH OF UE #1 AND #2 ARE IN SHORTAGE

QUALITY OF #2 DETERIORATES

RADIO RESOURCE USED BY UE #1

RADIO RESOURCE USED BY UE #2

BS

UE#1

QUALITY DETERIORATES

UE#2

MAIN BROADCASTING CAMERA

CAMERA

AFFECT MAIN BROADCASTING CAMERA

EP 4 773 708 A1

Fig.4

# Fig.5

EP 4 773 708 A1

# Fig.6

# Fig.7

```
                                                          ⌐10
┌──────────────────────────────────────────────────────────────┐
│                              INFORMATION PROCESSING APPARATUS  │
│                                                                │
│      ⌐11                    ⌐13                    ⌐12          │
│  ┌──────────┐  ┌──────────────────────┐  ┌──────────────────┐  │
│  │          │  │   CONTROL SECTION     │  │                  │  │
│  │          │  │                       │  │                  │  │
│  │          │  │ ┌──────────────┐ 131  │  │                  │  │
│  │          │  │ │FIRST TRANSMISSION│   │  │                  │  │
│  │          │  │ │   SECTION     │      │  │                  │  │
│  │          │  │ └──────────────┘      │  │                  │  │
│  │          │  │ ┌──────────────┐ 132  │  │                  │  │
│  │          │  │ │SECOND TRANSMISSION│  │  │                  │  │
│  │COMMUNICATION│ │   SECTION     │      │  │                  │  │
│  │ SECTION  │◄─►│ └──────────────┘      │◄─►│ STORAGE SECTION │  │
│  │          │  │ ┌──────────────┐ 133  │  │                  │  │
│  │          │  │ │NOTIFICATION SECTION│ │  │                  │  │
│  │          │  │ └──────────────┘      │  │                  │  │
│  │          │  │ ┌──────────────┐ 134  │  │                  │  │
│  │          │  │ │REQUEST SECTION│      │  │                  │  │
│  │          │  │ └──────────────┘      │  │                  │  │
│  │          │  │        ⋮              │  │                  │  │
│  └──────────┘  └──────────────────────┘  └──────────────────┘  │
└──────────────────────────────────────────────────────────────┘
```

# Fig.8

# Fig.9

BASE STATION 30

RADIO COMMUNICATION SECTION 31

TRANSMISSION PROCESSING SECTION 311

RECEPTION PROCESSING SECTION 312

313

STORAGE SECTION 32

CONTROL SECTION 33

# Fig.10

TERMINAL APPARATUS — 40

RADIO COMMUNICATION SECTION — 41

TRANSMISSION PROCESSING SECTION — 411

RECEPTION PROCESSING SECTION — 412

413

STORAGE SECTION — 42

CONTROL SECTION — 43

RECEPTION SECTION — 431

TRANSMISSION SECTION — 432

# Fig.11

IMAGING APPARATUS — 50

RADIO COMMUNICATION SECTION — 51

STORAGE SECTION — 52

NETWORK COMMUNICATION SECTION — 54

IMAGING SECTION — 55

CONTROL SECTION — 53

RECEPTION SECTION — 531

TRANSMISSION SECTION — 532

# Fig.12

# Fig.13

Service Management and Orchestration Framework

Non-Real Time RIC

O2　A1　O1　Open Fronthaul M-plane

Near-Real Time RIC

O-RAN Network Functions

O-Cloud Notification

O-Cloud

O-RU

NG

NG-Core

AF

# Fig. 14

SMO

Non-Real Time RIC

Orchestrator

AF

COMMON API

RAN

VNF

Cloud(NFVI)

PNF

Transport

VNF

Cloud(NFVI)

PNF

Core NW

VNF

Cloud(NFVI)

PNF

# Fig.15

Wireless camera system

$50_1$  $40_1$

5G Network

AF

NEF

$50_2$  $40_2$

30  20  UPF

Control

Tally signal

Video/Audio

INTEGRATED CONTROL SECTION

PRIORITY CONTROL

PRIORITY CONTROL

Wired camera system

50  CCU

50  CCU

NETWORK SWITCH

Control

Video/Audio

DECODER

CONVERSION SECTION

SWITCHER

10

Master Monitor

EP 4 773 708 A1

# Fig.16

EP 4 773 708 A1

Fig.17

EP 4 773 708 A1

# Fig.18

EP 4 773 708 A1

# Fig. 19

# Fig.20

# F i g . 2 1

|  | CAMERA ID | IMSI |
|---|---|---|
| IMAGING APPARATUS $50_1$ | C1 | AAAA |
| IMAGING APPARATUS $50_2$ | C2 | BBBB |
| IMAGING APPARATUS $50_3$ | C3 | CCCC |
| ... | ... | ... |

# Fig.22

RADIO RESOURCES FOR ENTIRE NETWORK

IN SHORTAGE

QUALITY OF $40_2$ DETERIORATES

RADIO RESOURCE #1

RADIO RESOURCE #2

PRIORITIZED

$30_1$

$40_1$

$50_1$

QUALITY DETERIORATES

$40_2$

$50_2$

PRIORITY CONFIGURATION

RADIO QUALITY: GOOD

RADIO QUALITY: POOR

# Fig.23

RADIO RESOURCES FOR ENTIRE NETWORK

PRIORITIZED

QUALITY OF $40_2$ DETERIORATES

RADIO RESOURCE #1

RADIO RESOURCE #2

IN SHORTAGE

QUALITY DETERIORATES

PRIORITY CONFIGURATION

RADIO QUALITY: GOOD

RADIO QUALITY: POOR

EP 4 773 708 A1

# Fig.24

# Fig.25

# Fig. 26

EP 4 773 708 A1

F i g . 2 7

Fig.28

# Fig.29

## INTERNATIONAL SEARCH REPORT

| International application No. |
| --- |
| **PCT/JP2024/028960** |

| A. | CLASSIFICATION OF SUBJECT MATTER |
| --- | --- |

*H04W 72/563*(2023.01)i; *H04W 28/16*(2009.01)i
FI:   H04W72/563; H04W28/16

According to International Patent Classification (IPC) or to both national classification and IPC

| B. | FIELDS SEARCHED |
| --- | --- |

Minimum documentation searched (classification system followed by classification symbols)

H04W4/00-H04W99/00 H04B7/24-H04B7/26

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

3GPP TSG RAN WG1-4, SA WG1-4, CT WG1, 4

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | JP 2010-93665 A (HITACHI, LTD.) 22 April 2010 (2010-04-22) paragraphs [0032]-[0046] | 1-20 |
| A | WO 2020/090285 A1 (NEC CORPORATION) 07 May 2020 (2020-05-07) paragraphs [0074]-[0081] | 1-20 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **11 September 2024** | **24 September 2024** |

| Name and mailing address of the ISA/JP | Authorized officer |
| --- | --- |
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (July 2022)

## INTERNATIONAL SEARCH REPORT
### Information on patent family members

| International application No. |
| --- |
| **PCT/JP2024/028960** |

| Patent document cited in search report | | | Publication date (day/month/year) | Patent family member(s) | Publication date (day/month/year) |
| --- | --- | --- | --- | --- | --- |
| JP | 2010-93665 | A | 22 April 2010 | (Family: none) | |
| WO | 2020/090285 | A1 | 07 May 2020 | US 2021/0409650 A1 paragraphs [0098]-[0105] JP 2022-191249 A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2021193189 A